# EUROPEAN PATENT SPECIFICATION

(11) **EP 4 488 226 B1**
(45) Date of publication and mention of the grant of the patent: **01.10.2025**
(21) Application number: 23213258.9
(22) Date of filing: 30.11.2023
(51) Int. Cl.: C01B 25/45, H01M 4/58, H01M 10/05

(54) **METHOD FOR PREPARING LITHIUM IRON PHOSPHATE FROM FERRIC HYDROXYPHOSPHATE, AND USE THEREOF**
VERFAHREN ZUR HERSTELLUNG VON LITHIUMEISENPHOSPHAT AUS EISENHYDROXYPHOSPHAT UND VERWENDUNG DAVON
PROCÉDÉ DE PRÉPARATION DE PHOSPHATE DE FER ET DE LITHIUM À PARTIR D'HYDROXYPHOSPHATE FERRIQUE ET SON UTILISATION

(30) Priority: 05.07.2023 CN 202310823764; 05.07.2023 CN 202310821159; 05.07.2023 CN 202310824556; 05.07.2023 CN 202310823771; 05.07.2023 CN 202310824566
(43) Date of publication of application: 08.01.2025
(73) Proprietor: HUBEI RT ADVANCED MATERIALS GROUP COMPANY LIMITED, Daye City Huangshi, Hubei 435100 (CN)
(72) Inventor: Sun, Jie, Huangshi, Hubei, 435100 (CN); Yang, Ji, Huangshi, Hubei, 435100 (CN); Wei, Yihua, Huangshi, Hubei, 435100 (CN); He, Zhonglin, Huangshi, Hubei, 435100 (CN); He, Jianhao, Huangshi, Hubei, 435100 (CN); Xu, Zhongzhu, Huangshi, Hubei, 435100 (CN); Mei, Jing, Huangshi, Hubei, 435100 (CN); Cheng, Guangchun, Huangshi, Hubei, 435100 (CN); Lin, Shuo, Huangshi, Hubei, 435100 (CN); Xu, Cheng, Huangshi, Hubei, 435100 (CN); Lin, Pingjun, Huangshi, Hubei, 435100 (CN); Yu, Menghua, Huangshi, Hubei, 435100 (CN); Wang, Bin, Huangshi, Hubei, 435100 (CN); Wang, Xiaoting, Huangshi, Hubei, 435100 (CN); Liu, Chao, Huangshi, Hubei, 435100 (CN); Yao, Yuan, Huangshi, Hubei, 435100 (CN)
(74) Representative: Cleanthous, Marinos

(56) References cited:
- CN-A- 113 772 650
- CN-A- 116 216 675
- US-A1- 2023 080 632

## Description

### TECHNICAL FIELD

The present disclosure relates to the technical field of methods for preparing positive electrode materials for lithium-ion batteries, and in particular to a method for preparing lithium iron phosphate from ferric hydroxyphosphate and use thereof.

### BACKGROUND

A positive electrode material of lithium iron phosphate is currently the fastest-developed positive electrode material for a lithium battery in China. It has a wide range of raw materials and a low price. It is widely applied in automobiles, electric tools, energy storage devices, emergency power supply devices, mobile power supplies and the like in the domestic battery industry. New energy electric vehicles are the main application field of it, and the share of lithium iron phosphate accounts for more than 45% of the positive electrode material for the lithium battery. Compared with other positive electrode materials, lithium iron phosphate has the advantages of safety, environmental protection, a low cost, a long cycling life, good high-temperature performance and the like, and thus is one of the most potential positive electrode materials for lithium-ion batteries. Currently, the methods for preparing lithium iron phosphate mainly include a solid phase method, a carbon-thermal reduction method, a sol-gel template method and the like.

For example, CN105024073A discloses ferric hydroxyphosphate as a positive electrode material for a lithium-ion battery and a preparation method thereof. The positive electrode material for a lithium-ion battery has a molecular formula of Fe_{2.95}(PO₄)₂(OH)₂, and the preparation method thereof is adding water into a H₃PO₄ solution and FeCl₃ solid powder and mixing evenly, adding methyltriethylammonium chloride to adjust the pH to 2.0-3.5, controlling the temperature at 150-200°C for a hydrothermal synthesis reaction for 30 h to obtain a reaction solution, and subjecting the reaction solution to centrifugal separation, washing and drying to obtain Fe_{2.95}(PO₄)₂(OH)₂.

In the journal "Study on Performance of LiFePO₄ Prepared from Fe₅(PO₄)₄(OH)₃ as Cathode Material of Lithium Ion Battery", phosphorus chemical by-products phosphorus iron waste residues, phosphoric acid and hydrogen peroxide are used as raw materials to synthesize ferric hydroxyphosphate, and in turn to prepare lithium iron phosphate.

However, the aforementioned method requires a high reaction temperature, a long reaction time, harsh reaction conditions, equipment with high production requirements, and low generation efficiency, which does not meet the requirement of reducing the cost of lithium iron phosphate in the current market. Moreover, the cost of raw materials in the aforementioned method is high, and thereafter there are many impurities in the finished product that are difficult to remove, which will subsequently affect the product performance of ferric hydroxyphosphate and also the product performance of lithium iron phosphate.

D1 (CN 113772650A) discloses a preparation method of lithium iron phosphate and an application thereof. The preparation method comprises the following steps: mixing a ferrous sulfate solution and a phosphate solution, carrying out a synthetic reaction, aging the solution after the synthetic reaction, carrying out solid-liquid separation on the aged solution, washing a filter cake, drying, calcining, crushing, screening, and removing iron to obtain a mixture of anhydrous iron phosphate and ferric oxide; sequentially adding the mixture, Li3PO4 and H3PO4 into a glucose solution to obtain mixed slurry, grinding the mixed slurry to obtain nanoscale mixed slurry, and drying the nanoscale mixed slurry to obtain a mixed powder material; and roasting the mixed powder material at the temperature of 700-800 DEG C in a heat preservation manner, and crushing to obtain the lithium iron phosphate. According to the method, one-step synthesis of anhydrous iron phosphate in an inorganic system is realized, the obtained anhydrous iron phosphate is good in dispersity and uniform in particle size distribution, and back-end lithium iron phosphate process control and performance parameter optimization are facilitated.

D2 (US 2023080632A1) discloses a carbon-coated lithium iron phosphate material from ferrous phosphate. The method includes: mixing self-made ferrous phosphate with a carbon source, and sintering at a low temperature under nitrogen to remove a part of crystal water to obtain carbon-coated ferrous phosphate with a small amount of crystal water; evenly mixing ferrous phosphate with a lithium source, a phosphorus source and multiple carbon sources, and adjusting until a proper iron-to-phosphorus ratio is 0.960-0.975 and a carbon content is 1.5%-1.8%; subsequently drying slurry to obtain material powder; and sintering the material powder through a two-stage temperature rising curve, naturally cooling and then pulverizing to obtain the carbon-coated lithium iron phosphate material. The nano lithium iron phosphate material prepared by the method has high compaction, high capacity and long cycle performance.

D3 (116216675A) discloses a preparation method and application of a lithium iron phosphate precursor. The preparation method comprises the following steps: S1, mixing and reacting an iron source solution F1, a mixed solution L1 of a phosphorus source and hydrogen peroxide and ammonia water, and slurrying to obtain iron phosphate slurry J1; s2, mixing the iron phosphate slurry J1 with inorganic acid; in the step S1, the molar ratio of iron in the iron source solution F1 to phosphorus in the mixed solution L1 is (0.6-1.4): 1; in the step S1, the molar ratio of hydrogen peroxide to iron in the iron source solution F1 is (0.55-0.7): 1. According to the preparation method of the lithium iron phosphate precursor, the compactness of lithium iron phosphate can be remarkably improved, and the lithium iron phosphate precursor can be further used for preparing high-compaction lithium iron phosphate.

### SUMMARY

In view of the above, the present disclosure is intended to solve at least one of the technical problems existed in the prior art. To this end, the present disclosure proposes a method for preparing lithium iron phosphate from ferric hydroxyphosphate and use thereof. In the present method, ferrous sulfate is used as a material, and added with hydrogen peroxide, phosphoric acid, ammonium dihydrogen phosphate and ammonia water to synthesize ferric hydroxyphosphate, so as to prepare lithium iron phosphate with high compaction density and high capacity. Moreover, the method has high production efficiency and low production cost, and is suitable for application in large-scale industrial production.

For this reason, in a first aspect, a first embodiment of the present disclosure provides a method for preparing lithium iron phosphate from ferric hydroxyphosphate, including: adding ferrous sulfate, a by-product of titanium dioxide, into a phosphorus source and a precipitant for purification according to a mass ratio, the ferrous sulfate:the phosphorus source:the precipitant = 1:[0.001-0.005]:[0.005-0.007], so as to obtain a ferrous sulfate solution after purification through press filtration; wherein the purification is conducted at a reaction temperature of 40°C and a reaction pH value of 2.2-2.5 for a reaction time of 1 h, the phosphorus source is one or more of phosphoric acid, monoammonium phosphate, diammonium phosphate, and sodium phosphate, and the precipitant is one or more of sodium hydroxide, potassium hydroxide, lithium hydroxide and ammonia water; adding phosphoric acid into the ferrous sulfate solution to reduce a pH value of the ferrous sulfate solution; wherein an addition amount of the phosphoric acid is according to a molar ratio of n(Fe):n(phosphoric acid) = 1:0.15; adding hydrogen peroxide, phosphoric acid, an ammonium dihydrogen phosphate solution and ammonia water into the ferrous sulfate solution, then reacting to form a mixed slurry, holding the mixed slurry at a temperature, and then washing with water and subjecting to press filtration for several times to form ferric hydroxyphosphate precursors with different iron-phosphorus ratios including a ferric hydroxyphosphate precursor with a higher iron-phosphorus ratio and a ferric hydroxyphosphate precursor with a lower iron-phosphorus ratio; wherein the ferric hydroxyphosphate precursor with the higher iron-phosphorus ratio is obtained by controlling an iron-phosphorus feeding ratio in the mixed slurry to satisfy an iron-phosphorus molar ratio of Fe/P = 1.475-1.490, the ferric hydroxyphosphate precursor with the lower iron-phosphorus ratio is obtained by controlling the iron-phosphorus feeding ratio in the mixed slurry to satisfy the iron-phosphorus molar ratio of Fe/P = 1.460-1.475; subjecting the first ferric hydroxyphosphate precursors to flash drying in a flash drier, and sintering to obtain second ferric hydroxyphosphate precursors with different iron-phosphorus ratios and different specific surface areas; pulverizing the sintered material with a mechanical mill to controlled particle sizes of D10 ≥ 1.0 µm, D50: 6-15 µm, and D90 ≤ 60 µm, and mixing with a ribbon mixer to obtain ferric hydroxyphosphate with different iron-phosphorus ratios and different specific surface areas; mixing the ferric hydroxyphosphate with a high iron-phosphorus ratio with the ferric hydroxyphosphate with a low iron-phosphorus ratio according to a proportion between 2:8 and 8:2, then proportioning with a lithium source and an iron source according to a molar ratio of Li:Fe:P = [1.03-1.04]:1:[1.03-1.04], and adding a certain amount of a carbon source and an additive to form a mixed material; the addition amount of the carbon source is on the basis that a carbon content in a final product is between 1.2%-1.6%, the additive is selected from one or more of titanium dioxide, ammonium metavanadate and niobium pentoxide and is controlled at a doping amount between 300-3,000 ppm; subjecting the aforementioned mixed material to sanding to obtain a nano-sized sanded slurry; and spray-drying the nano-sized sanded slurry to obtain a sprayed material; putting the aforementioned sprayed material in a box furnace for sintering to obtain a sintered material, and pulverizing the sintered material through a jet mill to obtain a pulverized material with particle sizes of D10 > 0.35 µm, D50 = 0.8-1.8 µm, D90 < 10 µm, and D100 < 30 µm; and sieving, blending, packaging the aforementioned pulverized material to obtain a finished product of lithium iron phosphate.

Preferably, in the step S3, the number of washing with water is at least several, the first time of washing with water mainly washes away impurities magnesium, manganese and sulfur elements, 1:1 diluted ammonia water is added during the last time of washing with water to adjust a pH value to 6.5-7.0, so as to wash away a SO₄²⁻ ion. The concentration of the hydrogen peroxide is 30%-60%, and the temperature holding time for the mixed slurry at room temperature is 3 h.

Preferably, the step S3 includes: adding excess hydrogen peroxide into the ferrous sulfate solution to continue oxidation for a certain period of time; dissolving ammonium dihydrogen phosphate powder with water to formulate a ammonium dihydrogen phosphate solution with a concentration of 30% at a dissolution temperature of 30-40°C, and then adding a phosphoric acid solution and ammonia water into the ammonium dihydrogen phosphate solution and mix evenly under stirring to form a mixed ammonium phosphate solution; and adding the mixed ammonium phosphate solution into the oxidized ferrous sulfate solution, adjusting a pH value of the solution to 3.00 ± 0.02, holding at room temperature for a period of time to form a mixed slurry, and then washing with water and subjecting to press filtration for several times to form ferric hydroxyphosphate precursors with different iron-phosphorus ratios.

Preferably, in the step S4, the flash drier is controlled at an air inlet temperature of 220 ± 20°C and an air outlet temperature of 110 ± 5°C, the sintering is conducted at an atmosphere of air and a temperature of 535-560°C for a time of 4-5 h; and in the step S5, the particle size is controlled at D10 ≥ 1.0 µm, D50: 6-15 µm, and D90 ≤ 60 µm, and the mixer is controlled at a mixing frequency of 35 ± 2 Hz for a mixing time of 1-2 h.

Preferably, in the step S5, the ferric hydroxyphosphate with the high iron-phosphorus ratio has a high specific surface area that satisfies BET = 15-20 m²/g and the that satisfies Fe/P = 1.460-1.480; and the ferric hydroxyphosphate with the low iron-phosphorus ratio has a lower specific surface area that satisfies BET = 5-10 m²/g and the iron-phosphorus molar ratio that satisfies Fe/P = 1.440-1.460.

Preferably, in the step S6, the lithium source is one or more of lithium phosphate, lithium carbonate, a lithium iron phosphate electrode pole piece material, and a low-carbon finished lithium iron phosphate material, the iron source is one or more of iron phosphate and iron oxide, the carbon source is one or more of sucrose, glucose, citric acid, starch and polyethylene glycol; in the step S7, a sanding particle size in the sanding slurry is controlled to be between 0.45-0.75 µm, and in the spray drying, the air inlet temperature is 200-220°C, the air outlet temperature is 80-110°C, the air blast frequency is 80 Hz, and a spraying particle size in the sprayed material is controlled between D50 = 20-40 µm; and in the step S8, the sintering is conducted in an atmosphere of nitrogen at a sintering temperature of 750-780°C and a heating rate of 3°C/min for a sintering time of 8-12 h, and then natural cooling is conducted to obtain the sintered material, and during the pulverizing process, it is controlled that a gas pressure is between 0.2-0.4 Mpa, a fractionation frequency is 80-200 Hz, and a particle size of the pulverized material satisfies: D10 > 0.35 µm, D50 = 0.7-2.0µm , D90 <10 µm, and D100 < 30 µm.

Preferably, a second embodiment of the present disclosure provides a method for preparing lithium iron phosphate from ferric hydroxyphosphate, including: adding ferrous sulfate, a by-product of titanium dioxide, into a phosphorus source and a precipitant for purification, so as to obtain a ferrous sulfate solution after purification through press filtration; adding an appropriate amount of phosphoric acid into the ferrous sulfate solution to reduce a pH value of the ferrous sulfate solution; sequentially adding hydrogen peroxide, phosphoric acid, an ammonium dihydrogen phosphate solution and ammonia water into the ferrous sulfate solution, then reacting for a period of time to form a mixed slurry, heating and holding the mixed slurry at a temperature for a period of time, and then washing with water and subjecting to press filtration for several times to form ferric hydroxyphosphate precursors with different iron-phosphorus ratios; subjecting the ferric hydroxyphosphate precursors to flash drying in a flash drier, and sintering at high temperature for a certain period of time to obtain finished products of ferric hydroxyphosphate precursor with different iron-phosphorus ratios and different specific surface areas; pulverizing the sintered material with a mechanical mill, and mixing with a ribbon mixer to obtain finished products of ferric hydroxyphosphate with different iron-phosphorus ratios and different specific surface areas; mixing the ferric hydroxyphosphate with the high iron-phosphorus ratio and the high specific surface area with the ferric hydroxyphosphate with the low iron-phosphorus ratio and the low specific surface area according to a certain proportion, then proportioning with iron phosphate, lithium phosphate and lithium carbonate according to a certain proportion, and adding a certain amount of a carbon source and an additive to form a mixed material; subjecting the aforementioned mixed material to sanding to obtain a nano-sized sanded slurry; and spray-drying the nano-sized sanded slurry to obtain a sprayed material; putting the aforementioned sprayed material in a box furnace for sintering to obtain a sintered material, and pulverizing the sintered material through a jet mill to obtain a pulverized material; and further subjecting the aforementioned pulverized material to sieving, blending, packaging and the like procedures to obtain a finished product of lithium iron phosphate.

Preferably, the step S3 includes: adding excess hydrogen peroxide into the ferrous sulfate solution to continue oxidation for a certain period of time; adding a phosphoric acid solution into the oxidized ferrous sulfate solution, then dissolving ammonium dihydrogen phosphate powder with water to formulate an ammonium dihydrogen phosphate solution with a concentration of 30% at a dissolution temperature of 30-40°C, and then adding the ammonium dihydrogen phosphate solution into the oxidized ferrous sulfate solution; and adding ammonia water into the ferrous sulfate solution, adjusting a pH value of the solution to 3.00 ± 0.02, reacting for a period of time to form a mixed slurry, heating and holding the mixed slurry at a temperature for a period of time, and then washing with water and subjecting to press filtration for several times to form ferric hydroxyphosphate precursors with different iron-phosphorus ratios.

Preferably, a third embodiment of the present disclosure provides a method for preparing lithium iron phosphate from ferric hydroxyphosphate, including: adding ferrous sulfate, a by-product of titanium dioxide, into a phosphorus source and a precipitant for purification, so as to obtain a ferrous sulfate solution after purification through press filtration; adding an appropriate amount of phosphoric acid into the ferrous sulfate solution to reduce a pH value of the ferrous sulfate solution; sequentially adding phosphoric acid, an ammonium dihydrogen phosphate solution, hydrogen peroxide and ammonia water into the ferrous sulfate solution, then reacting for a period of time to form a mixed slurry, heating and holding the mixed slurry at a temperature for a period of time, and then washing with water and subjecting to press filtration for several times to form ferric hydroxyphosphate precursors with different iron-phosphorus ratios; subjecting the ferric hydroxyphosphate precursors to flash drying in a flash drier, and sintering at high temperature for a certain period of time to obtain finished products of ferric hydroxyphosphate precursor with different iron-phosphorus ratios and different specific surface areas; pulverizing the sintered material with a mechanical mill, and mixing with a ribbon mixer to obtain finished products of ferric hydroxyphosphate with different iron-phosphorus ratios and different specific surface areas; mixing the ferric hydroxyphosphate with the high iron-phosphorus ratio and the high specific surface area with the ferric hydroxyphosphate with the low iron-phosphorus ratio and the low specific surface area according to a certain proportion, then proportioning with iron oxide, lithium phosphate, lithium carbonate, and ammonium dihydrogen phosphate according to a certain proportion, and adding a certain amount of a carbon source and an additive to form a mixed material; subjecting the aforementioned mixed material to sanding to obtain a nano-sized sanded slurry; and spray-drying the nano-sized sanded slurry to obtain a sprayed material; putting the aforementioned sprayed material in a box furnace for sintering to obtain a sintered material, and pulverizing the sintered material through a jet mill to obtain a pulverized material; and further subjecting the aforementioned pulverized material to sieving, blending, packaging and the like procedures to obtain a finished product of lithium iron phosphate.

Preferably, the step S3 includes: adding a phosphoric acid solution into the ferrous sulfate solution, then dissolving ammonium dihydrogen phosphate powder with water to formulate an ammonium dihydrogen phosphate solution with a concentration of 30% at a dissolution temperature of 30-40°C, and then adding the ammonium dihydrogen phosphate solution into the ferrous sulfate solution; adding excess hydrogen peroxide into the ferrous sulfate solution to continue oxidation for a certain period of time; and adding ammonia water into the ferrous sulfate solution, adjusting a pH value of the solution to 3.00 ± 0.02, reacting for a period of time to form a mixed slurry, heating and holding the mixed slurry at a temperature for a period of time, and then washing with water and subjecting to press filtration for several times to form ferric hydroxyphosphate precursors with different iron-phosphorus ratios.

Preferably, a fourth embodiment of the present disclosure provides a method for preparing lithium iron phosphate from ferric hydroxyphosphate, including: adding ferrous sulfate, a by-product of titanium dioxide, into a phosphorus source and a precipitant for purification, so as to obtain a ferrous sulfate solution after purification through press filtration; adding an appropriate amount of phosphoric acid into the ferrous sulfate solution to reduce a pH value of the ferrous sulfate solution; adding hydrogen peroxide, phosphoric acid, an ammonium dihydrogen phosphate solution and ammonia water into the ferrous sulfate solution, then reacting for a period of time to form a mixed slurry, holding the mixed slurry at room temperature for a period of time, and then washing with water and subjecting to press filtration for several times to form ferric hydroxyphosphate precursors with different iron-phosphorus ratios; subjecting the ferric hydroxyphosphate precursors to flash drying in a flash drier, and sintering at high temperature for a certain period of time to obtain finished products of ferric hydroxyphosphate precursor with different iron-phosphorus ratios and different specific surface areas; pulverizing the sintered material with a mechanical mill, and mixing with a ribbon mixer to obtain finished products of ferric hydroxyphosphate with different iron-phosphorus ratios and different specific surface areas; mixing the ferric hydroxyphosphate with a high iron-phosphorus ratio with the ferric hydroxyphosphate with a low iron-phosphorus ratio according to a certain proportion, then proportioning with lithium phosphate and a lithium iron phosphate electrode pole piece material according to a certain proportion, and adding a certain amount of a carbon source and an additive to form a mixed material; subjecting the aforementioned mixed material to sanding to obtain a nano-sized sanded slurry; and spray-drying the nano-sized sanded slurry to obtain a sprayed material; putting the aforementioned sprayed material in a box furnace for sintering to obtain a sintered material, and pulverizing the sintered material through a jet mill to obtain a pulverized material; and further subjecting the aforementioned pulverized material to sieving, blending, packaging and the like procedures to obtain a finished product of lithium iron phosphate.

Preferably, the step S3 includes: adding excess hydrogen peroxide into the ferrous sulfate solution to continue oxidation for a certain period of time; dissolving ammonium dihydrogen phosphate powder with water to formulate a ammonium dihydrogen phosphate solution with a concentration of 30% at a dissolution temperature of 30-40°C, and then adding a phosphoric acid solution and ammonia water into the ammonium dihydrogen phosphate solution and mix evenly under stirring to form a mixed ammonium phosphate solution; and adding the mixed ammonium phosphate solution into the oxidized ferrous sulfate solution, adjusting a pH value of the solution to 3.00 ± 0.02, reacting for a period of time to form a mixed slurry, holding the mixed slurry at room temperature for a period of time, and then washing with water and subjecting to press filtration for several times to form ferric hydroxyphosphate precursors with different iron-phosphorus ratios.

Preferably, in the step S6, a method for preparing the lithium iron phosphate electrode pole piece material includes: pulverizing a waste lithium iron phosphate positive electrode pole piece, and sieving to separate a foil material and a raw material for the lithium iron phosphate pole piece material; sintering the raw material of the lithium iron phosphate pole piece material in an inert atmosphere at a sintering temperature of 400-500°C for a sintering time of 1-4 hours, and then pulverizing to a particle size of 1-5 µm to obtain the lithium iron phosphate electrode pole piece material.

Preferably, a fifth embodiment of the present disclosure provides a method for preparing lithium iron phosphate from ferric hydroxyphosphate, including: adding ferrous sulfate, a by-product of titanium dioxide, into a phosphorus source and a precipitant for purification, so as to obtain a ferrous sulfate solution after purification through press filtration; adding an appropriate amount of phosphoric acid into the ferrous sulfate solution to reduce a pH value of the ferrous sulfate solution; adding hydrogen peroxide, phosphoric acid, an ammonium dihydrogen phosphate solution and ammonia water into the ferrous sulfate solution, then reacting for a period of time to form a mixed slurry, holding the mixed slurry at room temperature for a period of time, and then washing with water and subjecting to press filtration for several times to form ferric hydroxyphosphate precursors with different iron-phosphorus ratios; subjecting the ferric hydroxyphosphate precursors to flash drying in a flash drier, and sintering at high temperature for a certain period of time to obtain finished products of ferric hydroxyphosphate precursor with different iron-phosphorus ratios and different specific surface areas; pulverizing the sintered material with a mechanical mill, and mixing with a ribbon mixer to obtain finished products of ferric hydroxyphosphate with different iron-phosphorus ratios and different specific surface areas; mixing the ferric hydroxyphosphate with a high iron-phosphorus ratio with the ferric hydroxyphosphate with a low iron-phosphorus ratio according to a certain proportion, then proportioning with lithium phosphate and a low-carbon finished lithium iron phosphate material according to a certain proportion, and adding a certain amount of a carbon source and an additive to form a mixed material; subjecting the aforementioned mixed material to sanding to obtain a nano-sized sanded slurry; and spray-drying the nano-sized sanded slurry to obtain a sprayed material; putting the aforementioned sprayed material in a box furnace for sintering to obtain a sintered material, and pulverizing the sintered material through a jet mill to obtain a pulverized material; and further subjecting the aforementioned pulverized material to sieving, blending, packaging and the like procedures to obtain a finished product of lithium iron phosphate.

Preferably, the step S3 includes: adding excess hydrogen peroxide into the ferrous sulfate solution to continue oxidation for a certain period of time; dissolving ammonium dihydrogen phosphate powder with water to formulate a ammonium dihydrogen phosphate solution with a concentration of 30% at a dissolution temperature of 30-40°C, and then adding a phosphoric acid solution and ammonia water into the ammonium dihydrogen phosphate solution and mix evenly under stirring to form a mixed ammonium phosphate solution; and adding the mixed ammonium phosphate solution into the oxidized ferrous sulfate solution, adjusting a pH value of the solution to 3.00 ± 0.02, reacting for a period of time to form a mixed slurry, holding the mixed slurry at room temperature for a period of time, and then washing with water and subjecting to press filtration for several times to form ferric hydroxyphosphate precursors with different iron-phosphorus ratios.

Preferably, the step S6 includes: mixing iron oxide with a phosphorus source, a lithium source, a primary carbon source and a dopant, then adding water and stirring to obtain a slurry; sequentially subjecting the slurry to wet grinding, spray drying, sintering under a nitrogen atmosphere and jet-pulverizing to obtain a pulverized low-carbon finished lithium iron phosphate material; and mixing the ferric hydroxyphosphate with a high iron-phosphorus ratio with the ferric hydroxyphosphate with a low iron-phosphorus ratio according to a certain proportion, then proportioning with lithium phosphate and a low-carbon finished lithium iron phosphate material according to a certain proportion, and adding a certain amount of a secondary carbon source and an additive to form a mixed material.

Preferably, the phosphorus source is one or more of phosphoric acid , ammonium dihydrogen phosphate and diammonium hydrogen phosphate, the lithium source is lithium carbonate and/or lithium hydroxide, the primary carbon source is one or more of sucrose, glucose, citric acid, starch and polyethylene glycol, a molar ratio of the iron in the iron oxide to the phosphorus in the phosphorus source is n(Fe):n(P) = (0.96-1):1, a molar ratio of the lithium in the lithium source to the iron in the iron oxide is n(Li):n(Fe) = (1.02-1.05):1, the dopant is a metal oxide, and the metal is at least one of Ti, V, Nb and Mg; and in the step S63, the carbon content in the low-carbon finished lithium iron phosphate material is between 0.2%-0.5%, in the mixed material according to the molar ratio of Li:Fe:P = [1.03-1.04]:1:[1.03-1.04], the secondary carbon source is one or more of sucrose, glucose, citric acid, starch and polyethylene glycol, and the addition mount of the primary carbon source and the secondary carbon source is on the basis that the carbon content in the final product is between 1.2%-1.6%, and the additive is selected from one or more of titanium dioxide, ammonium metavanadate and niobium pentoxide and is controlled at a doping amount between 300-3,000 ppm.

In the second aspect, an embodiment of the present disclosure provides a positive electrode material for a lithium-ion battery obtained by processing through application of the method for preparing lithium iron phosphate from ferric hydroxyphosphate provided in the first aspect above.

In a third aspect, an embodiment of the present disclosure provides a lithium-ion battery including the positive electrode material for a lithium-ion battery described in the second aspect above.

In the method for preparing lithium iron phosphate from ferric hydroxyphosphate as provided by the embodiment of the present disclosure, a by-product of titanium dioxide, ferrous sulfate, is utilized to generate ferric sulfate, added with other materials and reacted to generate ferric hydroxyphosphate with different iron-phosphorus ratios, and then subjected to different sintering processes to obtain a finished product of ferric hydroxyphosphate with a high iron-phosphorus ratio and a high specific surface area and a finished product of ferric hydroxyphosphate with a low iron-phosphorus ratio and a low specific surface area. The ferric hydroxyphosphate with the high iron-phosphorus ratio and the high specific surface area and the ferric hydroxyphosphate with the low iron-phosphorus ratio and the low specific surface area are mixed, then mixed with the lithium source and the iron source according to a certain proportion, and subsequently added with the carbon source and the additive to form the mixed material. The mixed material is subjected to sanding, spray drying, sintering, sieving, blending, packaging and the like procedures to obtain the finished product of lithium iron phosphate. In the present method, the ferric hydroxyphosphate with the high iron-phosphorus ratio and the ferric hydroxyphosphate with the low iron-phosphorus ratio are mixed in proportions. Such mixing of the two kinds of ferric hydroxyphosphate in proportions is conducive to the formation of large and small particles in proportions, and improves the electrochemical performance while improving the compaction density of the lithium iron phosphate material. Additionally, the present method requires a low reaction temperature, a short reaction time, low requirements for equipment and a simple process flow, which improves the production efficiency and is suitable for application in large-scale industrial production.

### BRIEF DESCRIPTION OF THE DRAWINGS

FIG. 1 is a flow chart of a method for preparing lithium iron phosphate from ferric hydroxyphosphate as provided by a first embodiment of the present disclosure;
FIG. 2 is an example flow chart of the step S3 of the method for preparing lithium iron phosphate from ferric hydroxyphosphate as provided by the first embodiment of the present disclosure;
FIG. 3 is a flow chart of a method for preparing lithium iron phosphate from ferric hydroxyphosphate as provided by a second embodiment of the present disclosure;
FIG. 4 is an example flow chart of the step S3 of the method for preparing lithium iron phosphate from ferric hydroxyphosphate as provided by the second embodiment of the present disclosure;
FIG. 5 is a flow chart of a method for preparing lithium iron phosphate from ferric hydroxyphosphate as provided by a third embodiment of the present disclosure;
FIG. 6 is an example flow chart of the step S3 of the method for preparing lithium iron phosphate from ferric hydroxyphosphate as provided by the third embodiment of the present disclosure;
FIG. 7 is a flow chart of a method for preparing lithium iron phosphate from ferric hydroxyphosphate as provided by a fourth embodiment of the present disclosure;
FIG. 8 is an example flow chart of the step S3 of the method for preparing lithium iron phosphate from ferric hydroxyphosphate as provided by the fourth embodiment of the present disclosure;
FIG. 9 is a flow chart of a method for preparing lithium iron phosphate from ferric hydroxyphosphate as provided by a fifth embodiment of the present disclosure;
FIG. 10 is an example flow chart of the step S3 of the method for preparing lithium iron phosphate from ferric hydroxyphosphate as provided by the fifth embodiment of the present disclosure;
FIG. 11 is a flow chart of the step S6 of the method for preparing lithium iron phosphate from ferric hydroxyphosphate as provided by the fifth of the present disclosure;
FIG. 12 is an SEM spectrogram of the ferric hydroxyphosphate with a high iron-phosphorus ratio and a high specific surface area prepared in Example 1 of the present disclosure;
FIG. 13 is an SEM spectrogram of the lithium iron phosphate positive electrode material prepared in Example 1 of the present disclosure;
FIG. 14 is an XRD spectrogram of the ferric hydroxyphosphate with a high iron-phosphorus ratio and a high specific surface area prepared in Example 1 of the present disclosure;
FIG. 15 is an XRD spectrogram of the lithium iron phosphate positive electrode material prepared in Example 1 of the present disclosure;
FIG. 16 is an SEM spectrogram of the ferric hydroxyphosphate with a high iron-phosphorus ratio and a high specific surface area prepared in Example 2 of the present disclosure;
FIG. 17 is an SEM spectrogram of the lithium iron phosphate positive electrode material prepared in Example 2 of the present disclosure;
FIG. 18 is an XRD spectrogram of the ferric hydroxyphosphate with a high iron-phosphorus ratio and a high specific surface area prepared in Example 2 of the present disclosure;
FIG. 19 is an XRD spectrogram of the lithium iron phosphate positive electrode material prepared in Example 2 of the present disclosure;
FIG. 20 is an SEM spectrogram of the ferric hydroxyphosphate with a high iron-phosphorus ratio and a high specific surface area prepared in Example 3 of the present disclosure;
FIG. 21 is an SEM spectrogram of the lithium iron phosphate positive electrode material prepared in Example 3 of the present disclosure;
FIG. 22 is an XRD spectrogram of the ferric hydroxyphosphate with a high iron-phosphorus ratio and a high specific surface area prepared in Example 3 of the present disclosure;
FIG. 23 is an XRD spectrogram of the lithium iron phosphate positive electrode material prepared in Example 3 of the present disclosure;
FIG. 24 is an SEM spectrogram of the ferric hydroxyphosphate with a high iron-phosphorus ratio and a high specific surface area prepared in Example 4 of the present disclosure;
FIG. 25 is an SEM spectrogram of the lithium iron phosphate positive electrode material prepared in Example 4 of the present disclosure;
FIG. 26 is an XRD spectrogram of the ferric hydroxyphosphate with a high iron-phosphorus ratio and a high specific surface area prepared in Example 4 of the present disclosure;
FIG. 27 is an XRD spectrogram of the lithium iron phosphate positive electrode material prepared in Example 4 of the present disclosure;
FIG. 28 is an SEM spectrogram of the ferric hydroxyphosphate with a high iron-phosphorus ratio and a high specific surface area prepared in Example 5 of the present disclosure;
FIG. 29 is an SEM spectrogram of the lithium iron phosphate positive electrode material prepared in Example 5 of the present disclosure;
FIG. 30 is an XRD spectrogram of the ferric hydroxyphosphate with a high iron-phosphorus ratio and a high specific surface area prepared in Example 5 of the present disclosure;
FIG. 31 is an XRD spectrogram of the lithium iron phosphate positive electrode material prepared in Example 5 of the present disclosure;
FIG. 32 is a charge-discharge curve (0.1C) of a button half-cell assembled from the lithium iron phosphate positive electrode material prepared in Example 1 of the present disclosure; and
FIG. 33 is a charge-discharge curve (1C) of a button half-cell assembled from the lithium iron phosphate positive electrode material prepared in Example 1 of the present disclosure.

### DETAILED DESCRIPTION OF THE EMBODIMENTS

The disclosure hereafter provides many different embodiments or examples for implementing different structures of the present disclosure. To simplify the disclosure of the present disclosure, components and arrangements of specific examples are described hereafter. Of course, they are only examples and are not intended to limit the present disclosure. Furthermore, in the present disclosure reference numbers and/or letters can be repeated in different examples. Such repetition is for the purpose of simplicity and clarity, and does not in itself indicate the relationship between the various embodiments and/or arrangements as discussed. Moreover, various specific process and material examples are provided by the present disclosure, but those of ordinary skills in the art can recognize the applicability of other processes and/or the use of other materials.

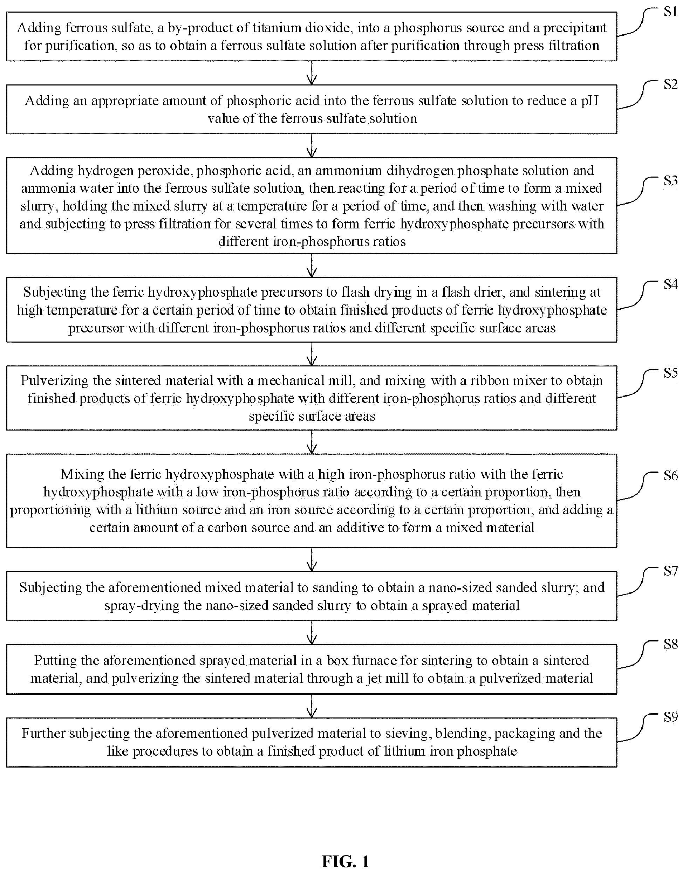

A first embodiment of the present disclosure provides a method for preparing lithium iron phosphate from ferric hydroxyphosphate, which is used for preparing lithium iron phosphate with high compaction density and high capacity. As shown in FIG. 1, the present method includes the following steps.

Step S1: ferrous sulfate, a by-product of titanium dioxide, is added into a phosphorus source and a precipitant for purification, so as to obtain a ferrous sulfate solution after purification through press filtration,
wherein, according to a mass ratio, the ferrous sulfate:the phosphorus source:the precipitant = 1:[0.001-0.005]:[0.005-0.007], the purification is conducted at a reaction temperature of 40°C and a reaction pH value of 2.2-2.5 for a reaction time of 1 h.

In this embodiment, the phosphorus source can be one or more of phosphoric acid, monoammonium phosphate, diammonium phosphate, sodium phosphate and the like, and the precipitant can be one or more of sodium hydroxide, potassium hydroxide, lithium hydroxide, ammonia water and the like.

Step S2: an appropriate amount of phosphoric acid is added into the ferrous sulfate solution to reduce a pH value of the ferrous sulfate solution,
wherein the addition amount of phosphoric acid is according to the molar ratio of n(Fe):n(phosphoric acid) = 1:0.15.

Step S3: hydrogen peroxide, phosphoric acid, an ammonium dihydrogen phosphate solution and ammonia water are added into the ferrous sulfate solution, then reacted for a period of time to form a mixed slurry, and the mixed slurry was held at room temperature for a period of time, and then washed with water and subjected to press filtration for several times to form ferric hydroxyphosphate precursors with different iron-phosphorus ratios,
wherein, when an iron-phosphorus feeding ratio in the mixed slurry satisfies an iron-phosphorus molar ratio of Fe/P = 1.475-1.490, the ferric hydroxyphosphate with the high iron-phosphorus ratio can be formed; and when the iron-phosphorus feeding ratio in the mixed slurry satisfies the iron-phosphorus molar ratio of Fe/P = 1.460-1.475, the ferric hydroxyphosphate with the low iron-phosphorus ratio can be generated.

In this embodiment, the concentration of the hydrogen peroxide is between 30%-60%, and the temperature holding time for the mixed slurry at room temperature is 3 h. The number of washing with water can be several, wherein the first time of washing with water mainly washes away impurities magnesium, manganese, sulfur and the like elements, 1:1 diluted ammonia water is added during the last time of washing with water to adjust a pH value to 6.5-7.0, so as to wash away a SO₄²⁻ ion. Specifically, the number of washing with water can be 3, wherein the 1st and 2nd times of washing with water mainly washes away impurities manganese, magnesium, sulfur and the like elements, and 1:1 diluted ammonia water is added during the 3rd time of washing with water to adjust a pH value to 6.5-7.0, so as to wash away a SO₄²⁻ ion.

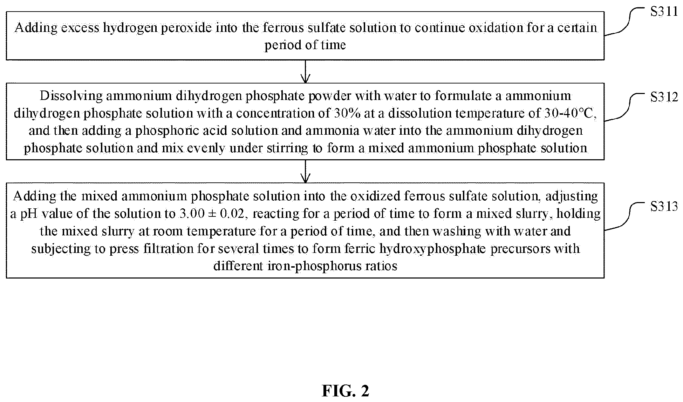

Specifically, in this embodiment, as shown in FIG. 2, the step S3 includes:
step S311: adding excess hydrogen peroxide into the ferrous sulfate solution to continue oxidation for a certain period of time;
step S312: dissolving ammonium dihydrogen phosphate powder with water to formulate a ammonium dihydrogen phosphate solution with a concentration of 30% at a dissolution temperature of 30-40°C, and then adding a phosphoric acid solution and ammonia water into the ammonium dihydrogen phosphate solution and mix evenly under stirring to form a mixed ammonium phosphate solution; and
step S313: adding the mixed ammonium phosphate solution into the oxidized ferrous sulfate solution, adjusting a pH value of the solution to 3.00 ± 0.02, reacting for a period of time to form a mixed slurry, holding the mixed slurry at room temperature for a period of time, and then washing with water and subjecting to press filtration for several times to form ferric hydroxyphosphate precursors with different iron-phosphorus ratio.

Step S4: the ferric hydroxyphosphate precursors were subjected to flash drying in a flash drier, and sintered at high temperature for a certain period of time to obtain finished products of ferric hydroxyphosphate precursor with different iron-phosphorus ratios and different specific surface areas,
wherein, the flash drying of the ferric hydroxyphosphate precursors is to remove free water, and it is controlled that the air inlet temperature of the flash drier is 220 ± 20°C and the air outlet temperature is 110 ± 5°C. The sintering is conducted in an atmosphere of air at a temperature of 535-560°C for a time of 4-5 h.

Step S5: the sintered material is pulverized with a mechanical mill, and mixed with a ribbon mixer to obtain finished products of ferric hydroxyphosphate with different iron-phosphorus ratios and different specific surface areas,
wherein, during the pulverizing process, the particle size is controlled at D10 ≥ 1.0 µm, D50: 6-15 µm, and D90 ≤ 60 µm. The mixing frequency of the mixer is controlled at 35 ± 2 Hz, and the mixing time can be 1-2 h.

In this embodiment, the ferric hydroxyphosphate with the high iron-phosphorus ratio has a high specific surface area that satisfies BET = 15-20 m²/g and the that satisfies Fe/P = 1.460-1.480; and the ferric hydroxyphosphate precursor with the low iron-phosphorus ratio has a lower specific surface area that satisfies BET = 5-10 m²/g and the iron-phosphorus molar ratio that satisfies Fe/P = 1.440-1.460.

Step S6: the ferric hydroxyphosphate with a high iron-phosphorus ratio is mixed with the ferric hydroxyphosphate with a low iron-phosphorus ratio according to a certain proportion, then proportioned with a lithium source and an iron source according to a certain proportion, and added with a certain amount of a carbon source and an additive to form a mixed material.

In this embodiment, the ratio of the ferric hydroxyphosphate with the high iron-phosphorus ratio to the ferric hydroxyphosphate with the low iron-phosphorus ratio is between 2:8 and 8:2, and preferably, the ratio of the ferric hydroxyphosphate with the high iron-phosphorus ratio to the ferric hydroxyphosphate with the low iron-phosphorus ratio satisfies 3:7. Additionally, in the mixed material, according to the molar ratio, Li:Fe:P = [1.03-1.04]:1:[1.03-1.04]. The lithium source can be one or more of lithium phosphate, lithium carbonate, a lithium iron phosphate electrode pole piece material, and a low-carbon finished lithium iron phosphate material, the iron source is one or more of iron phosphate and iron oxide, and the addition amount of the carbon source is on the basis that a carbon content in a final product is between 1.2%-1.6%.

In this embodiment, the carbon source can be one or more of sucrose, glucose, citric acid, starch and polyethylene glycol, and the additive can be selected from one or more of titanium dioxide, ammonium metavanadate and niobium pentoxide and is controlled at a doping amount between 300-3,000 ppm.

Step S7: the aforementioned mixed material is subjected to sanding to obtain a nano-sized sanded slurry; and the nano-sized sanded slurry is spray-dried to obtain a sprayed material,
wherein, the sanding particle size in the sanded slurry is controlled between 0.45-0.75 µm. In the spray drying, the air inlet temperature can be 200-220°C, the air outlet temperature can be 80-110°C, the air blast frequency can be 80 Hz, and a spraying particle size in the finally formed sprayed material is controlled between D50 = 20-40 µm.

Step S8: the aforementioned sprayed material IS put in a box furnace for sintering to obtain a sintered material, and the sintered material is pulverized through a jet mill to obtain a pulverized material.

In the sintering process, the sintering is conducted in an atmosphere of nitrogen at a sintering temperature of 750-780°C and a heating rate of 3°C/min for a sintering time of 8-12 h, and then natural cooling is conducted to obtain the sintered material; and during the pulverizing process, it is controlled that a gas pressure is between 0.2-0.4 Mpa, a fractionation frequency is 80-200 Hz, and a particle size of the finally obtained pulverized material satisfies: D10 > 0.35 µm, D50 = 0.7-2.0µm , D90 <10 µm, and D100 < 30 µm.

Step S9: the aforementioned pulverized material is further subjected to sieving, blending, packaging and the like procedures to obtain a finished product of lithium iron phosphate.

In the method for preparing lithium iron phosphate from ferric hydroxyphosphate as provided by the first embodiment of the present disclosure, a by-product of titanium dioxide, ferrous sulfate, is utilized to generate ferric sulfate, added with other materials and reacted to generate ferric hydroxyphosphate precursors with different iron-phosphorus ratios, and then subjected to different sintering processes to obtain a finished product of ferric hydroxyphosphate with a high iron-phosphorus ratio and a high specific surface area and a finished product of ferric hydroxyphosphate with a low iron-phosphorus ratio and a low specific surface area. Compared with ferric phosphate prepared by a traditional method, the ferric hydroxyphosphate prepared by the present method has no crystal transformation synthesis step at 80-90°C, and belongs to the spherical small-particle amorphous precursor. In the stage of washing with water, separating and purifying, impurities are not easy to hide inside the crystal. After multiple times of washing with water, impurities such as Mn, Mg, SO₄²⁻ ions and the like impurities are mainly washed away, so that the finished product of ferric hydroxyphosphate has a low impurity content and high purity. Moreover, the ferric hydroxyphosphate produced by the present method has an adjustable iron-phosphorus ratio and an adjustable specific surface area, so that ferric hydroxyphosphate with different iron-phosphorus ratios can be generated as desired. The ferric hydroxyphosphate with the high iron-phosphorus ratio and the high specific surface area has small particles, which can improve the discharge capacity of the material; and the ferric hydroxyphosphate with the low iron-phosphorus ratio and the low specific surface area has large particles, which can increase the compaction density of the material, which thus is more conducive to subsequent construction of the crystalline structure of lithium iron phosphate.

In the subsequent steps of the present method, the ferric hydroxyphosphate with the high iron-phosphorus ratio and the high specific surface area and the ferric hydroxyphosphate with the low iron-phosphorus ratio and the low specific surface area are mixed, then mixed with the lithium source and the iron source according to a certain proportion, and added with the carbon source and the additive to form the mixed material. Subsequently, the mixed material is subjected to sanding, spray drying, sintering, sieving, blending, packaging and the like procedures to obtain the finished product of lithium iron phosphate. In the present method, the ferric hydroxyphosphate with the high iron-phosphorus ratio and the ferric hydroxyphosphate with the low iron-phosphorus ratio are mixed in proportions, which is conducive to the formation of large and small particles in proportions, and improves the electrochemical performance while improving the compaction density of the lithium iron phosphate material. Additionally, the present method requires a low reaction temperature, a short reaction time, low requirements for equipment and a simple process flow, which improves the production efficiency and is suitable for application in large-scale industrial production.

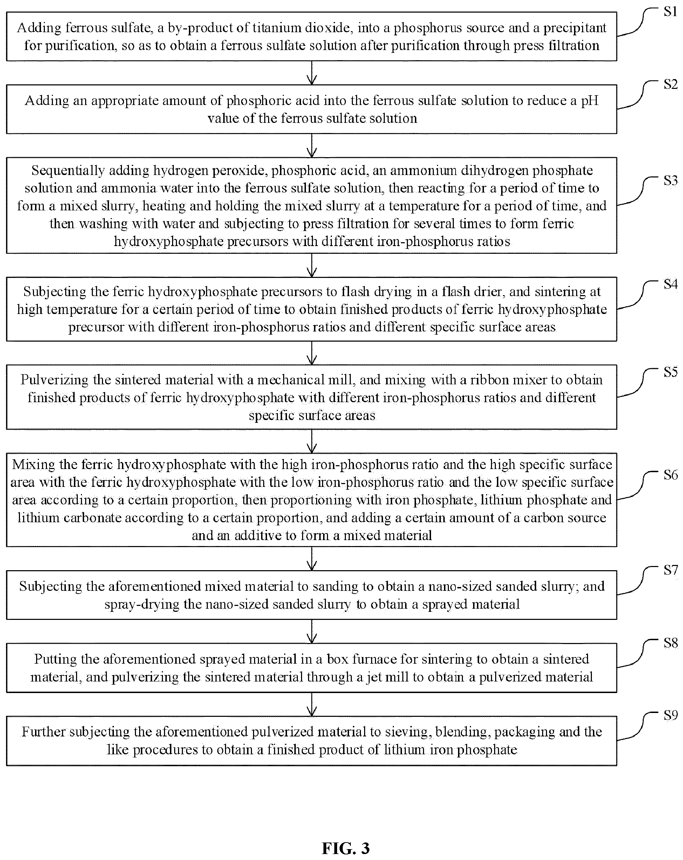

A second embodiment of the present disclosure provides a method for preparing lithium iron phosphate from ferric hydroxyphosphate, which is used for preparing lithium iron phosphate with high compaction density and high capacity. As shown in FIG. 3, the present method includes the following steps.

Step S1: ferrous sulfate, a by-product of titanium dioxide, is added into a phosphorus source and a precipitant for purification, so as to obtain a ferrous sulfate solution after purification through press filtration,
wherein, according to a mass ratio, the ferrous sulfate:the phosphorus source:the precipitant = 1:[0.001-0.005]:[0.005-0.007], the purification is conducted at a reaction temperature of 40°C and a reaction pH value of 2.2-2.5 for a reaction time of 1 h.

In this embodiment, the phosphorus source can be one or more of phosphoric acid, monoammonium phosphate, diammonium phosphate, sodium phosphate and the like, and the precipitant can be one or more of sodium hydroxide, potassium hydroxide, lithium hydroxide, ammonia water and the like.

Step S2: an appropriate amount of phosphoric acid is added into the ferrous sulfate solution to reduce a pH value of the ferrous sulfate solution,
wherein the addition amount of phosphoric acid is according to the molar ratio of n(Fe):n(phosphoric acid) = 1:0.15.

Step S3: hydrogen peroxide, phosphoric acid, an ammonium dihydrogen phosphate solution and ammonia water are sequentially added into the ferrous sulfate solution, and then reacted for a period of time to form a mixed slurry, and the mixed slurry is heated and held at a temperature for a period of time, and then washed with water and subjected to press filtration for several times to form ferric hydroxyphosphate precursors with different iron-phosphorus ratios.

In this embodiment, firstly hydrogen peroxide is added to fully oxidize ferrous ions into ferric ions, then added with phosphoric acid and ammonium dihydrogen phosphate to adjust the ions in the solution to a suitable iron-phosphorus molar ratio. On one hand, it can enable the generated ferric hydroxyphosphate precursor to be more stable; and on the other hand, it enables the generated ferric hydroxyphosphate precursor to have larger particles and be easier to be subjected to press filtration and washing.
wherein, when an iron-phosphorus feeding ratio in the mixed slurry satisfies an iron-phosphorus molar ratio of Fe/P = 1.475-1.490, the ferric hydroxyphosphate with the high iron-phosphorus ratio can be formed; and when the iron-phosphorus feeding ratio in the mixed slurry satisfies the iron-phosphorus molar ratio of Fe/P = 1.460-1.475, the ferric hydroxyphosphate with the low iron-phosphorus ratio can be generated.

In this embodiment, the concentration of the hydrogen peroxide is between 30%-60%, and the mixed slurry is heated to 60-80°C and held at this temperature for 3 h. The number of washing with water can be several, wherein the first time of washing with water mainly washes away impurities magnesium, manganese, sulfur and the like elements, 1:1 diluted ammonia water is added during the last time of washing with water to adjust a pH value to 6.5-7.0, so as to wash away a SO₄²⁻ ion. Specifically, the number of washing with water can be 3, wherein the 1st and 2nd times of washing with water mainly washes away impurities manganese, magnesium, sulfur and the like elements, and 1:1 diluted ammonia water is added during the 3rd time of washing with water to adjust a pH value to 6.5-7.0, so as to wash away a SO₄²⁻ ion.

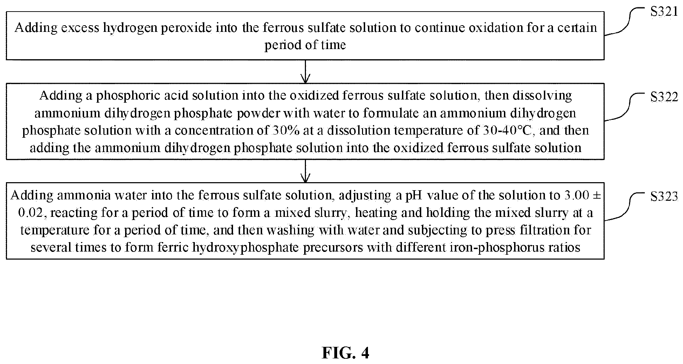

Specifically, in this embodiment, as shown in FIG. 4, the step S3 includes:
step S321: adding excess hydrogen peroxide into the ferrous sulfate solution to continue oxidation for a certain period of time;
step S322: adding a phosphoric acid solution into the oxidized ferrous sulfate solution, then dissolving ammonium dihydrogen phosphate powder with water to formulate an ammonium dihydrogen phosphate solution with a concentration of 30% at a dissolution temperature of 30-40°C, and then adding the ammonium dihydrogen phosphate solution into the oxidized ferrous sulfate solution; and
step S323: adding ammonia water into the ferrous sulfate solution, adjusting a pH value of the solution to 3.00 ± 0.02, reacting for a period of time to form a mixed slurry, heating and holding the mixed slurry at a temperature for a period of time, and then washing with water and subjecting to press filtration for several times to form ferric hydroxyphosphate precursors with different iron-phosphorus ratios.

The heating temperature of the mixed slurry is 60-80°C, and the temperature holding time is 3 h.

Step S4: the ferric hydroxyphosphate precursors were subjected to flash drying in a flash drier, and sintered at high temperature for a certain period of time to obtain finished products of ferric hydroxyphosphate precursor with different iron-phosphorus ratios and different specific surface areas,
wherein, the flash drying of the ferric hydroxyphosphate precursors is to remove free water, and it is controlled that the air inlet temperature of the flash drier is 220 ± 20°C and the air outlet temperature is 110 ± 5°C. The sintering is conducted in an atmosphere of air at a temperature of 535-560°C for a time of 4-5 h.

Step S5: the sintered material is pulverized with a mechanical mill, and mixed with a ribbon mixer to obtain finished products of ferric hydroxyphosphate with different iron-phosphorus ratios and different specific surface areas,
wherein, during the pulverizing process, the particle size is controlled at D10 ≥ 1.0 µm, D50: 6-15 µm, and D90 ≤ 60 µm. The mixing frequency of the mixer is controlled at 35 ± 2 Hz, and the mixing time can be 1-2 h.

In this embodiment, the ferric hydroxyphosphate with the high iron-phosphorus ratio has a high specific surface area that satisfies BET = 15-20 m²/g and the that satisfies Fe/P = 1.460-1.480; and the ferric hydroxyphosphate precursor with the low iron-phosphorus ratio has a lower specific surface area that satisfies BET = 5-10 m²/g and the iron-phosphorus molar ratio that satisfies Fe/P = 1.440-1.460.

Step S6: the ferric hydroxyphosphate with the high iron-phosphorus ratio is mixed with the ferric hydroxyphosphate with the low iron-phosphorus ratio according to a certain proportion, then proportioned with iron phosphate, lithium phosphate and lithium carbonate according to a certain proportion, and added with a certain amount of a carbon source and an additive to form a mixed material.

In this embodiment, the ratio of the ferric hydroxyphosphate with the high iron-phosphorus ratio to the ferric hydroxyphosphate with the low iron-phosphorus ratio is between 2:8 and 8:2, and preferably, the ratio of the ferric hydroxyphosphate with the high iron-phosphorus ratio to the ferric hydroxyphosphate with the low iron-phosphorus ratio satisfies 3:7. Additionally, in the mixed material, according to the molar ratio, Li:Fe:P = [1.03-1.04]:1:[1.03-1.04]. The addition amount of the carbon source is on the basis that a carbon content in a final product is between 1.2%-1.6%.

In this embodiment, the carbon source can be one or more of sucrose, glucose, citric acid, starch and polyethylene glycol, and the additive can be selected from one or more of titanium dioxide, ammonium metavanadate and niobium pentoxide and is controlled at a doping amount between 300-3,000 ppm.

Step S7: the aforementioned mixed material is subjected to sanding to obtain a nano-sized sanded slurry; and the nano-sized sanded slurry is spray-dried to obtain a sprayed material,
wherein, the sanding particle size in the sanded slurry is controlled between 0.45-0.75 µm. In the spray drying, the air inlet temperature can be 200-220°C, the air outlet temperature can be 80-110°C, the air blast frequency can be 80 Hz, and a spraying particle size in the finally formed sprayed material is controlled between D50 = 20-40 µm.

Step S8: the aforementioned sprayed material IS put in a box furnace for sintering to obtain a sintered material, and the sintered material is pulverized through a jet mill to obtain a pulverized material.

In the sintering process, the sintering is conducted in an atmosphere of nitrogen at a sintering temperature of 750-780°C and a heating rate of 3°C/min for a sintering time of 8-12 h, and then natural cooling is conducted to obtain the sintered material; and during the pulverizing process, it is controlled that a gas pressure is between 0.2-0.4 Mpa, a fractionation frequency is 80-200 Hz, and a particle size of the finally obtained pulverized material satisfies: D10 > 0.35 µm, D50 = 0.7-2.0µm , D90 <10 µm, and D100 < 30 µm.

Step S9: the aforementioned pulverized material is further subjected to sieving, blending, packaging and the like procedures to obtain a finished product of lithium iron phosphate.

**For** the method for preparing lithium iron phosphate from ferric hydroxyphosphate as provided in the second embodiment of the present disclosure, the ferric hydroxyphosphate prepared by the present method is obtained by firstly adding hydrogen peroxide to fully oxidize ferrous ions into ferric ions, and then adding phosphoric acid and ammonium dihydrogen phosphate to adjust the ions in the solution to a suitable iron-phosphorus molar ratio. On one hand, it can enable the generated ferric hydroxyphosphate precursor to be more stable; and on the other hand, the mixed slurry is heated and then held at this temperature, so that the generated ferric hydroxyphosphate precursor has larger particles and is easier to be subjected to press filtration and washing. Additionally, the ferric hydroxyphosphate with the high iron-phosphorus ratio is mixed with the ferric hydroxyphosphate with the low iron-phosphorus ratio, then mixed with ferric phosphate, lithium phosphate and lithium carbonate according to a certain proportion, and added with the additive to form the mixed material. Subsequently, the mixed material is subjected to sanding, spray drying, sintering, sieving, blending, packaging and the like procedures to obtain the finished product of lithium iron phosphate. In the present method, the ferric hydroxyphosphate with the high iron-phosphorus ratio and the ferric hydroxyphosphate with the low iron-phosphorus ratio are mixed in proportions, and introduced with three materials of iron phosphate, wherein the introduction of lithium phosphate and lithium carbonate is easy to reduce the agglomeration of lithium iron phosphate particles and improve the roundness of the lithium iron phosphate particles, thereby improving the compaction density and electrochemical performance of the lithium iron phosphate material.

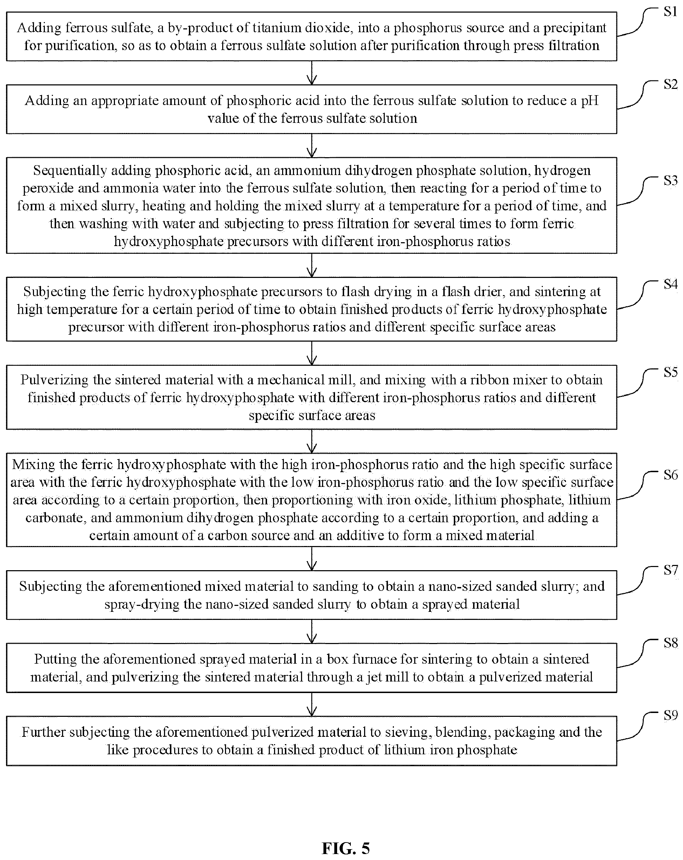

A third embodiment of the present disclosure provides a method for preparing lithium iron phosphate from ferric hydroxyphosphate, which is used for preparing lithium iron phosphate with high compaction density and high capacity. As shown in FIG. 5, the present method includes the following steps.

Step S1: ferrous sulfate, a by-product of titanium dioxide, is added into a phosphorus source and a precipitant for purification, so as to obtain a ferrous sulfate solution after purification through press filtration,
wherein, according to a mass ratio, the ferrous sulfate:the phosphorus source:the precipitant = 1:[0.001-0.005]:[0.005-0.007], the purification is conducted at a reaction temperature of 40°C and a reaction pH value of 2.2-2.5 for a reaction time of 1 h.

In this embodiment, the phosphorus source can be one or more of phosphoric acid, monoammonium phosphate, diammonium phosphate, sodium phosphate and the like, and the precipitant can be one or more of sodium hydroxide, potassium hydroxide, lithium hydroxide, ammonia water and the like.

Step S2: an appropriate amount of phosphoric acid is added into the ferrous sulfate solution to reduce a pH value of the ferrous sulfate solution,
wherein the addition amount of phosphoric acid is according to the molar ratio of n(Fe):n(phosphoric acid) = 1:0.15.

step S3: sequentially adding phosphoric acid, an ammonium dihydrogen phosphate solution, hydrogen peroxide and ammonia water into the ferrous sulfate solution, then reacting for a period of time to form a mixed slurry, heating and holding the mixed slurry at a temperature for a period of time, and then washing with water and subjecting to press filtration for several times to form ferric hydroxyphosphate precursors with different iron-phosphorus ratios;

In this embodiment, firstly phosphoric acid and ammonium dihydrogen phosphate are added to adjust the ions in the solution to an appropriate iron-phosphorus molar ratio, and then added with hydrogen peroxide to fully oxidize the ferrous ions into ferric ions. On one hand, it can enable the generated ferric hydroxyphosphate precursor to be more stable; and on the other hand, it enables the generated ferric hydroxyphosphate precursor to have larger particles and be easier to be subjected to press filtration and washing. wherein, when an iron-phosphorus feeding ratio in the mixed slurry satisfies an iron-phosphorus molar ratio of Fe/P = 1.475-1.490, the ferric hydroxyphosphate with the high iron-phosphorus ratio can be formed; and when the iron-phosphorus feeding ratio in the mixed slurry satisfies the iron-phosphorus molar ratio of Fe/P = 1.460-1.475, the ferric hydroxyphosphate with the low iron-phosphorus ratio can be generated.

In this embodiment, the concentration of the hydrogen peroxide is between 30%-60%, and the mixed slurry is heated to 60-80°C and held at this temperature for 3 h. The number of washing with water can be several, wherein the first time of washing with water mainly washes away impurities magnesium, manganese, sulfur and the like elements, 1:1 diluted ammonia water is added during the last time of washing with water to adjust a pH value to 6.5-7.0, so as to wash away a SO₄²⁻ ion. Specifically, the number of washing with water can be 3, wherein the 1st and 2nd times of washing with water mainly washes away impurities manganese, magnesium, sulfur and the like elements, and 1:1 diluted ammonia water is added during the 3rd time of washing with water to adjust a pH value to 6.5-7.0, so as to wash away a SO₄²⁻ ion.

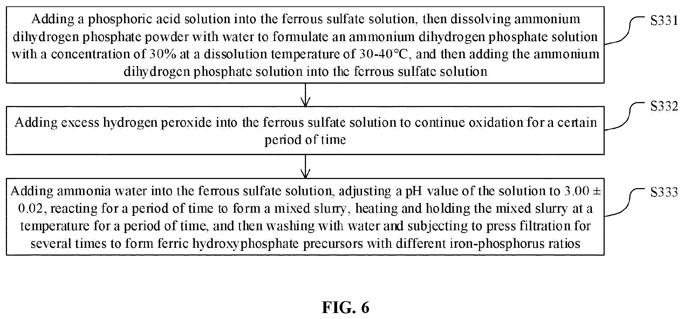

Specifically, in this embodiment, as shown in FIG. 6, the step S3 includes:
step S331: adding a phosphoric acid solution into the ferrous sulfate solution, then dissolving ammonium dihydrogen phosphate powder with water to formulate an ammonium dihydrogen phosphate solution with a concentration of 30% at a dissolution temperature of 30-40°C, and then adding the ammonium dihydrogen phosphate solution into the ferrous sulfate solution;
step S332: then adding excess hydrogen peroxide into the ferrous sulfate solution to continue oxidation for a certain period of time; and
step S333: then adding ammonia water into the ferrous sulfate solution, adjusting a pH value of the solution to 3.00 ± 0.02, reacting for a period of time to form a mixed slurry, heating and holding the mixed slurry at a temperature for a period of time, and then washing with water and subjecting to press filtration for several times to form ferric hydroxyphosphate precursors with different iron-phosphorus ratios.

The heating temperature of the mixed slurry is 60-80°C, and the temperature holding time is 3 h.

Step S4: the ferric hydroxyphosphate precursors were subjected to flash drying in a flash drier, and sintered at high temperature for a certain period of time to obtain finished products of ferric hydroxyphosphate precursor with different iron-phosphorus ratios and different specific surface areas,
wherein, the flash drying of the ferric hydroxyphosphate precursors is to remove free water, and it is controlled that the air inlet temperature of the flash drier is 220 ± 20°C and the air outlet temperature is 110 ± 5°C. The sintering is conducted in an atmosphere of air at a temperature of 535-560°C for a time of 4-5 h.

Step S5: the sintered material is pulverized with a mechanical mill, and mixed with a ribbon mixer to obtain finished products of ferric hydroxyphosphate with different iron-phosphorus ratios and different specific surface areas,
wherein, during the pulverizing process, the particle size is controlled at D10 ≥ 1.0 µm, D50: 6-15 µm, and D90 ≤ 60 µm. The mixing frequency of the mixer is controlled at 35 ± 2 Hz, and the mixing time can be 1-2 h.

In this embodiment, the ferric hydroxyphosphate with the high iron-phosphorus ratio has a high specific surface area that satisfies BET = 15-20 m²/g and the that satisfies Fe/P = 1.460-1.480; and the ferric hydroxyphosphate precursor with the low iron-phosphorus ratio has a lower specific surface area that satisfies BET = 5-10 m²/g and the iron-phosphorus molar ratio that satisfies Fe/P = 1.440-1.460.

Step S6: the ferric hydroxyphosphate with the high iron-phosphorus ratio is mixed with the ferric hydroxyphosphate with the low iron-phosphorus ratio according to a certain proportion, then proportioned with iron oxide, lithium phosphate, lithium carbonate and ammonium dihydrogen phosphate according to a certain proportion, and added with a certain amount of a carbon source and an additive to form a mixed material.

In this embodiment, the ratio of the ferric hydroxyphosphate with the high iron-phosphorus ratio to the ferric hydroxyphosphate with the low iron-phosphorus ratio is between 2:8 and 8:2, and preferably, the ratio of the ferric hydroxyphosphate with the high iron-phosphorus ratio to the ferric hydroxyphosphate with the low iron-phosphorus ratio satisfies 3:7. Additionally, in the mixed material, according to the molar ratio, Li:Fe:P = [1.03-1.04]:1:[1.03-1.04]. The addition amount of the carbon source is on the basis that a carbon content in a final product is between 1.2%-1.6%.

In this embodiment, the carbon source can be one or more of sucrose, glucose, citric acid, starch and polyethylene glycol, and the additive can be selected from one or more of titanium dioxide, ammonium metavanadate and niobium pentoxide and is controlled at a doping amount between 300-3,000 ppm.

Step S7: the aforementioned mixed material is subjected to sanding to obtain a nano-sized sanded slurry; and the nano-sized sanded slurry is spray-dried to obtain a sprayed material,
wherein, the sanding particle size in the sanded slurry is controlled between 0.45-0.75 µm. In the spray drying, the air inlet temperature can be 200-220°C, the air outlet temperature can be 80-110°C, the air blast frequency can be 80 Hz, and a spraying particle size in the finally formed sprayed material is controlled between D50 = 20-40 µm.

Step S8: the aforementioned sprayed material IS put in a box furnace for sintering to obtain a sintered material, and the sintered material is pulverized through a jet mill to obtain a pulverized material.

In the sintering process, the sintering is conducted in an atmosphere of nitrogen at a sintering temperature of 750-780°C and a heating rate of 3°C/min for a sintering time of 8-12 h, and then natural cooling is conducted to obtain the sintered material; and during the pulverizing process, it is controlled that a gas pressure is between 0.2-0.4 Mpa, a fractionation frequency is 80-200 Hz, and a particle size of the finally obtained pulverized material satisfies: D10 > 0.35 µm, D50 = 0.7-2.0µm , D90 <10 µm, and D100 < 30 µm.

Step S9: the aforementioned pulverized material is further subjected to sieving, blending, packaging and the like procedures to obtain a finished product of lithium iron phosphate.

For the method for preparing lithium iron phosphate from ferric hydroxyphosphate as provided by the third embodiment of the present disclosure, the ferric hydroxyphosphate with the high iron-phosphorus ratio is mixed with the ferric hydroxyphosphate with the low iron-phosphorus ratio, then mixed with iron oxide, lithium phosphate, lithium carbonate and ammonium dihydrogen phosphate according to a certain proportion, and added with the additive to form the mixed material. Subsequently, the mixed material is subjected to sanding, spray drying, sintering, sieving, blending, packaging and the like procedures to obtain the finished product of lithium iron phosphate. In the present method, the ferric hydroxyphosphate with the high iron-phosphorus ratio and the ferric hydroxyphosphate with the low iron-phosphorus ratio are mixed in proportions, and introduced with four materials of iron oxide, lithium phosphate, lithium carbonate and ammonium dihydrogen phosphate. The addition of iron oxide and ammonium dihydrogen phosphate can effectively reduce the cost of materials, increase the viscosity of the subsequent sanded slurry, and improve the stability of the slurry. Additionally, the iron oxide raw material has small primary particles, and the finished product of lithium iron phosphate as prepared has small particles, which effectively improves the rate performance; and ammonium dihydrogen phosphate is used as the phosphorus source to increase gas production and easily reduce particle agglomeration.

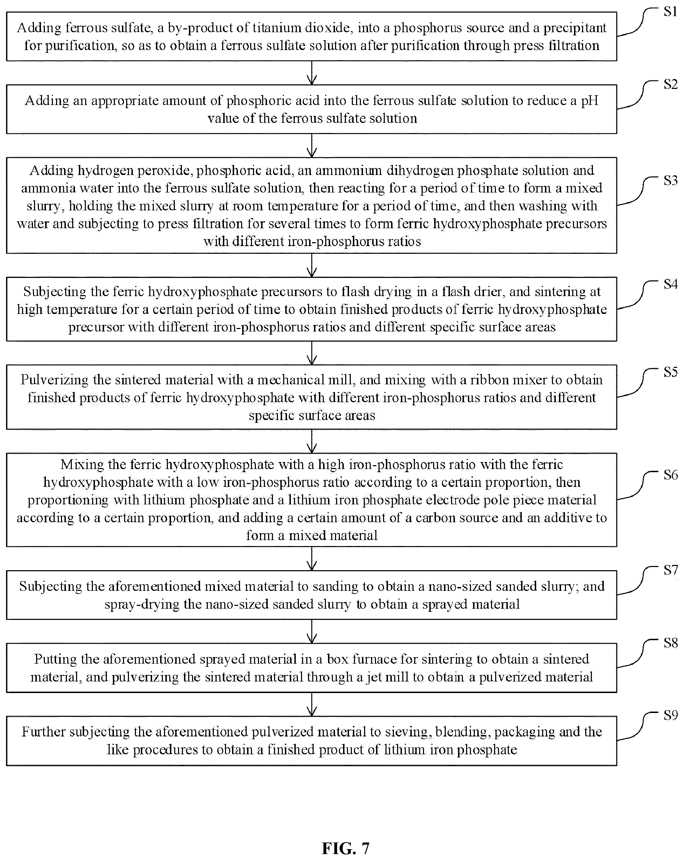

A fourth embodiment of the present disclosure provides a method for preparing lithium iron phosphate from ferric hydroxyphosphate, which is used for preparing lithium iron phosphate with high compaction density and high capacity. As shown in FIG. 7, the present method includes the following steps.

Step S1: ferrous sulfate, a by-product of titanium dioxide, is added into a phosphorus source and a precipitant for purification, so as to obtain a ferrous sulfate solution after purification through press filtration,
wherein, according to a mass ratio, the ferrous sulfate:the phosphorus source:the precipitant = 1:[0.001-0.005]:[0.005-0.007], the purification is conducted at a reaction temperature of 40°C and a reaction pH value of 2.2-2.5 for a reaction time of 1 h.

In this embodiment, the phosphorus source can be one or more of phosphoric acid, monoammonium phosphate, diammonium phosphate, sodium phosphate and the like, and the precipitant can be one or more of sodium hydroxide, potassium hydroxide, lithium hydroxide, ammonia water and the like.

Step S2: an appropriate amount of phosphoric acid is added into the ferrous sulfate solution to reduce a pH value of the ferrous sulfate solution,
wherein the addition amount of phosphoric acid is according to the molar ratio of n(Fe):n(phosphoric acid) = 1:0.15.

Step S3: hydrogen peroxide, phosphoric acid, an ammonium dihydrogen phosphate solution and ammonia water are added into the ferrous sulfate solution, then reacted for a period of time to form a mixed slurry, and the mixed slurry was held at room temperature for a period of time, and then washed with water and subjected to press filtration for several times to form ferric hydroxyphosphate precursors with different iron-phosphorus ratios,
wherein, when an iron-phosphorus feeding ratio in the mixed slurry satisfies an iron-phosphorus molar ratio of Fe/P = 1.475-1.490, the ferric hydroxyphosphate with the high iron-phosphorus ratio can be formed; and when the iron-phosphorus feeding ratio in the mixed slurry satisfies the iron-phosphorus molar ratio of Fe/P = 1.460-1.475, the ferric hydroxyphosphate with the low iron-phosphorus ratio can be generated.

In this embodiment, the concentration of the hydrogen peroxide is between 30%-60%, and the temperature holding time for the mixed slurry at room temperature is 3 h. The number of washing with water can be several, wherein the first time of washing with water mainly washes away impurities magnesium, manganese, sulfur and the like elements, 1:1 diluted ammonia water is added during the last time of washing with water to adjust a pH value to 6.5-7.0, so as to wash away a SO₄²⁻ ion. Specifically, the number of washing with water can be 3, wherein the 1st and 2nd times of washing with water mainly washes away impurities manganese, magnesium, sulfur and the like elements, and 1:1 diluted ammonia water is added during the 3rd time of washing with water to adjust a pH value to 6.5-7.0, so as to wash away a SO₄²⁻ ion.

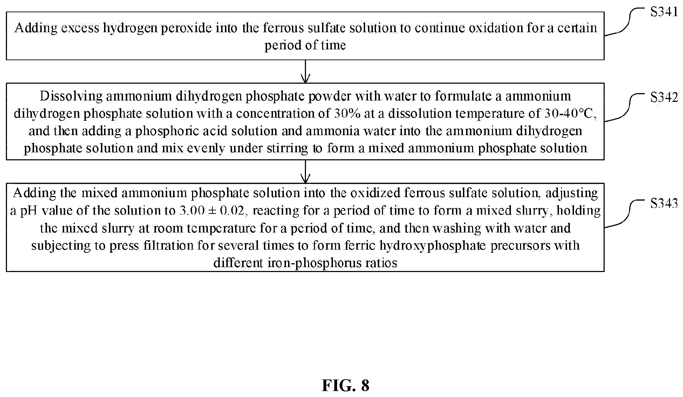

Specifically, in this embodiment, as shown in FIG. 8, the step S3 includes:
step S341: adding excess hydrogen peroxide into the ferrous sulfate solution to continue oxidation for a certain period of time;
step S342: dissolving ammonium dihydrogen phosphate powder with water to formulate a ammonium dihydrogen phosphate solution with a concentration of 30% at a dissolution temperature of 30-40°C, and then adding a phosphoric acid solution and ammonia water into the ammonium dihydrogen phosphate solution and mix evenly under stirring to form a mixed ammonium phosphate solution; and
step S343: adding the mixed ammonium phosphate solution into the oxidized ferrous sulfate solution, adjusting a pH value of the solution to 3.00 ± 0.02, reacting for a period of time to form a mixed slurry, holding the mixed slurry at room temperature for a period of time, and then washing with water and subjecting to press filtration for several times to form ferric hydroxyphosphate precursors with different iron-phosphorus ratios.

Step S4: the ferric hydroxyphosphate precursors were subjected to flash drying in a flash drier, and sintered at high temperature for a certain period of time to obtain finished products of ferric hydroxyphosphate precursor with different iron-phosphorus ratios and different specific surface areas,
wherein, the flash drying of the ferric hydroxyphosphate precursors is to remove free water, and it is controlled that the air inlet temperature of the flash drier is 220 ± 20°C and the air outlet temperature is 110 ± 5°C. The sintering is conducted in an atmosphere of air at a temperature of 535-560°C for a time of 4-5 h.

Step S5: the sintered material is pulverized with a mechanical mill, and mixed with a ribbon mixer to obtain finished products of ferric hydroxyphosphate with different iron-phosphorus ratios and different specific surface areas,
wherein, during the pulverizing process, the particle size is controlled at D10 ≥ 1.0 µm, D50: 6-15 µm, and D90 ≤ 60 µm. The mixing frequency of the mixer is controlled at 35 ± 2 Hz, and the mixing time can be 1-2 h.

In this embodiment, the ferric hydroxyphosphate with the high iron-phosphorus ratio has a high specific surface area that satisfies BET = 15-20 m²/g and the that satisfies Fe/P = 1.460-1.480; and the ferric hydroxyphosphate precursor with the low iron-phosphorus ratio has a lower specific surface area that satisfies BET = 5-10 m²/g and the iron-phosphorus molar ratio that satisfies Fe/P = 1.440-1.460.
step S6: mixing the ferric hydroxyphosphate with a high iron-phosphorus ratio with the ferric hydroxyphosphate with a low iron-phosphorus ratio according to a certain proportion, then proportioning with lithium phosphate and a lithium iron phosphate electrode pole piece material according to a certain proportion, and adding a certain amount of a carbon source and an additive to form a mixed material;

Preferably, the lithium iron phosphate electrode pole piece material can be prepared from recycled waste lithium iron phosphate positive electrode pole piece, so as to reduce the material cost. Specifically, the lithium iron phosphate electrode pole piece material can be prepared by the following method: pulverizing a waste lithium iron phosphate positive electrode pole piece, and sieving to separate a foil material and a raw material for the lithium iron phosphate pole piece material; sintering the raw material of the lithium iron phosphate pole piece material in an inert atmosphere at a sintering temperature of 400-500°C for a sintering time of 1-4 hours, and then pulverizing to a particle size of 1-5 µm to obtain the lithium iron phosphate electrode pole piece material.

In this embodiment, the ratio of the ferric hydroxyphosphate with the high iron-phosphorus ratio to the ferric hydroxyphosphate with the low iron-phosphorus ratio is between 2:8 and 8:2, and preferably, the ratio of the ferric hydroxyphosphate with the high iron-phosphorus ratio to the ferric hydroxyphosphate with the low iron-phosphorus ratio satisfies 3:7. Additionally, in the mixed material, according to the molar ratio, Li:Fe:P = [1.03-1.04]:1:[1.03-1.04]. In this embodiment, the addition amount of the carbon source is on the basis that a carbon content in a final product is between 1.2%-1.6%.

In this embodiment, the carbon source can be one or more of sucrose, glucose, citric acid, starch and polyethylene glycol, and the additive can be selected from one or more of titanium dioxide, ammonium metavanadate and niobium pentoxide and is controlled at a doping amount between 300-3,000 ppm.

**Step** S7: the aforementioned mixed material is subjected to sanding to obtain a nano-sized sanded slurry; and the nano-sized sanded slurry is spray-dried to obtain a sprayed material,
wherein, the sanding particle size in the sanded slurry is controlled between 0.45-0.75 µm. In the spray drying, the air inlet temperature can be 200-220°C, the air outlet temperature can be 80-110°C, the air blast frequency can be 80 Hz, and a spraying particle size in the finally formed sprayed material is controlled between D50 = 20-40 µm.

Step S8: the aforementioned sprayed material IS put in a box furnace for sintering to obtain a sintered material, and the sintered material is pulverized through a jet mill to obtain a pulverized material.

In the sintering process, the sintering is conducted in an atmosphere of nitrogen at a sintering temperature of 750-780°C and a heating rate of 3°C/min for a sintering time of 8-12 h, and then natural cooling is conducted to obtain the sintered material; and during the pulverizing process, it is controlled that a gas pressure is between 0.2-0.4 Mpa, a fractionation frequency is 80-200 Hz, and a particle size of the finally obtained pulverized material satisfies: D10 > 0.35 µm, D50 = 0.7-2.0µm , D90 <10 µm, and D100 < 30 µm.

Step S9: the aforementioned pulverized material is further subjected to sieving, blending, packaging and the like procedures to obtain a finished product of lithium iron phosphate.

For the method for preparing lithium iron phosphate from ferric hydroxyphosphate as provided by the fourth embodiment of the present disclosure, the ferric hydroxyphosphate with the high iron-phosphorus ratio is mixed with the ferric hydroxyphosphate with the low iron-phosphorus ratio, then mixed with lithium phosphate and the lithium iron phosphate electrode pole piece material according to a certain proportion, and added with the carbon source and the additive to form the mixed material. Subsequently, the mixed material is subjected to sanding, spray drying, sintering, sieving, blending, packaging and the like procedures to obtain the finished product of lithium iron phosphate. In the present disclosure, the ferric hydroxyphosphate with the high iron-phosphorus ratio and the ferric hydroxyphosphate with the low iron-phosphorus ratio are mixed in proportions, and introduced with lithium phosphate and the lithium iron phosphate electrode pole piece material prepared from the recycled waste lithium iron phosphate positive electrode pole piece. The recycled lithium iron phosphate electrode pole piece material can greatly reduce the material cost, and conduct resource recovery and reuse of the waste lithium iron phosphate electrode pole piece material. During the sintering process, the lithium iron phosphate electrode pole piece material is beneficial to provide steric hindrance, reduce the agglomeration of the lithium iron phosphate particles, and improve the roundness of the lithium iron phosphate particles, thereby improving the compaction density and electrochemical performance of the lithium iron phosphate material.

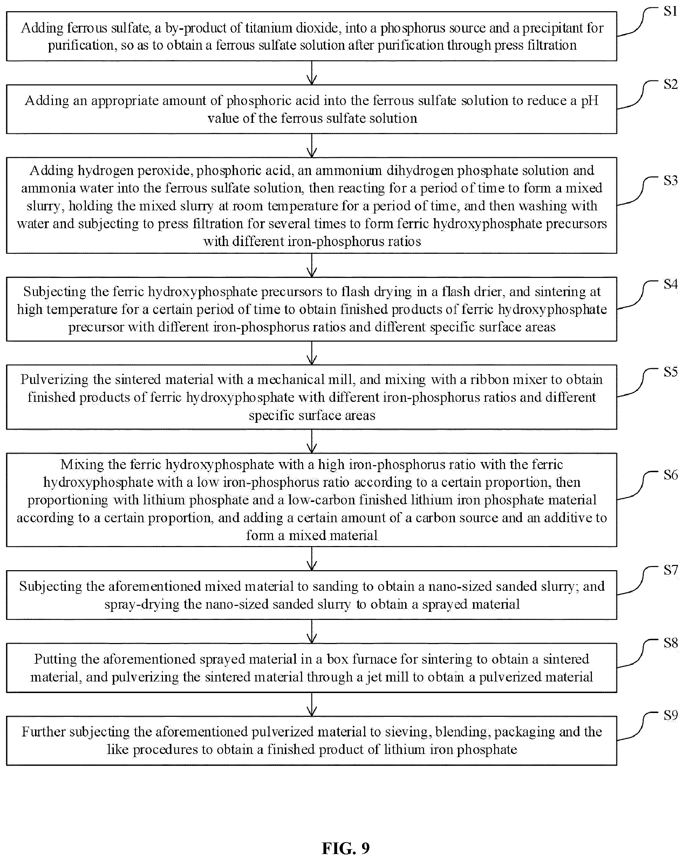

A fifth embodiment of the present disclosure provides a method for preparing lithium iron phosphate from ferric hydroxyphosphate, which is used for preparing lithium iron phosphate with high compaction density and high capacity. As shown in FIG. 9, the present method includes the following steps.

Step S1: ferrous sulfate, a by-product of titanium dioxide, is added into a phosphorus source and a precipitant for purification, so as to obtain a ferrous sulfate solution after purification through press filtration,
wherein, according to a mass ratio, the ferrous sulfate:the phosphorus source:the precipitant = 1:[0.001-0.005]:[0.005-0.007], the purification is conducted at a reaction temperature of 40°C and a reaction pH value of 2.2-2.5 for a reaction time of 1 h.

In this embodiment, the phosphorus source can be one or more of phosphoric acid, monoammonium phosphate, diammonium phosphate, sodium phosphate and the like, and the precipitant can be one or more of sodium hydroxide, potassium hydroxide, lithium hydroxide, ammonia water and the like.

Step S2: an appropriate amount of phosphoric acid is added into the ferrous sulfate solution to reduce a pH value of the ferrous sulfate solution,
wherein the addition amount of phosphoric acid is according to the molar ratio of n(Fe):n(phosphoric acid) = 1:0.15.

Step S3: hydrogen peroxide, phosphoric acid, an ammonium dihydrogen phosphate solution and ammonia water are added into the ferrous sulfate solution, then reacted for a period of time to form a mixed slurry, and the mixed slurry was held at room temperature for a period of time, and then washed with water and subjected to press filtration for several times to form ferric hydroxyphosphate precursors with different iron-phosphorus ratios,
wherein, when an iron-phosphorus feeding ratio in the mixed slurry satisfies an iron-phosphorus molar ratio of Fe/P = 1.475-1.490, the ferric hydroxyphosphate with the high iron-phosphorus ratio can be formed; and when the iron-phosphorus feeding ratio in the mixed slurry satisfies the iron-phosphorus molar ratio of Fe/P = 1.460-1.475, the ferric hydroxyphosphate with the low iron-phosphorus ratio can be generated.

In this embodiment, the concentration of the hydrogen peroxide is between 30%-60%, and the temperature holding time is 3 h. The number of washing with water can be several, wherein the first time of washing with water mainly washes away impurities magnesium, manganese, sulfur and the like elements, 1:1 diluted ammonia water is added during the last time of washing with water to adjust a pH value to 6.5-7.0, so as to wash away a SO₄²⁻ ion. Specifically, the number of washing with water can be 3, wherein the 1st and 2nd times of washing with water mainly washes away impurities manganese, magnesium, sulfur and the like elements, and 1:1 diluted ammonia water is added during the 3rd time of washing with water to adjust a pH value to 6.5-7.0, so as to wash away a SO₄²⁻ ion.

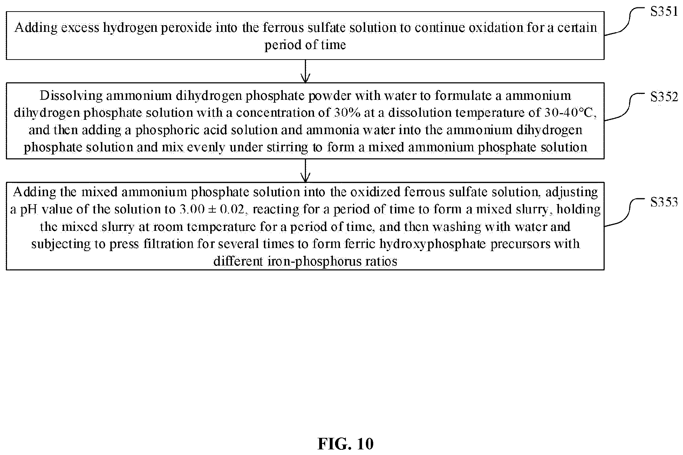

Specifically, in this embodiment, as shown in FIG. 10, the step S3 includes:
step S351: adding excess hydrogen peroxide into the ferrous sulfate solution to continue oxidation for a certain period of time;
step S352: dissolving ammonium dihydrogen phosphate powder with water to formulate a ammonium dihydrogen phosphate solution with a concentration of 30% at a dissolution temperature of 30-40°C, and then adding a phosphoric acid solution and ammonia water into the ammonium dihydrogen phosphate solution and mix evenly under stirring to form a mixed ammonium phosphate solution; and
step S353: adding the mixed ammonium phosphate solution into the oxidized ferrous sulfate solution, adjusting a pH value of the solution to 3.00 ± 0.02, reacting for a period of time to form a mixed slurry, holding the mixed slurry at room temperature for a period of time, and then washing with water and subjecting to press filtration for several times to form ferric hydroxyphosphate precursors with different iron-phosphorus ratios.

Step S4: the ferric hydroxyphosphate precursors were subjected to flash drying in a flash drier, and sintered at high temperature for a certain period of time to obtain finished products of ferric hydroxyphosphate precursor with different iron-phosphorus ratios and different specific surface areas,
wherein, the flash drying of the ferric hydroxyphosphate precursors is to remove free water, and it is controlled that the air inlet temperature of the flash drier is 220 ± 20°C and the air outlet temperature is 110 ± 5°C. The sintering is conducted in an atmosphere of air at a temperature of 535-560°C for a time of 4-5 h.

Step S5: the sintered material is pulverized with a mechanical mill, and mixed with a ribbon mixer to obtain finished products of ferric hydroxyphosphate with different iron-phosphorus ratios and different specific surface areas,
wherein, during the pulverizing process, the particle size is controlled at D10 ≥ 1.0 µm, D50: 6-15 µm, and D90 ≤ 60 µm. The mixing frequency of the mixer is controlled at 35 ± 2 Hz, and the mixing time can be 1-2 h.

In this embodiment, the ferric hydroxyphosphate with the high iron-phosphorus ratio has a high specific surface area that satisfies BET = 15-20 m²/g and the that satisfies Fe/P = 1.460-1.480; and the ferric hydroxyphosphate precursor with the low iron-phosphorus ratio has a lower specific surface area that satisfies BET = 5-10 m²/g and the iron-phosphorus molar ratio that satisfies Fe/P = 1.440-1.460.
step S6: mixing the ferric hydroxyphosphate with a high iron-phosphorus ratio with the ferric hydroxyphosphate with a low iron-phosphorus ratio according to a certain proportion, then proportioning with lithium phosphate and a low-carbon finished lithium iron phosphate material according to a certain proportion, and adding a certain amount of a carbon source and an additive to form a mixed material;

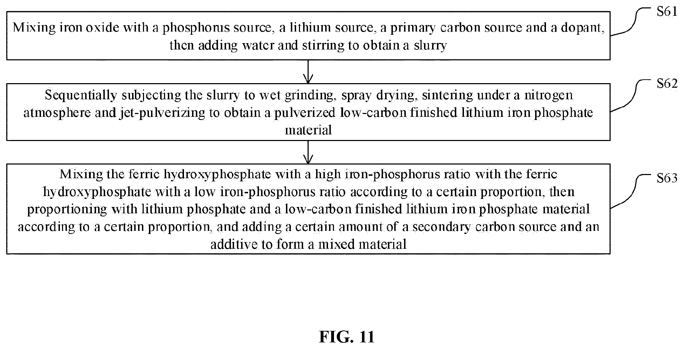

In this embodiment, the carbon content in the low-carbon finished lithium iron phosphate material is between 0.2%-0.5%. Specifically, in this embodiment, as shown in FIG. 11, the step S6 includes:
step S61: mixing iron oxide with a phosphorus source, a lithium source, a primary carbon source and a dopant to obtain a mixed material, then adding water and stirring to obtain a slurry;
   wherein, the phosphorus source can be one or more of phosphoric acid , ammonium dihydrogen phosphate and diammonium hydrogen phosphate, the lithium source can be lithium carbonate and/or lithium hydroxide, the primary carbon source can be one or more of sucrose, glucose, citric acid, starch and polyethylene glycol, a molar ratio of the iron in the iron oxide to the phosphorus in the phosphorus source is n(Fe):n(P) = (0.96-1):1, a molar ratio of the lithium in the lithium source to the iron in the iron oxide is n(Li):n(Fe) = (1.02-1.05):1, the dopant is a metal oxide, and the metal is at least one of Ti, V, Nb and Mg;
step S62: sequentially subjecting the slurry to wet grinding, spray drying, sintering under a nitrogen atmosphere and jet-pulverizing to obtain a pulverized low-carbon finished lithium iron phosphate material,
   wherein, the sintering temperature is 500-600°C, the sintering time is 6-10 h, and the sintering pressure is 50-200 Pa; and
step S63: mixing the ferric hydroxyphosphate with a high iron-phosphorus ratio with the ferric hydroxyphosphate with a low iron-phosphorus ratio according to a certain proportion, then proportioning with lithium phosphate and a low-carbon finished lithium iron phosphate material according to a certain proportion, and adding a certain amount of a secondary carbon source and an additive to form a mixed material.

Preferably, the ratio of the ferric hydroxyphosphate with the high iron-phosphorus ratio to the ferric hydroxyphosphate with the low iron-phosphorus ratio is between 2:8 and 8:2, and preferably, the ratio of the ferric hydroxyphosphate with the high iron-phosphorus ratio to the ferric hydroxyphosphate with the low iron-phosphorus ratio satisfies 3:7. Additionally, in the mixed material, according to the molar ratio, Li:Fe:P = [1.03-1.04]:1:[1.03-1.04].

In this embodiment, the secondary carbon source can be one or more of sucrose, glucose, citric acid, starch and polyethylene glycol, and the addition mount of the primary carbon source and the secondary carbon source is on the basis that the carbon content in the final product is between 1.2%-1.6%. The additive can be selected from one or more of titanium dioxide, ammonium metavanadate and niobium pentoxide and is controlled at a doping amount between 300-3,000 ppm.

Step S7: the aforementioned mixed material is subjected to sanding to obtain a nano-sized sanded slurry; and the nano-sized sanded slurry is spray-dried to obtain a sprayed material,
wherein, the sanding particle size in the sanded slurry is controlled between 0.45-0.75 µm. In the spray drying, the air inlet temperature can be 200-220°C, the air outlet temperature can be 80-110°C, the air blast frequency can be 80 Hz, and a spraying particle size in the finally formed sprayed material is controlled between D50 = 20-40 µm.

Step S8: the aforementioned sprayed material IS put in a box furnace for sintering to obtain a sintered material, and the sintered material is pulverized through a jet mill to obtain a pulverized material.

In the sintering process, the sintering is conducted in an atmosphere of nitrogen at a sintering temperature of 750-780°C and a heating rate of 3°C/min for a sintering time of 8-12 h, and then natural cooling is conducted to obtain the sintered material; and during the pulverizing process, it is controlled that a gas pressure is between 0.2-0.4 Mpa, a fractionation frequency is 80-200 Hz, and a particle size of the finally obtained pulverized material satisfies: D10 > 0.35 µm, D50 = 0.7-2.0µm , D90 <10 µm, and D100 < 30 µm.

Step S9: the aforementioned pulverized material is further subjected to sieving, blending, packaging and the like procedures to obtain a finished product of lithium iron phosphate.

For the method for preparing lithium iron phosphate from ferric hydroxyphosphate as provided by the fifth embodiment of the present disclosure, the ferric hydroxyphosphate with the high iron-phosphorus ratio is mixed with the ferric hydroxyphosphate with the low iron-phosphorus ratio, then mixed with lithium phosphate and the low-carbon finished lithium iron phosphate material according to a certain proportion, and added with the carbon source and the additive to form the mixed material. Subsequently, the mixed material is subjected to sanding, spray drying, sintering, sieving, blending, packaging and the like procedures to obtain the finished product of lithium iron phosphate. In the present method, the ferric hydroxyphosphate with the high iron-phosphorus ratio and the ferric hydroxyphosphate with the low iron-phosphorus ratio are mixed in proportions, and by introducing lithium phosphate and the low-carbon finished lithium iron phosphate material, during the sintering process, the low-carbon finished lithium iron phosphate material is difficult to grow up for the second time, and meanwhile it can increase the steric hindrance, reduce the agglomeration of the lithium iron phosphate particles, improve the roundness of the lithium iron phosphate particles and provide more smaller particles, thereby improving the compaction density and electrochemical performance of the lithium iron phosphate material.

The specific process and effect of the method for preparing lithium iron phosphate by using the ferric hydroxyphosphate of the present disclosure will be further described in detail below in conjunction with some specific examples.

### Example 1

This example provided a method for preparing lithium iron phosphate from ferric hydroxyphosphate, including the following steps.

Step S1: ferrous sulfate, a by-product of titanium dioxide, was added into phosphoric acid with a mass fraction of 4‰ and a hydroxide sodium solution with a mass fraction of 5‰, and purified by press filtration to obtain a ferrous sulfate solution.

Step S2: according to a molar ratio of n(Fe): n(phosphoric acid) = 1:0.15, phosphoric acid was added into the ferrous sulfate solution to reduce the pH value of the ferrous sulfate solution.

Step S3: the ferrous sulfate solution was added with excessive hydrogen peroxide with a concentration of 40%, then added with a phosphoric acid solution and a ammonium dihydrogen phosphate solution with a concentration of 30% to make the iron-phosphorus feeding ratio in the mixed slurry successively satisfies iron-phosphorus molar ratios of Fe/P = 1.490 and Fe/P = 1.460, and then added with ammonia water to form a mixed slurry, and the mixed slurry was held at room temperature for 3 h, then washed with water and subjected to press filtration to form ferric hydroxyphosphate precursors with different iron-phosphorus ratios.

Step S4: the ferric hydroxyphosphate precursors were subjected to flash drying in a flash drier with an air inlet temperature of the flash drier controlled to be 200°C, and sintered in an air atmosphere at a high temperature of 535°C and 560°C for 5 h.

Step S5: the sintered material was pulverized with a mechanical mill to controlled particle sizes of D10 ≥ 1.0 µm, D50: 6-15 µm, and D90 ≤ 60 µm, and mixed with a ribbon mixer at a frequency of 35 Hz for 1 h to obtain a finished product of ferric hydroxyphosphate containing the ferric hydroxyphosphate with a high iron-phosphorus ratio and a high specific surface area and the ferric hydroxyphosphate product with a low iron-phosphorus ratio and a low specific surface area.

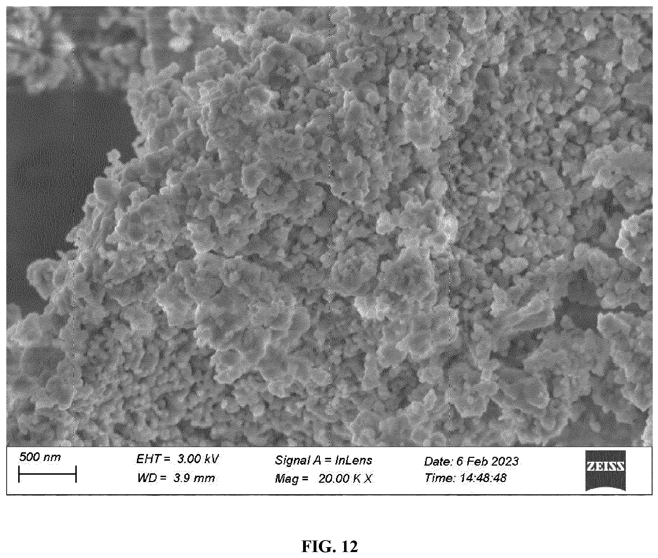

The SEM spectrogram of the ferric hydroxyphosphate with a high iron-phosphorus ratio and a high specific surface area prepared according to Example 1 was shown in FIG. 12.

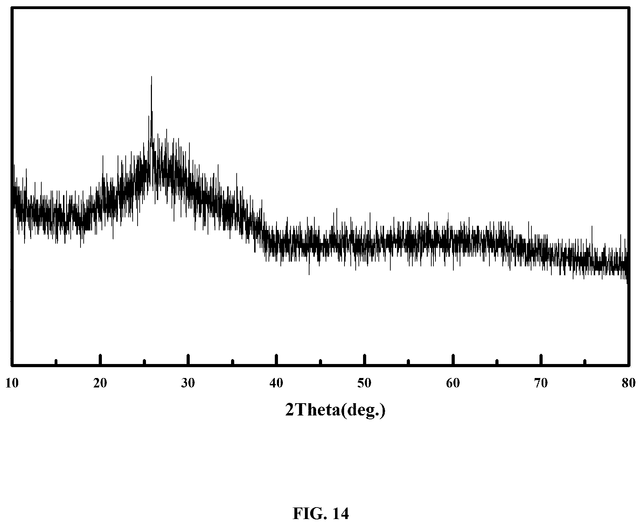

The XRD spectrogram of the ferric hydroxyphosphate with a high iron-phosphorus ratio and a high specific surface area prepared according to Example 1 was shown in FIG. 14.

Step S6: the ferric hydroxyphosphate with a high iron-phosphorus ratio and a high specific surface area was mixed with the ferric hydroxyphosphate product with a low iron-phosphorus ratio and a low specific surface area according to proportion of 3:7, then proportioned with lithium phosphate according to a molar ratio of Li:Fe:P = 1.03:1:1.03, and added with a carbon source mixture that made the carbon content of the finished product be 1.3% and composed of sucrose and polyethylene glycol and titanium dioxide of a doping amount of 2,500 ppm, to form a mixed material.

Step S7: the aforementioned mixed material was sanded to a controlled sanding particle size of 0.60 µm, so as to obtain a nano-sized sanded slurry; the nano-sized sanded slurry was spray dried with an air inlet temperature being controlled at 220°C, an air outlet temperature being controlled at 100°C, and an air blast frequency being controlled at 80 Hz, so as to obtain a sprayed material with a spraying particle size of D50 = 20-40 µm.

Step S8: the aforementioned sprayed material was put into a box furnace, sintered under a nitrogen atmosphere at a heating rate of 3°C/min and a sintering temperature of 760°C for a sintering time of 10 h, and then naturally cooled to obtain a sintered material, and the sintered material was pulverized through a jet mill at a gas pressure controlled at 0.3 Mpa and a fractionation frequency of 130 Hz to obtain a pulverized material with particle sizes of D10 > 0.35 µm, D50 = 0.8-1.8 µm, D90 < 10 µm, and D100 < 30 µm.

Step S9: the aforementioned pulverized material was further subjected to sieving, blending, packaging and the like procedures to obtain a finished product of lithium iron phosphate.

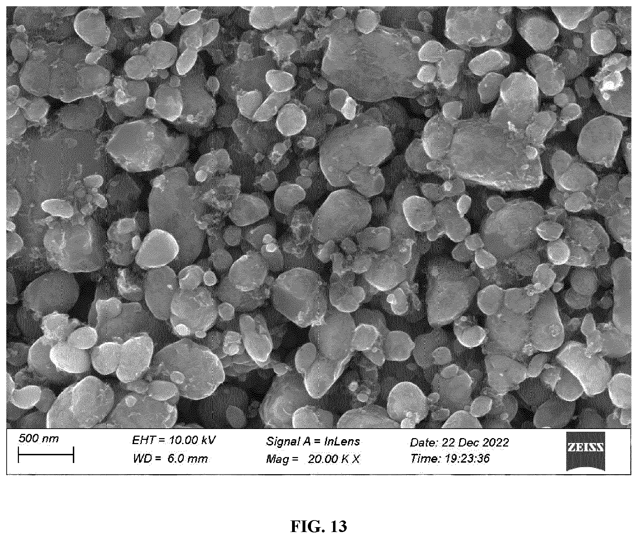

The SEM spectrogram of the lithium iron phosphate positive electrode material prepared according to Example 1 was shown in FIG. 13.

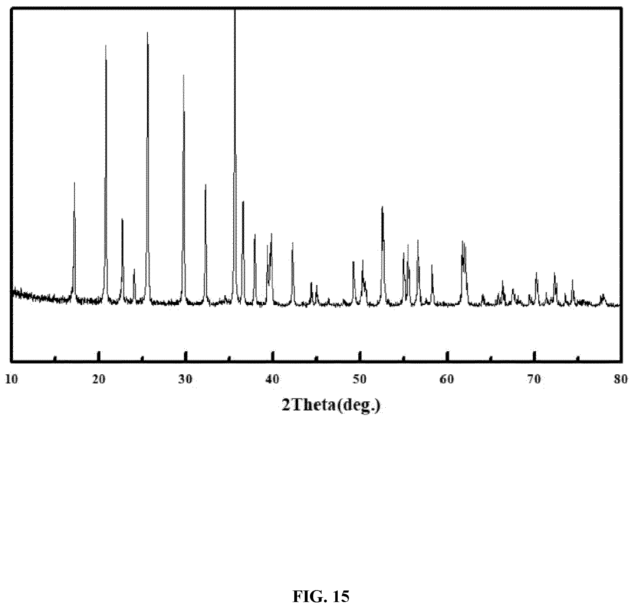

The XRD spectrogram of the lithium iron phosphate positive electrode material prepared according to Example 1 was shown in FIG. 15.

### Example 2

This example provided a method for preparing lithium iron phosphate from ferric hydroxyphosphate, including the following steps.

Step S1: ferrous sulfate, a by-product of titanium dioxide, was added into phosphoric acid with a mass fraction of 4‰ and a hydroxide sodium solution with a mass fraction of 5‰, and purified by press filtration to obtain a ferrous sulfate solution.

Step S2: according to a molar ratio of n(Fe): n(phosphoric acid) = 1:0.15, phosphoric acid was added into the ferrous sulfate solution to reduce the pH value of the ferrous sulfate solution.

Step S3: the ferrous sulfate solution was added with excessive hydrogen peroxide with a concentration of 40%, then added with a phosphoric acid solution and a ammonium dihydrogen phosphate solution with a concentration of 30% to make the iron-phosphorus feeding ratio in the mixed slurry successively satisfies iron-phosphorus molar ratios of Fe/P = 1.490 and Fe/P = 1.460, and then added with ammonia water to form a mixed slurry, and the mixed slurry was heated to a temperature of 60°C and held at this temperature for 3 h, then washed with water and subjected to press filtration for several times to form ferric hydroxyphosphate precursors with different iron-phosphorus ratios.

Step S4: the ferric hydroxyphosphate precursors were subjected to flash drying in a flash drier with an air inlet temperature of the flash drier controlled to be 200°C, and sintered in an air atmosphere at a high temperature of 535°C and 560°C for 5 h.

Step S5: the sintered material was pulverized with a mechanical mill to controlled particle sizes of D10 ≥ 1.0 µm, D50: 6-15 µm, and D90 ≤ 60 µm, and mixed with a ribbon mixer at a frequency of 35 Hz for 1 h to obtain ferric hydroxyphosphate containing the ferric hydroxyphosphate with a high iron-phosphorus ratio and a high specific surface area and the ferric hydroxyphosphate product with a low iron-phosphorus ratio and a low specific surface area.

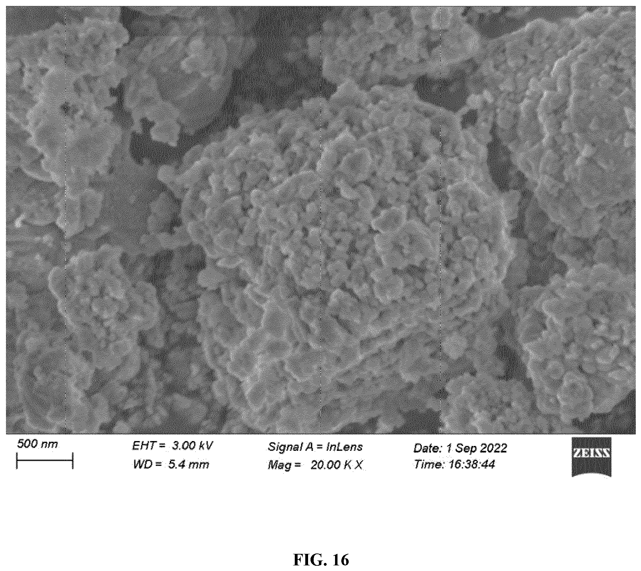

The SEM spectrogram of the ferric hydroxyphosphate with a high iron-phosphorus ratio and a high specific surface area prepared according to Example 2 was shown in FIG. 16.

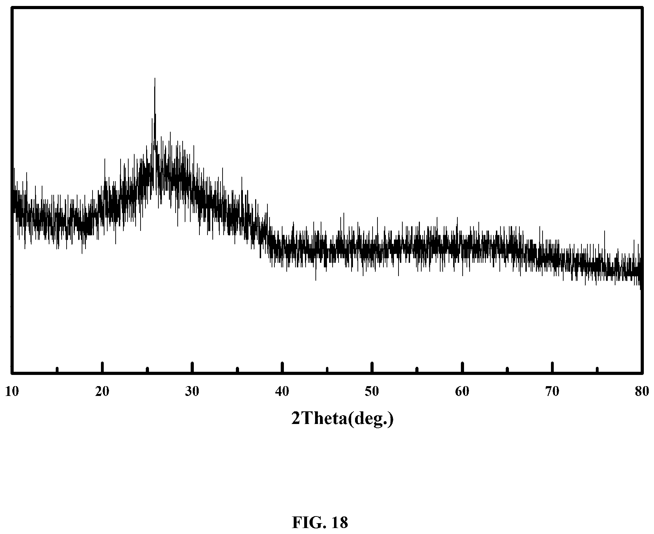

The XRD spectrogram of the ferric hydroxyphosphate with a high iron-phosphorus ratio and a high specific surface area prepared according to Example 2 was shown in FIG. 18.

Step S6: the ferric hydroxyphosphate with a high iron-phosphorus ratio and a high specific surface area was mixed with the ferric hydroxyphosphate product with a low iron-phosphorus ratio and a low specific surface area according to proportion of 3:7, then proportioned with ferric phosphate, lithium phosphate and lithium carbonate according to a molar ratio of Li:Fe:P = 1.03:1:1.03, and added with a carbon source mixture that made the carbon content of the finished product be 1.35% and composed of sucrose and polyethylene glycol and titanium dioxide of a doping amount of 2,200 ppm, to form a mixed material.

Step S7: the aforementioned mixed material was sanded to a controlled sanding particle size of 0.62 µm, so as to obtain a nano-sized sanded slurry; the nano-sized sanded slurry was spray dried with an air inlet temperature being controlled at 220°C, an air outlet temperature being controlled at 100°C, and an air blast frequency being controlled at 80 Hz, so as to obtain a sprayed material with a spraying particle size of D50 = 20-40 µm.

Step S8: the aforementioned sprayed material was put into a box furnace, sintered under a nitrogen atmosphere at a heating rate of 3°C/min and a sintering temperature of 765°C for a sintering time of 10 h, and then naturally cooled to obtain a sintered material, and the sintered material was pulverized through a jet mill at a gas pressure controlled at 0.3 Mpa and a fractionation frequency of 130 Hz to obtain a pulverized material with particle sizes of D10 > 0.35 µm, D50 = 0.8-1.8 µm, D90 < 10 µm, and D100 < 30 µm.

Step S9: the aforementioned pulverized material was further subjected to sieving, blending, packaging and the like procedures to obtain a finished product of lithium iron phosphate.

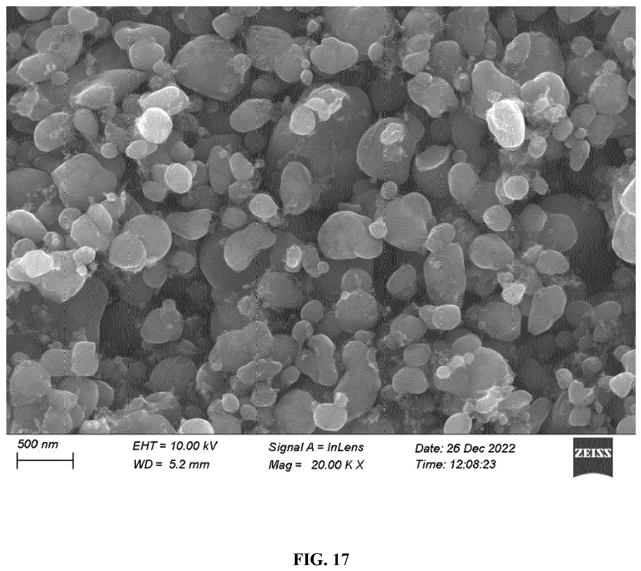

The SEM spectrogram of the lithium iron phosphate positive electrode material prepared according to Example 2 was shown in FIG. 17.

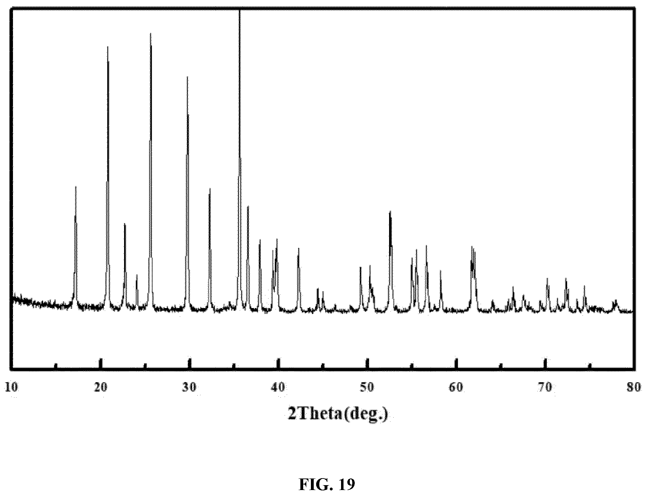

The XRD spectrogram of the lithium iron phosphate positive electrode material prepared according to Example 2 was shown in FIG. 19.

### Example 3

This example provided a method for preparing lithium iron phosphate from ferric hydroxyphosphate, including the following steps.

Step S1: ferrous sulfate, a by-product of titanium dioxide, was added into phosphoric acid with a mass fraction of 4‰ and a hydroxide sodium solution with a mass fraction of 5‰, and purified by press filtration to obtain a ferrous sulfate solution.

Step S2: according to a molar ratio of n(Fe): n(phosphoric acid) = 1:0.15, phosphoric acid was added into the ferrous sulfate solution to reduce the pH value of the ferrous sulfate solution.

Step S3: the ferrous sulfate solution was added with a phosphoric acid solution and a ammonium dihydrogen phosphate solution with a concentration of 30% to make the iron-phosphorus feeding ratio in the mixed slurry successively satisfies iron-phosphorus molar ratios of Fe/P = 1.485 and Fe/P = 1.465, then added with excessive hydrogen peroxide with a concentration of 40%, and then added with ammonia water to form a mixed slurry, and the mixed slurry was heated to a temperature of 60°C and held at this temperature for 3 h, then washed with water and subjected to press filtration for several times to form ferric hydroxyphosphate precursors with different iron-phosphorus ratios.

Step S4: the ferric hydroxyphosphate precursors were subjected to flash drying in a flash drier with an air inlet temperature of the flash drier controlled to be 200°C, and sintered in an air atmosphere at a high temperature of 540°C and 560°C for 5 h.

Step S5: the sintered material was pulverized with a mechanical mill to controlled particle sizes of D10 ≥ 1.0 µm, D50: 6-15 µm, and D90 ≤ 60 µm, and mixed with a ribbon mixer at a frequency of 35 Hz for 1 h to obtain ferric hydroxyphosphate containing the ferric hydroxyphosphate with a high iron-phosphorus ratio and a high specific surface area and the ferric hydroxyphosphate product with a low iron-phosphorus ratio and a low specific surface area.

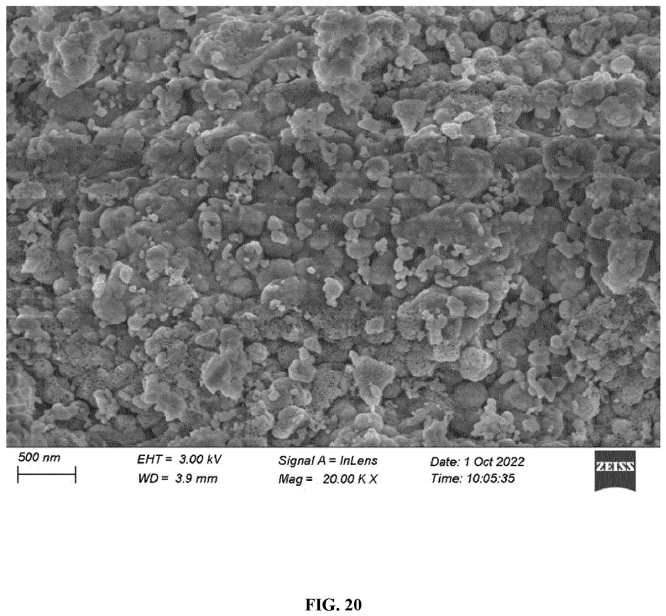

The SEM spectrogram of the ferric hydroxyphosphate with a high iron-phosphorus ratio and a high specific surface area prepared according to Example 3 was shown in FIG. 20.

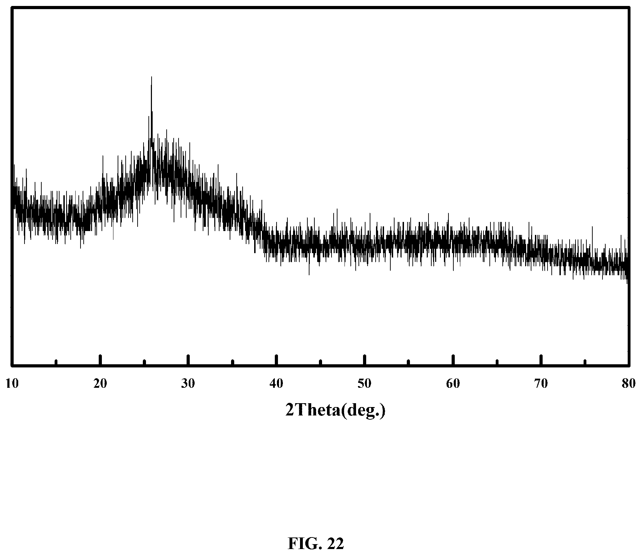

The XRD spectrogram of the ferric hydroxyphosphate with a high iron-phosphorus ratio and a high specific surface area prepared according to Example 3 was shown in FIG. 22.

Step S6: the ferric hydroxyphosphate with a high iron-phosphorus ratio and a high specific surface area was mixed with the ferric hydroxyphosphate product with a low iron-phosphorus ratio and a low specific surface area according to proportion of 3:7, then proportioned with iron oxide, lithium phosphate, lithium carbonate and ammonium dihydrogen phosphate according to a molar ratio of Li:Fe:P = 1.03:1:1.03, and added with a carbon source mixture that made the carbon content of the finished product be 1.3% and composed of sucrose and polyethylene glycol and titanium dioxide of a doping amount of 2,500 ppm, to form a mixed material.

Step S7: the aforementioned mixed material was sanded to a controlled sanding particle size of 0.60 µm, so as to obtain a nano-sized sanded slurry; the nano-sized sanded slurry was spray dried with an air inlet temperature being controlled at 220°C, an air outlet temperature being controlled at 100°C, and an air blast frequency being controlled at 80 Hz, so as to obtain a sprayed material with a spraying particle size of D50 = 20-40 µm.

Step S8: the aforementioned sprayed material was put into a box furnace, sintered under a nitrogen atmosphere at a heating rate of 3°C/min and a sintering temperature of 760°C for a sintering time of 10 h, and then naturally cooled to obtain a sintered material, and the sintered material was pulverized through a jet mill at a gas pressure controlled at 0.3 Mpa and a fractionation frequency of 130 Hz to obtain a pulverized material with particle sizes of D10 > 0.35 µm, D50 = 0.8-1.8 µm, D90 < 10 µm, and D100 < 30 µm.

Step S9: the aforementioned pulverized material was further subjected to sieving, blending, packaging and the like procedures to obtain a finished product of lithium iron phosphate.

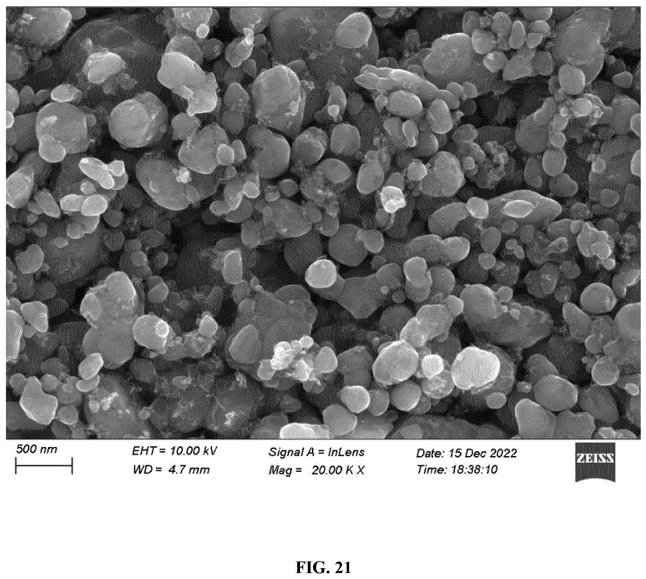

The SEM spectrogram of the lithium iron phosphate positive electrode material prepared according to Example 3 was shown in FIG. 21.

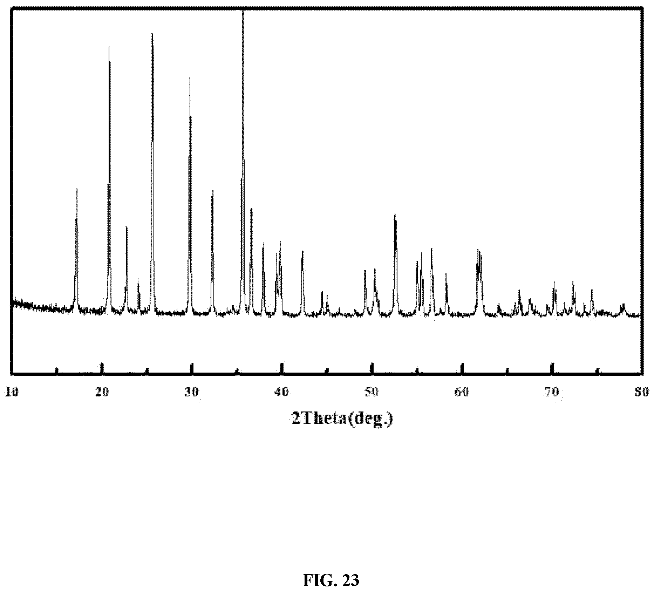

The XRD spectrogram of the lithium iron phosphate positive electrode material prepared according to Example 3 was shown in FIG. 23.

### Example 4

This example provided a method for preparing lithium iron phosphate from ferric hydroxyphosphate, including the following steps.

Step S1: ferrous sulfate, a by-product of titanium dioxide, was added into phosphoric acid with a mass fraction of 4‰ and a hydroxide sodium solution with a mass fraction of 5‰, and purified by press filtration to obtain a ferrous sulfate solution.

Step S2: according to a molar ratio of n(Fe): n(phosphoric acid) = 1:0.15, phosphoric acid was added into the ferrous sulfate solution to reduce the pH value of the ferrous sulfate solution.

Step S3: the ferrous sulfate solution was added with excessive hydrogen peroxide with a concentration of 40%, then added with a phosphoric acid solution and a ammonium dihydrogen phosphate solution with a concentration of 30% to make the iron-phosphorus feeding ratio in the mixed slurry successively satisfies iron-phosphorus molar ratios of Fe/P = 1.490 and Fe/P = 1.460, and then added with ammonia water to form a mixed slurry, and the mixed slurry was held at room temperature for 3 h, then washed with water and subjected to press filtration to form ferric hydroxyphosphate precursors with different iron-phosphorus ratios.

Step S4: the ferric hydroxyphosphate precursors were subjected to flash drying in a flash drier with an air inlet temperature of the flash drier controlled to be 200°C, and sintered in an air atmosphere at a high temperature of 535°C and 555°C for 5 h.

Step S5: the sintered material was pulverized with a mechanical mill to controlled particle sizes of D10 ≥ 1.0 µm, D50: 6-15 µm, and D90 ≤ 60 µm, and mixed with a ribbon mixer at a frequency of 35 Hz for 1 h to obtain ferric hydroxyphosphate containing the ferric hydroxyphosphate with a high iron-phosphorus ratio and a high specific surface area and the ferric hydroxyphosphate product with a low iron-phosphorus ratio and a low specific surface area.

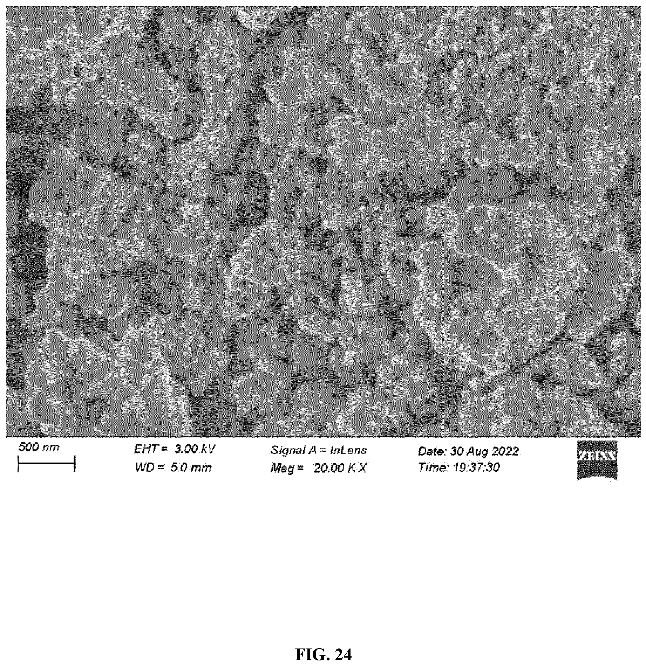

The SEM spectrogram of the ferric hydroxyphosphate with a high iron-phosphorus ratio and a high specific surface area prepared according to Example 4 was shown in FIG. 24.

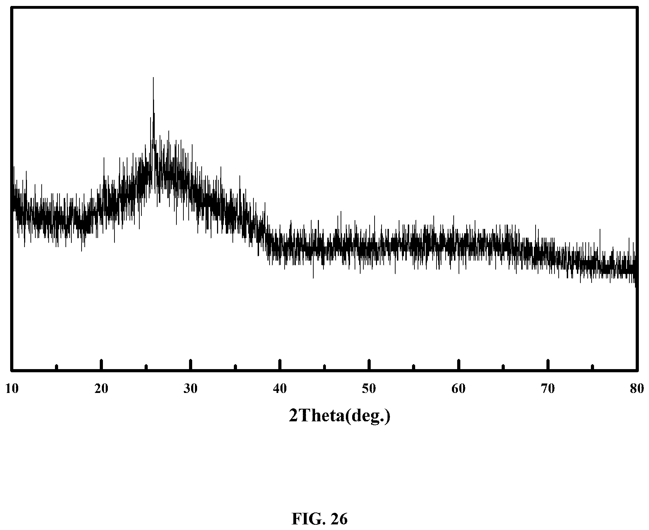

The XRD spectrogram of the ferric hydroxyphosphate with a high iron-phosphorus ratio and a high specific surface area prepared according to Example 4 was shown in FIG. 26.

Step S6: the ferric hydroxyphosphate with a high iron-phosphorus ratio and a high specific surface area was mixed with the ferric hydroxyphosphate product with a low iron-phosphorus ratio and a low specific surface area according to proportion of 3:7, then proportioned with lithium phosphate and a lithium iron phosphate electrode pole piece material according to a molar ratio of Li:Fe:P = 1.03:1:1.03, and added with a carbon source mixture that made the carbon content of the finished product be 1.3% and composed of sucrose and polyethylene glycol and titanium dioxide of a doping amount of 2,800 ppm, to form a mixed material. The lithium iron phosphate electrode pole piece material could be obtained by pulverizing a waste lithium iron phosphate positive electrode pole piece, and sieving to separate a foil material and a raw material for the lithium iron phosphate pole piece material; sintering the raw material of the lithium iron phosphate pole piece material in an inert atmosphere at a sintering temperature of 400°C for a sintering time of 4 hours, and then pulverizing to a particle size of 3 µm.

Step S7: the aforementioned mixed material was sanded to a controlled sanding particle size of 0.60 µm, so as to obtain a nano-sized sanded slurry; the nano-sized sanded slurry was spray dried with an air inlet temperature being controlled at 220°C, an air outlet temperature being controlled at 100°C, and an air blast frequency being controlled at 80 Hz, so as to obtain a sprayed material with a spraying particle size of D50 = 20-40 µm.

Step S8: the aforementioned sprayed material was put into a box furnace, sintered under a nitrogen atmosphere at a heating rate of 3°C/min and a sintering temperature of 760°C for a sintering time of 10 h, and then naturally cooled to obtain a sintered material, and the sintered material was pulverized through a jet mill at a gas pressure controlled at 0.3 Mpa and a fractionation frequency of 130 Hz to obtain a pulverized material with particle sizes of D10 > 0.35 µm, D50 = 0.8-1.8 µm, D90 < 10 µm, and D100 < 30 µm.

Step S9: the aforementioned pulverized material was further subjected to sieving, blending, packaging and the like procedures to obtain a finished product of lithium iron phosphate.

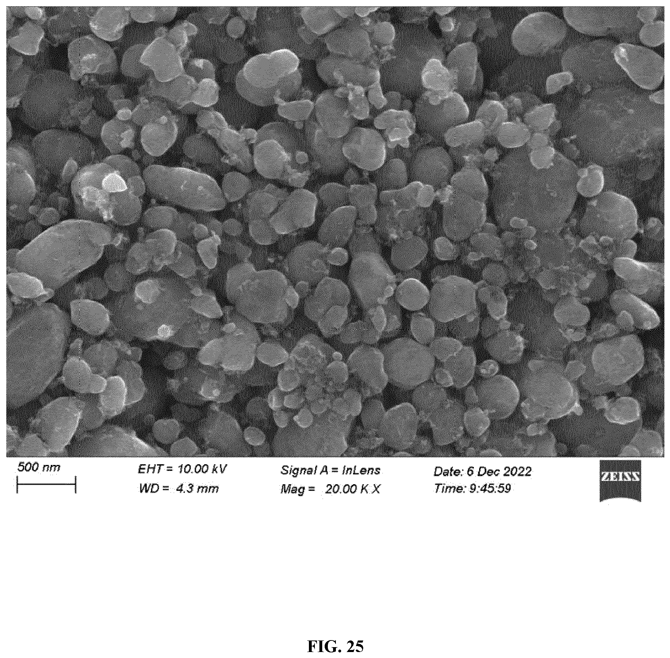

The SEM spectrogram of the lithium iron phosphate positive electrode material prepared according to Example 4 was shown in FIG. 25.

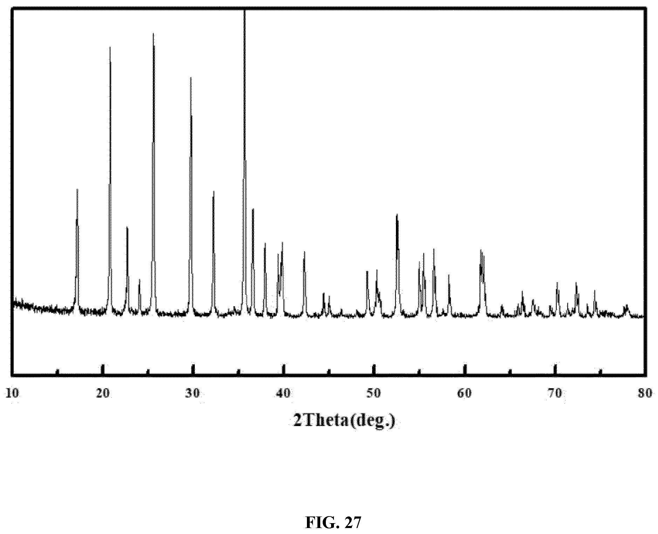

The XRD spectrogram of the lithium iron phosphate positive electrode material prepared according to Example 4 was shown in FIG. 27.

### Example 5

This example provided a method for preparing lithium iron phosphate from ferric hydroxyphosphate and a low-carbon finished lithium iron phosphate material, including the following steps:
Step S1: ferrous sulfate, a by-product of titanium dioxide, was added into phosphoric acid with a mass fraction of 4‰ and a hydroxide sodium solution with a mass fraction of 5‰, and purified by press filtration to obtain a ferrous sulfate solution.
Step S2: according to a molar ratio of n(Fe): n(phosphoric acid) = 1:0.15, phosphoric acid was added into the ferrous sulfate solution to reduce the pH value of the ferrous sulfate solution.
Step S3: the ferrous sulfate solution was added with excessive hydrogen peroxide with a concentration of 40%, then added with a phosphoric acid solution and a ammonium dihydrogen phosphate solution with a concentration of 30% to make the iron-phosphorus feeding ratio in the mixed slurry successively satisfies iron-phosphorus molar ratios of Fe/P = 1.490 and Fe/P = 1.460, and then added with ammonia water to form a mixed slurry, and the mixed slurry was held at room temperature for 3 h, then washed with water and subjected to press filtration to form ferric hydroxyphosphate precursors with different iron-phosphorus ratios.
Step S4: the ferric hydroxyphosphate precursors were subjected to flash drying in a flash drier with an air inlet temperature of the flash drier controlled to be 200°C, and sintered in an air atmosphere at a high temperature of 535°C and 560°C for 5 h.
Step S5: the sintered material was pulverized with a mechanical mill to controlled particle sizes of D10 ≥ 1.0 µm, D50: 6-15 µm, and D90 ≤ 60 µm, and mixed with a ribbon mixer at a frequency of 35 Hz for 1 h to obtain ferric hydroxyphosphate containing the ferric hydroxyphosphate with a high iron-phosphorus ratio and a high specific surface area and the ferric hydroxyphosphate product with a low iron-phosphorus ratio and a low specific surface area.

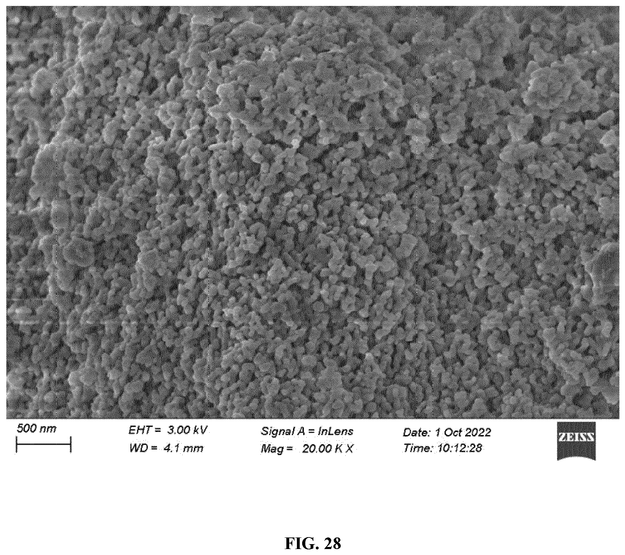

The SEM spectrogram of the ferric hydroxyphosphate with a high iron-phosphorus ratio and a high specific surface area prepared according to Example 5 was shown in FIG. 28.

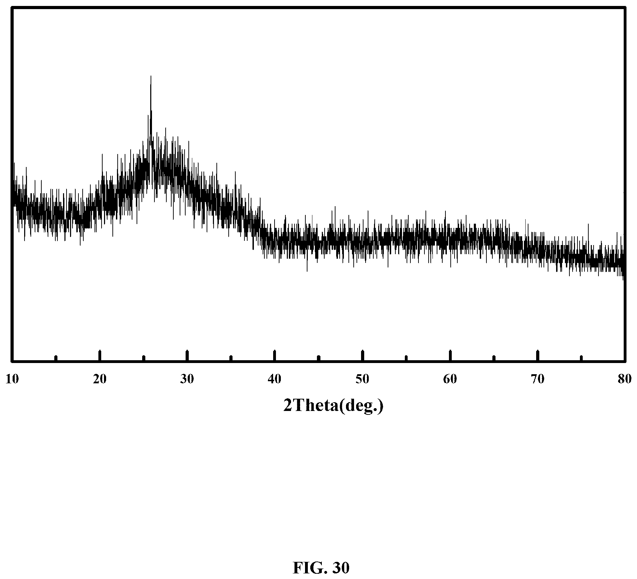

The XRD spectrogram of the ferric hydroxyphosphate with a high iron-phosphorus ratio and a high specific surface area prepared according to Example 5 was shown in FIG. 30.

Step S6: the ferric hydroxyphosphate with a high iron-phosphorus ratio and a high specific surface area was mixed with the ferric hydroxyphosphate product with a low iron-phosphorus ratio and a low specific surface area according to proportion of 3:7, then proportioned with lithium phosphate and the low-carbon finished lithium iron phosphate material according to a molar ratio of Li:Fe:P = 1.03:1:1.03, and added with a carbon source mixture that made the carbon content of the finished product be 1.3% and composed of sucrose and polyethylene glycol and titanium dioxide of a doping amount of 2,500 ppm, to form a mixed material, wherein, key preparation parameters of the low-carbon finished lithium iron phosphate material were that: a particle size of the sanded slurry was controlled to be 0.45µm, 300 ppm of titanium dioxide was doped, a sintering temperature was 500°C, and the sintering time was 8 hours.

Step S7: the aforementioned mixed material was sanded to a controlled sanding particle size of 0.60 µm, so as to obtain a nano-sized sanded slurry; the nano-sized sanded slurry was spray dried with an air inlet temperature being controlled at 220°C, an air outlet temperature being controlled at 100°C, and an air blast frequency being controlled at 80 Hz, so as to obtain a sprayed material with a spraying particle size of D50 = 20-40 µm.

Step S8: the aforementioned sprayed material was put into a box furnace, sintered under a nitrogen atmosphere at a heating rate of 3°C/min and a sintering temperature of 760°C for a sintering time of 10 h, and then naturally cooled to obtain a sintered material, and the sintered material was pulverized through a jet mill at a gas pressure controlled at 0.3 Mpa and a fractionation frequency of 130 Hz to obtain a pulverized material with particle sizes of D10 > 0.35 µm, D50 = 0.8-1.8 µm, D90 < 10 µm, and D100 < 30 µm.

Step S9: the aforementioned pulverized material was further subjected to sieving, blending, packaging and the like procedures to obtain a finished product of lithium iron phosphate.

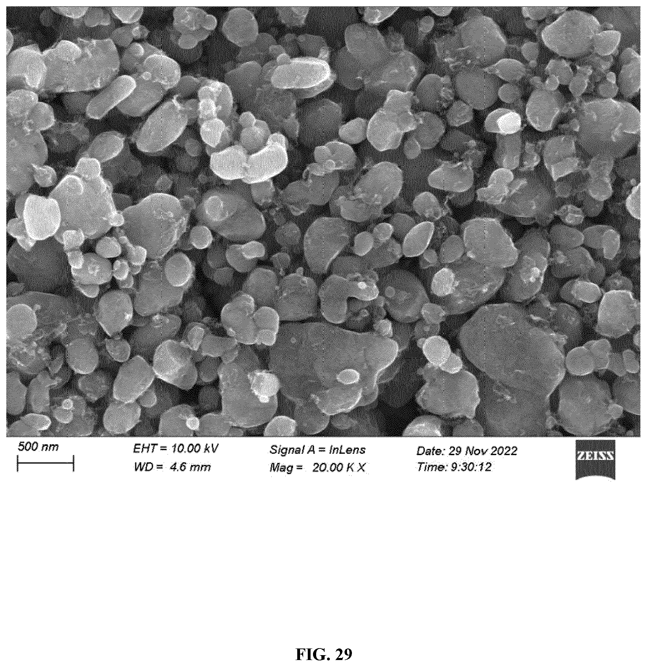

The SEM spectrogram of the lithium iron phosphate positive electrode material prepared according to Example 5 was shown in FIG. 29.

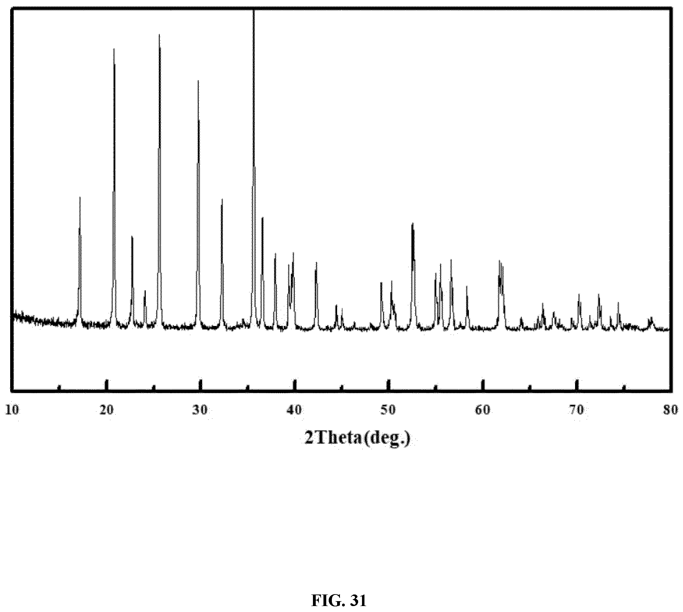

The XRD spectrogram of the lithium iron phosphate positive electrode material prepared according to Example 5 was shown in FIG. 31.

### Comparative Example 1

This example provided a method for preparing lithium iron phosphate from ferric hydroxyphosphate, including the following steps.

Step S1: ferrous sulfate, a by-product of titanium dioxide, was added into phosphoric acid with a mass fraction of 6‰ and a hydroxide sodium solution with a mass fraction of 4‰, and purified by press filtration to obtain a ferrous sulfate solution.

Step S2: according to a molar ratio of n(Fe): n(phosphoric acid) = 1:0.15, phosphoric acid was added into the ferrous sulfate solution to reduce the pH value of the ferrous sulfate solution.

Step S3: the ferrous sulfate solution was added with excessive hydrogen peroxide with a concentration of 10%, then added with a phosphoric acid solution and a ammonium dihydrogen phosphate solution with a concentration of 30% to make the iron-phosphorus feeding ratio satisfies an iron-phosphorus molar ratio of Fe/P = 1.440, and then added with ammonia water to form a mixed slurry, and the mixed slurry was held at room temperature for 2 h, then washed with water and subjected to press filtration to form a ferric hydroxyphosphate precursor.

Step S4: the ferric hydroxyphosphate precursor was subjected to flash drying in a flash drier with an air inlet temperature of the flash drier controlled to be 200°C, and sintered in an air atmosphere at a high temperature of 520°C for 2 h.

Step S5: the sintered material was pulverized with a mechanical mill to controlled particle sizes of D10 ≥ 1.0 µm, D50: 6-15 µm, and D90 ≤ 60 µm, and mixed with a ribbon mixer at 35 Hz for 1 h to obtain a finished product of ferric hydroxyphosphate with a single iron-phosphorus ratio and a single specific surface area.

Step S6: the ferric hydroxyphosphate was proportioned with lithium phosphate according to a molar ratio of Li:Fe:P = 1.03:1:1.03, and added with a mixture that made the carbon content of the finished product be 1.2% and composed of sucrose and polyethylene glycol and titanium dioxide of a doping amount of 3,000 ppm, to form a mixed material.

Step S7: the aforementioned mixed material was sanded to a controlled sanding particle size of 0.65 µm, so as to obtain a nano-sized sanded slurry; the nano-sized sanded slurry was spray dried with an air inlet temperature being controlled at 220°C, an air outlet temperature being controlled at 100°C, and an air blast frequency being controlled at 80 Hz, so as to obtain a sprayed material with a spraying particle size of D50 = 20-40 µm.

Step S8: the aforementioned sprayed material was put into a box furnace, sintered under a nitrogen atmosphere at a heating rate of 3°C/min and a sintering temperature of 765°C for a sintering time of 10 h, and then naturally cooled to obtain a sintered material, and the sintered material was pulverized through a jet mill at a gas pressure controlled at 0.35 Mpa and a fractionation frequency of 140 Hz to obtain a pulverized material with particle sizes of D10 > 0.35 µm, D50 = 0.8-1.8 µm, D90 < 10 µm, and D100 < 30 µm.

Step S9: the aforementioned pulverized material was further subjected to sieving, blending, packaging and the like procedures to obtain a finished product of lithium iron phosphate.

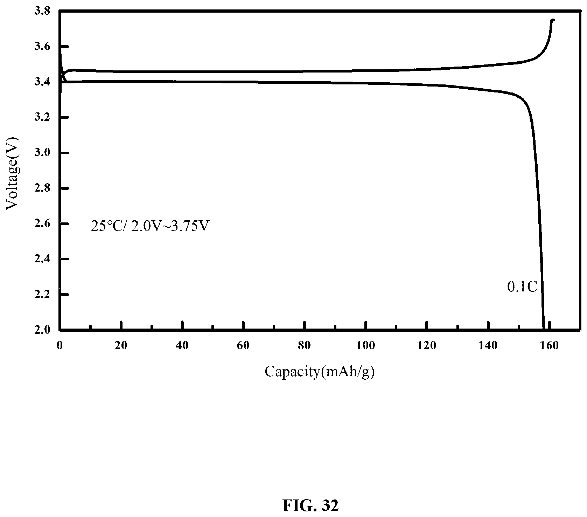

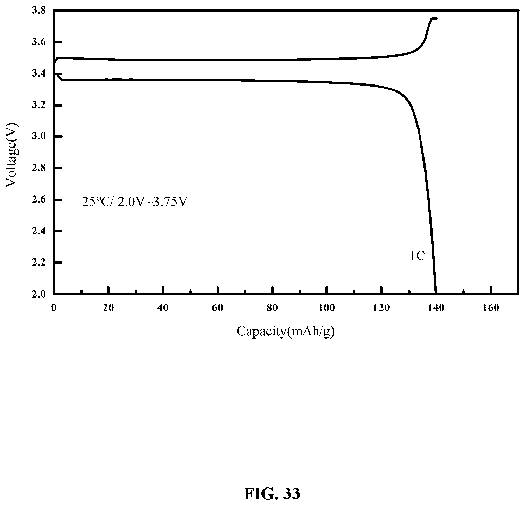

In order to verify the quality of the finished product of the lithium iron phosphate positive electrode material prepared by the method of preparing lithium iron phosphate from ferric hydroxyphosphate as provided by the embodiments of the present disclosure, the aforementioned lithium iron phosphate positive electrode materials prepared in Examples 1-5 and Comparative Example 1, carbon black as a conductive agent and polyvinylidene difluoride as a binder were dispersed in N-methylpyrrolidone according to a mass ratio of 90:5:5 evenly by ball milling, then coated onto aluminum foils, and oven dried in vacuum to prepare positive electrode pole pieces. A button half-cell was assembled from 1 mol/L LiPF6 with a solvent volume ratio of EC:DMC:EMC = 1:1:1 as an electrolyte solution, a Celgard polypropylene film as a separator, and a metal lithium sheet as a negative electrode. The tested voltage range was 2.0 V - 3.75 , the button half-cell was charged to 3.75 V in a constant-current and constant-voltage charging manner and discharged to 2.0 V in a constant-current discharging manner, the charge and discharge current was 0.1C for two cycles, and the charge and discharge current was 1C for two cycles. The test results were as shown in Table 1. a charge-discharge curve (0.1C) of a button half-cell assembled from the lithium iron phosphate positive electrode material prepared in Example 1 of the present disclosure was shown in FIG. 32; and a charge-discharge curve (1C) of a button half-cell assembled from the lithium iron phosphate positive electrode material prepared in Example 1 of the present disclosure was shown in FIG. 33.

**Table 1 Test items and test results of Examples 1-5 and Comparative Example 1**

| Example No. | Specific capacity of first charge at 0.1C (mAh/g) | Specific capacity of first discharge at 0.1C (mAh/g) | Specific capacity of discharge at 1C (mAh/g) |
|---|---|---|---|
| Example 1 | 160.45 | 158.16 | 140.15 |
| Example 2 | 161.07 | 158.20 | 140.89 |
| Example 3 | 161.03 | 158.47 | 140.56 |
| Example 4 | 161.25 | 158.75 | 140.11 |
| Example 5 | 161.33 | 158.62 | 140.16 |
| Comparative Example 1 | 158.52 | 151.21 | 130.25 |

According to the aforementioned examples and comparative example and the comparison of the test results obtained by testing them, the button half-cells prepared from the lithium iron phosphate positive electrode materials of Examples 1-5 each has been improved significantly in terms of both a specific capacity of first charge and discharge at 0.1C and a specific capacity of discharge at 1C compared with that of Comparative Example 1.

**In** summary, in the method for preparing lithium iron phosphate from ferric hydroxyphosphate as provided by the embodiment of the present disclosure, a by-product of titanium dioxide, ferrous sulfate, is utilized to generate ferric sulfate, added with other materials and reacted to generate ferric hydroxyphosphate with different iron-phosphorus ratios, and then subjected to different sintering processes to obtain a finished product of ferric hydroxyphosphate with a high iron-phosphorus ratio and a high specific surface area and a finished product of ferric hydroxyphosphate with a low iron-phosphorus ratio and a low specific surface area. The ferric hydroxyphosphate with the high iron-phosphorus ratio and the high specific surface area and the ferric hydroxyphosphate with the low iron-phosphorus ratio and the low specific surface area are mixed, then mixed with the lithium source according to a certain proportion, and subsequently added with the carbon source and the additive to form the mixed material. The mixed material is subjected to sanding, spray drying, sintering, sieving, blending, packaging and the like procedures to obtain the finished product of lithium iron phosphate. In the present method, the ferric hydroxyphosphate with the high iron-phosphorus ratio and the ferric hydroxyphosphate with the low iron-phosphorus ratio are mixed in proportions. Such mixing of the two kinds of ferric hydroxyphosphate in proportions is conducive to the formation of large and small particles in proportions, and improves the electrochemical performance while improving the compaction density of the lithium iron phosphate material. The button half-cell assembled from the lithium iron phosphate positive electrode material prepared by the present method has good stability and electrochemical performance. Additionally, the present method requires a low reaction temperature, a short reaction time, low requirements for equipment and a simple process flow, which improves the production efficiency and is suitable for application in large-scale industrial production.

In the description of the specification, descriptions referring to the terms "one embodiment", "some embodiments", "an example", "a specific example" and "some examples" mean that specific features, structures, materials or characteristics described in connection with the embodiment or example are included in at least one embodiment or example of the present disclosure. In this specification, the schematic representation of the aforementioned terms are not necessarily aimed at the same embodiment or example. Moreover, the described specific features, structures, materials, or characteristics may be combined in any one or more embodiments or examples in a suitable manner. Moreover, different embodiments or examples and features of different embodiments or examples described in this specification can be joined and combined by those skilled in the art without contradicting each other.

## Claims

1. A method for preparing lithium iron phosphate from ferric hydroxyphosphate, comprising:
step S1: adding ferrous sulfate, a by-product of titanium dioxide, into a phosphorus source and a precipitant for purification according to a mass ratio, the ferrous sulfate:the phosphorus source:the precipitant = 1:[0.001-0.005]:[0.005-0.007], so as to obtain a ferrous sulfate solution after purification through press filtration; wherein the purification is conducted at a reaction temperature of 40°C and a reaction pH value of 2.2-2.5 for a reaction time of 1 h, the phosphorus source is one or more of phosphoric acid, monoammonium phosphate, diammonium phosphate, and sodium phosphate, and the precipitant is one or more of sodium hydroxide, potassium hydroxide, lithium hydroxide and ammonia water;
step S2: adding phosphoric acid into the ferrous sulfate solution to reduce a pH value of the ferrous sulfate solution; wherein an addition amount of the phosphoric acid is according to a molar ratio of n(Fe):n(phosphoric acid) = 1:0.15;
step S3: adding hydrogen peroxide, phosphoric acid, an ammonium dihydrogen phosphate solution and ammonia water into the ferrous sulfate solution, then reacting to form a mixed slurry, holding the mixed slurry at a temperature, and then washing with water and subjecting to press filtration for several times to form first ferric hydroxyphosphate precursors with different iron-phosphorus ratios including a ferric hydroxyphosphate precursor with a higher iron-phosphorus ratio and a ferric hydroxyphosphate precursor with a lower iron-phosphorus ratio; wherein the ferric hydroxyphosphate precursor with the higher iron-phosphorus ratio is obtained by controlling an iron-phosphorus feeding ratio in the mixed slurry to satisfy an iron-phosphorus molar ratio of Fe/P = 1.475-1.490, the ferric hydroxyphosphate precursor with the lower iron-phosphorus ratio is obtained by controlling the iron-phosphorus feeding ratio in the mixed slurry to satisfy the iron-phosphorus molar ratio of Fe/P = 1.460-1.475;
step S4: subjecting the first ferric hydroxyphosphate precursors to flash drying in a flash drier, and sintering to obtain second ferric hydroxyphosphate precursors with different iron-phosphorus ratios and different specific surface areas;
step S5: pulverizing the sintered material with a mechanical mill to controlled particle sizes of D10 ≥ 1.0 µm, D50: 6-15 µm, and D90 ≤ 60 µm, and mixing with a ribbon mixer to obtain ferric hydroxyphosphate with different iron-phosphorus ratios and different specific surface areas;
step S6: mixing the ferric hydroxyphosphate with the higher iron-phosphorus ratio with the ferric hydroxyphosphate with the lower iron-phosphorus ratio according to a proportion between 2:8 and 8:2, then proportioning with a lithium source and an iron source according a molar ratio of Li:Fe:P = [1.03-1.04]:1:[1.03-1.04], and adding a carbon source and an additive to form a mixed material; the addition amount of the carbon source is on the basis that a carbon content in a final product is between 1.2%-1.6%, the additive is selected from one or more of titanium dioxide, ammonium metavanadate and niobium pentoxide and is controlled at a doping amount between 300-3,000 ppm;
step S7: subjecting the aforementioned mixed material to sanding to obtain a nano-sized sanded slurry; and spray-drying the nano-sized sanded slurry to obtain a sprayed material;
step S8: putting the aforementioned sprayed material in a box furnace for sintering to obtain a sintered material, and pulverizing the sintered material through a jet mill to obtain a pulverized material with particle sizes of D10 > 0.35 µm, D50 = 0.8-1.8 µm, D90 < 10 µm, and D100 < 30 µm; and
step S9: sieving, blending, packaging the aforementioned pulverized material to obtain a finished product of lithium iron phosphate.

2. The method for preparing lithium iron phosphate from ferric hydroxyphosphate according to claim 1, wherein in the step S3, the number of washing with water can be several, the first time of washing with water mainly washes away impurities magnesium, manganese and sulfur elements, 1:1 diluted ammonia water is added during the last time of washing with water to adjust a pH value to 6.5-7.0, so as to wash away a SO₄²⁻ ion, the concentration of the hydrogen peroxide is 30%-60%, and the temperature holding time for the mixed slurry at room temperature is 3 h.

3. The method for preparing lithium iron phosphate from ferric hydroxyphosphate according to claim 1, wherein the step S3 comprises:
step S311: adding excess hydrogen peroxide into the ferrous sulfate solution to continue oxidation for a certain period of time;
step S312: dissolving ammonium dihydrogen phosphate powder with water to formulate a ammonium dihydrogen phosphate solution with a concentration of 30% at a dissolution temperature of 30-40°C, and then adding a phosphoric acid solution and ammonia water into the ammonium dihydrogen phosphate solution and mix evenly under stirring to form a mixed ammonium phosphate solution; and
step S313: adding the mixed ammonium phosphate solution into the oxidized ferrous sulfate solution, adjusting a pH value of the solution to 3.00 ± 0.02, reacting for a period of time to form a mixed slurry, holding the mixed slurry at room temperature for a period of time, and then washing with water and subjecting to press filtration for several times to form ferric hydroxyphosphate precursors with different iron-phosphorus ratio.

4. The method for preparing lithium iron phosphate from ferric hydroxyphosphate according to claim 1, wherein in the step S4, the flash drier is controlled at an air inlet temperature of 220 ± 20°C and an air outlet temperature of 110 ± 5°C, the sintering is conducted at an atmosphere of air and a temperature of 535-560°C for a time of 4-5 h; and in the step S5, the particle size is controlled at D10 ≥ 1.0 µm, D50: 6-15 µm, and D90 ≤ 60 µm, and the mixer is controlled at a mixing frequency of 35 ± 2 Hz for a mixing time of 1-2 h.

5. The method for preparing lithium iron phosphate from ferric hydroxyphosphate according to claim 1, wherein in the step S5, the ferric hydroxyphosphate with the high iron-phosphorus ratio has a high specific surface area that satisfies BET = 15-20 m²/g and the iron-phosphorus molar ratio that satisfies Fe/P = 1.460-1.480; and the ferric hydroxyphosphate with the low iron-phosphorus ratio has a lower specific surface area that satisfies BET = 5-10 m²/g and the iron-phosphorus molar ratio that satisfies Fe/P = 1.440-1.460.

6. The method for preparing lithium iron phosphate from ferric hydroxyphosphate according to claim 1, wherein in the step S6, the lithium source is one or more of lithium phosphate, lithium carbonate, a lithium iron phosphate electrode pole piece material, and a low-carbon finished lithium iron phosphate material, the iron source is one or more of iron phosphate and iron oxide, the carbon source is one or more of sucrose, glucose, citric acid, starch and polyethylene glycol; in the step S7, a sanding particle size in the sanding slurry is controlled to be between 0.45-0.75 µm, and in the spray drying, the air inlet temperature is 200-220°C, the air outlet temperature is 80-110°C, the air blast frequency is 80 Hz, and a spraying particle size in the sprayed material is controlled between D50 = 20-40 µm; and in the step S8, the sintering is conducted in an atmosphere of nitrogen at a sintering temperature of 750-780°C and a heating rate of 3°C/min for a sintering time of 8-12 h, and then natural cooling is conducted to obtain the sintered material, and during the pulverizing process, it is controlled that a gas pressure is between 0.2-0.4 Mpa, a fractionation frequency is 80-200 Hz, and a particle size of the pulverized material satisfies: D10 > 0.35 µm, D50 = 0.7-2.0 µm , D90 <10 µm, and D100 < 30 µm.

7. The method for preparing lithium iron phosphate from ferric hydroxyphosphate according to claim 1, comprising:
step S1: adding ferrous sulfate, a by-product of titanium dioxide, into a phosphorus source and a precipitant for purification, so as to obtain a ferrous sulfate solution after purification through press filtration;
step S2: adding an appropriate amount of phosphoric acid into the ferrous sulfate solution to reduce a pH value of the ferrous sulfate solution;
step S3: sequentially adding hydrogen peroxide, phosphoric acid, an ammonium dihydrogen phosphate solution and ammonia water into the ferrous sulfate solution, then reacting for a period of time to form a mixed slurry, heating and holding the mixed slurry at a temperature for a period of time, and then washing with water and subjecting to press filtration for several times to form ferric hydroxyphosphate precursors with different iron-phosphorus ratios;
step S4: subjecting the ferric hydroxyphosphate precursors to flash drying in a flash drier, and sintering at high temperature for a certain period of time to obtain finished products of ferric hydroxyphosphate precursor with different iron-phosphorus ratios and different specific surface areas;
step S5: pulverizing the sintered material with a mechanical mill, and mixing with a ribbon mixer to obtain finished products of ferric hydroxyphosphate with different iron-phosphorus ratios and different specific surface areas;
step S6: mixing the ferric hydroxyphosphate with the high iron-phosphorus ratio and the high specific surface area with the ferric hydroxyphosphate with the low iron-phosphorus ratio and the low specific surface area according to a certain proportion, then proportioning with iron phosphate, lithium phosphate and lithium carbonate according to a certain proportion, and adding a certain amount of a carbon source and an additive to form a mixed material;
step S7: subjecting the aforementioned mixed material to sanding to obtain a nano-sized sanded slurry; and spray-drying the nano-sized sanded slurry to obtain a sprayed material;
step S8: putting the aforementioned sprayed material in a box furnace for sintering to obtain a sintered material, and pulverizing the sintered material through a jet mill to obtain a pulverized material; and
step S9: further subjecting the aforementioned pulverized material to sieving, blending, packaging and the like procedures to obtain a finished product of lithium iron phosphate.

8. The method for preparing lithium iron phosphate from ferric hydroxyphosphate according to claim 7, wherein the step S3 comprises:
step S321: adding excess hydrogen peroxide into the ferrous sulfate solution to continue oxidation for a certain period of time;
step S322: adding a phosphoric acid solution into the oxidized ferrous sulfate solution, then dissolving ammonium dihydrogen phosphate powder with water to formulate an ammonium dihydrogen phosphate solution with a concentration of 30% at a dissolution temperature of 30-40°C, and then adding the ammonium dihydrogen phosphate solution into the oxidized ferrous sulfate solution; and
step S323: adding ammonia water into the ferrous sulfate solution, adjusting a pH value of the solution to 3.00 ± 0.02, reacting for a period of time to form a mixed slurry, heating and holding the mixed slurry at a temperature for a period of time, and then washing with water and subjecting to press filtration for several times to form ferric hydroxyphosphate precursors with different iron-phosphorus ratios.

9. The method for preparing lithium iron phosphate from ferric hydroxyphosphate according to claim 1, comprising:
step S1: adding ferrous sulfate, a by-product of titanium dioxide, into a phosphorus source and a precipitant for purification, so as to obtain a ferrous sulfate solution after purification through press filtration;
step S2: adding an appropriate amount of phosphoric acid into the ferrous sulfate solution to reduce a pH value of the ferrous sulfate solution;
step S3: sequentially adding phosphoric acid, an ammonium dihydrogen phosphate solution, hydrogen peroxide and ammonia water into the ferrous sulfate solution, then reacting for a period of time to form a mixed slurry, heating and holding the mixed slurry at a temperature for a period of time, and then washing with water and subjecting to press filtration for several times to form ferric hydroxyphosphate precursors with different iron-phosphorus ratios;
step S4: subjecting the ferric hydroxyphosphate precursors to flash drying in a flash drier, and sintering at high temperature for a certain period of time to obtain finished products of ferric hydroxyphosphate precursor with different iron-phosphorus ratios and different specific surface areas;
step S5: pulverizing the sintered material with a mechanical mill, and mixing with a ribbon mixer to obtain finished products of ferric hydroxyphosphate with different iron-phosphorus ratios and different specific surface areas;
step S6: mixing the ferric hydroxyphosphate with the high iron-phosphorus ratio and the high specific surface area with the ferric hydroxyphosphate with the low iron-phosphorus ratio and the low specific surface area according to a certain proportion, then proportioning with iron oxide, lithium phosphate, lithium carbonate, and ammonium dihydrogen phosphate according to a certain proportion, and adding a certain amount of a carbon source and an additive to form a mixed material;
step S7: subjecting the aforementioned mixed material to sanding to obtain a nano-sized sanded slurry; and spray-drying the nano-sized sanded slurry to obtain a sprayed material;
step S8: putting the aforementioned sprayed material in a box furnace for sintering to obtain a sintered material, and pulverizing the sintered material through a jet mill to obtain a pulverized material; and
step S9: further subjecting the aforementioned pulverized material to sieving, blending, packaging and the like procedures to obtain a finished product of lithium iron phosphate.

10. The method for preparing lithium iron phosphate from ferric hydroxyphosphate according to claim 9, wherein the step S3 comprises:
step S331: adding a phosphoric acid solution into the ferrous sulfate solution, then dissolving ammonium dihydrogen phosphate powder with water to formulate an ammonium dihydrogen phosphate solution with a concentration of 30% at a dissolution temperature of 30-40°C, and then adding the ammonium dihydrogen phosphate solution into the ferrous sulfate solution;
step S332: then adding excess hydrogen peroxide into the ferrous sulfate solution to continue oxidation for a certain period of time; and
step S333: then adding ammonia water into the ferrous sulfate solution, adjusting a pH value of the solution to 3.00 ± 0.02, reacting for a period of time to form a mixed slurry, heating and holding the mixed slurry at a temperature for a period of time, and then washing with water and subjecting to press filtration for several times to form ferric hydroxyphosphate precursors with different iron-phosphorus ratios.

11. The method for preparing lithium iron phosphate from ferric hydroxyphosphate according to claim 1, comprising:
step S1: adding ferrous sulfate, a by-product of titanium dioxide, into a phosphorus source and a precipitant for purification, so as to obtain a ferrous sulfate solution after purification through press filtration;
step S2: adding an appropriate amount of phosphoric acid into the ferrous sulfate solution to reduce a pH value of the ferrous sulfate solution;
step S3: adding hydrogen peroxide, phosphoric acid, an ammonium dihydrogen phosphate solution and ammonia water into the ferrous sulfate solution, then reacting for a period of time to form a mixed slurry, holding the mixed slurry at room temperature for a period of time, and then washing with water and subjecting to press filtration for several times to form ferric hydroxyphosphate precursors with different iron-phosphorus ratios;
step S4: subjecting the ferric hydroxyphosphate precursors to flash drying in a flash drier, and sintering at high temperature for a certain period of time to obtain finished products of ferric hydroxyphosphate precursor with different iron-phosphorus ratios and different specific surface areas;
step S5: pulverizing the sintered material with a mechanical mill, and mixing with a ribbon mixer to obtain finished products of ferric hydroxyphosphate with different iron-phosphorus ratios and different specific surface areas;
step S6: mixing the ferric hydroxyphosphate with a high iron-phosphorus ratio with the ferric hydroxyphosphate with a low iron-phosphorus ratio according to a certain proportion, then proportioning with lithium phosphate and a lithium iron phosphate electrode pole piece material according to a certain proportion, and adding a certain amount of a carbon source and an additive to form a mixed material;
step S7: subjecting the aforementioned mixed material to sanding to obtain a nano-sized sanded slurry; and spray-drying the nano-sized sanded slurry to obtain a sprayed material;
step S8: putting the aforementioned sprayed material in a box furnace for sintering to obtain a sintered material, and pulverizing the sintered material through a jet mill to obtain a pulverized material; and
step S9: further subjecting the aforementioned pulverized material to sieving, blending, packaging and the like procedures to obtain a finished product of lithium iron phosphate.

12. The method for preparing lithium iron phosphate from ferric hydroxyphosphate according to claim 11, wherein the step S3 comprises:
step S341: adding excess hydrogen peroxide into the ferrous sulfate solution to continue oxidation for a certain period of time;
step S342: dissolving ammonium dihydrogen phosphate powder with water to formulate a ammonium dihydrogen phosphate solution with a concentration of 30% at a dissolution temperature of 30-40°C, and then adding a phosphoric acid solution and ammonia water into the ammonium dihydrogen phosphate solution and mix evenly under stirring to form a mixed ammonium phosphate solution; and
step S343: adding the mixed ammonium phosphate solution into the oxidized ferrous sulfate solution, adjusting a pH value of the solution to 3.00 ± 0.02, reacting for a period of time to form a mixed slurry, holding the mixed slurry at room temperature for a period of time, and then washing with water and subjecting to press filtration for several times to form ferric hydroxyphosphate precursors with different iron-phosphorus ratios.

13. The method for preparing lithium iron phosphate from ferric hydroxyphosphate according to claim 11, wherein in the step S6, a method for preparing the lithium iron phosphate electrode pole piece material comprises: pulverizing a waste lithium iron phosphate positive electrode pole piece, and sieving to separate a foil material and a raw material for the lithium iron phosphate pole piece material; sintering the raw material of the lithium iron phosphate pole piece material in an inert atmosphere at a sintering temperature of 400-500°C for a sintering time of 1-4 hours, and then pulverizing to a particle size of 1-5 µm to obtain the lithium iron phosphate electrode pole piece material.

14. The method for preparing lithium iron phosphate from ferric hydroxyphosphate according to claim 1, comprising:
step S1: adding ferrous sulfate, a by-product of titanium dioxide, into a phosphorus source and a precipitant for purification, so as to obtain a ferrous sulfate solution after purification through press filtration;
step S2: adding an appropriate amount of phosphoric acid into the ferrous sulfate solution to reduce a pH value of the ferrous sulfate solution;
step S3: adding hydrogen peroxide, phosphoric acid, an ammonium dihydrogen phosphate solution and ammonia water into the ferrous sulfate solution, then reacting for a period of time to form a mixed slurry, holding the mixed slurry at room temperature for a period of time, and then washing with water and subjecting to press filtration for several times to form ferric hydroxyphosphate precursors with different iron-phosphorus ratios;
step S4: subjecting the ferric hydroxyphosphate precursors to flash drying in a flash drier, and sintering at high temperature for a certain period of time to obtain finished products of ferric hydroxyphosphate precursor with different iron-phosphorus ratios and different specific surface areas;
step S5: pulverizing the sintered material with a mechanical mill, and mixing with a ribbon mixer to obtain finished products of ferric hydroxyphosphate with different iron-phosphorus ratios and different specific surface areas;
step S6: mixing the ferric hydroxyphosphate with a high iron-phosphorus ratio with the ferric hydroxyphosphate with a low iron-phosphorus ratio according to a certain proportion, then proportioning with lithium phosphate and a low-carbon finished lithium iron phosphate material according to a certain proportion, and adding a certain amount of a carbon source and an additive to form a mixed material;
step S7: subjecting the aforementioned mixed material to sanding to obtain a nano-sized sanded slurry; and spray-drying the nano-sized sanded slurry to obtain a sprayed material;
step S8: putting the aforementioned sprayed material in a box furnace for sintering to obtain a sintered material, and pulverizing the sintered material through a jet mill to obtain a pulverized material; and
step S9: further subjecting the aforementioned pulverized material to sieving, blending, packaging and the like procedures to obtain a finished product of lithium iron phosphate.

15. The method for preparing lithium iron phosphate from ferric hydroxyphosphate according to claim 14, wherein the step S3 comprises:
step S351: adding excess hydrogen peroxide into the ferrous sulfate solution to continue oxidation for a certain period of time;
step S352: dissolving ammonium dihydrogen phosphate powder with water to formulate a ammonium dihydrogen phosphate solution with a concentration of 30% at a dissolution temperature of 30-40°C, and then adding a phosphoric acid solution and ammonia water into the ammonium dihydrogen phosphate solution and mix evenly under stirring to form a mixed ammonium phosphate solution; and
step S353: adding the mixed ammonium phosphate solution into the oxidized ferrous sulfate solution, adjusting a pH value of the solution to 3.00 ± 0.02, reacting for a period of time to form a mixed slurry, holding the mixed slurry at room temperature for a period of time, and then washing with water and subjecting to press filtration for several times to form ferric hydroxyphosphate precursors with different iron-phosphorus ratios.

16. The method for preparing lithium iron phosphate from ferric hydroxyphosphate according to claim 14, wherein the step S6 comprises:
step S61: mixing iron oxide with a phosphorus source, a lithium source, a primary carbon source and a dopant, then adding water and stirring to obtain a slurry;
step S62: sequentially subjecting the slurry to wet grinding, spray drying, sintering under a nitrogen atmosphere and jet-pulverizing to obtain a pulverized low-carbon finished lithium iron phosphate material; and
step S63: mixing the ferric hydroxyphosphate with a high iron-phosphorus ratio with the ferric hydroxyphosphate with a low iron-phosphorus ratio according to a certain proportion, then proportioning with lithium phosphate and a low-carbon finished lithium iron phosphate material according to a certain proportion, and adding a certain amount of a secondary carbon source and an additive to form a mixed material.

17. The method for preparing lithium iron phosphate from ferric hydroxyphosphate according to claim 14, wherein in the step S61, the phosphorus source is one or more of phosphoric acid , ammonium dihydrogen phosphate and diammonium hydrogen phosphate, the lithium source is lithium carbonate and/or lithium hydroxide, the primary carbon source is one or more of sucrose, glucose, citric acid, starch and polyethylene glycol, a molar ratio of the iron in the iron oxide to the phosphorus in the phosphorus source is n(Fe):n(P) = (0.96-1):1, a molar ratio of the lithium in the lithium source to the iron in the iron oxide is n(Li):n(Fe) = (1.02-1.05):1, the dopant is a metal oxide, and the metal is at least one of Ti, V, Nb and Mg; and in the step S63, the carbon content in the low-carbon finished lithium iron phosphate material is between 0.2%-0.5%, in the mixed material according to the molar ratio of Li:Fe:P = [1.03-1.04]:1:[1.03-1.04], the secondary carbon source is one or more of sucrose, glucose, citric acid, starch and polyethylene glycol, and the addition mount of the primary carbon source and the secondary carbon source is on the basis that the carbon content in the final product is between 1.2%-1.6%, and the additive is selected from one or more of titanium dioxide, ammonium metavanadate and niobium pentoxide and is controlled at a doping amount between 300-3,000 ppm.

## Patentansprüche

1. Verfahren zur Herstellung von Lithiumeisenphosphat aus Eisenhydroxyphosphat, umfassend:
Schritt S1: Hinzufügen von Eisensulfat, einem Nebenprodukt von Titandioxid, zu einer Phosphorquelle und einem Fällungsmittel zur Reinigung gemäß einem Massenverhältnis, wobei das Verhältnis von Eisensulfat: Phosphorquelle: Fällungsmittel = 1:[0,001-0,005]:[0,005-0,007] beträgt, um eine Eisensulfatlösung nach der Reinigung durch Druckfiltration zu erhalten; wobei die Reinigung bei einer Reaktionstemperatur von 40°C und einem Reaktions-pH-Wert von 2,2-2,5 für eine Reaktionszeit von 1 Stunde durchgeführt wird, wobei die Phosphorquelle eine oder mehrere der folgenden Substanzen umfasst: Phosphorsäure, Ammoniumdihydrogenphosphat, Diammoniumhydrogenphosphat und Natriumphosphat, und wobei das Fällungsmittel eine oder mehrere der folgenden Substanzen umfasst: Natriumhydroxid, Kaliumhydroxid, Lithiumhydroxid und Ammoniaklösung.
Schritt S2: Hinzufügen von Phosphorsäure in die Eisensulfatlösung zur Senkung des pH-Wertes der Eisensulfatlösung; wobei die Zugabemenge der Phosphorsäure gemäß einem Molverhältnis von n(Fe):n(Phosphorsäure) = 1:0,15 erfolgt;
Schritt S3: Hinzufügen von Wasserstoffperoxid, Phosphorsäure, einer Ammoniumdihydrogenphosphatlösung und Ammoniakwasser in die Eisensulfatlösung, anschließend Reagieren zur Bildung eines gemischten Schlamms, Halten des gemischten Schlamms bei einer Temperatur und anschließendes Waschen mit Wasser, mehrmaliges Pressfiltrieren, um erste Eisenhydroxidphosphat-Vorläufer mit unterschiedlichen Eisen-Phosphor-Verhältnissen zu bilden, einschließlich eines Eisenhydroxidphosphat-Vorläufers mit höherem Eisen-Phosphor-Verhältnis und eines Eisenhydroxidphosphat-Vorläufers mit niedrigerem Eisen-Phosphor-Verhältnis; wobei der Eisenhydroxidphosphat-Vorläufer mit höherem Eisen-Phosphor-Verhältnis durch Steuerung des Eisen-Phosphor-Zufuhrverhältnisses im gemischten Schlamm erhalten wird, um ein Eisen-Phosphor-Molverhältnis von Fe/P = 1,475-1,490 zu erfüllen, und wobei der Eisenhydroxidphosphat-Vorläufer mit niedrigerem Eisen-Phosphor-Verhältnis durch Steuerung des Eisen-Phosphor-Zufuhrverhältnisses im gemischten Schlamm erhalten wird, um das Eisen-Phosphor-Molverhältnis von Fe/P = 1,460-1,475 zu erfüllen;
Schritt S4: Unterziehen der ersten Eisenhydroxyphosphat-Vorläufer einer Schnell-Trocknung in einem Schnell-Trockner und Sintern, um zweite Eisenhydroxyphosphat-Vorläufer mit unterschiedlichen Eisen-Phosphor-Verhältnissen und unterschiedlichen spezifischen Oberflächen zu erhalten;
Schritt S5: Zerkleinern des gesinterten Materials mit einer mechanischen Mühle auf kontrollierte Partikelgrößen von D10 > 1,0 pm, D50: 6-15 pm und D90 < 60 pm, und Mischen mit einem Bandmischer, um Eisenhydroxyphosphat mit unterschiedlichen Eisen-Phosphor-Verhältnissen und unterschiedlichen spezifischen Oberflächen zu erhalten;
Schritt S6: Mischen des Eisenhydroxyphosphats mit dem höheren Eisen-Phosphor-Verhältnis mit dem Eisenhydroxyphosphat mit dem niedrigeren Eisen-Phosphor-Verhältnis gemäß einem Verhältnis zwischen 2:8 und 8:2, anschließend Dosieren mit einer Lithiumquelle und einer Eisenquelle gemäß einem Molverhältnis von Li:Fe:P = [1,03-1,04]:1:[1,03-1,04], und Hinzufügen einer Kohlenstoffquelle sowie eines Zusatzstoffs zur Bildung eines Mischmaterials; die Zugabemenge der Kohlenstoffquelle basiert darauf, dass der Kohlenstoffgehalt im Endprodukt zwischen 1,2 % und 1,6 % liegt, der Zusatzstoff aus einem oder mehreren der Stoffe Titandioxid, Ammoniummetavanadat und Niobpentoxid ausgewählt wird und in einer Dotierungsmenge zwischen 300-3.000 ppm kontrolliert;
Schritt S7: Unterziehen des vorgenannten Mischmaterials einer Schleifbearbeitung, um einen nanoskaligen geschliffenen Schlamm zu erhalten; und Sprühtrocknen des nanoskaligen geschliffenen Schlamms, um ein gesprühtes Material zu erhalten;
Schritt S8: Einbringen des oben genannten gesprühten Materials in einen Kastenofen zum Sintern, um ein gesintertes Material zu erhalten, und Pulverisieren des gesinterten Materials durch eine Strahlmühle, um ein pulverisiertes Material mit Partikelgrößen von D10 > 0,35 pm, D50 = 0,8-1,8 pm, D90 < 10 pm und D100 < 30 pm; und
Schritt S9: Sieben, Mischen, Verpacken des vorgenannten pulverisierten Materials, um ein Endprodukt aus Lithiumeisenphosphat zu erhalten.

2. Verfahren zur Herstellung von Lithiumeisenphosphat aus Eisenhydroxyphosphat nach Anspruch 1, wobei in dem Schritt S3 die Anzahl des Waschens mit Wasser mehrere sein kann, wobei beim ersten Waschen mit Wasser hauptsächlich Verunreinigungen wie Magnesium-, Mangan- und Schwefelelementen entfernt werden, wobei beim letzten Waschen mit Wasser 1:1 verdünntes Ammoniakwasser hinzugefügt wird, um den pH-Wert auf 6,5 bis 7,0 einzustellen, damit SO42'-Ionen ausgewaschen werden, wobei die Konzentration des Wasserstoffperoxids 30%-60% beträgt und die Haltezeit des gemischten Schlamms bei Raumtemperatur 3 Stunden beträgt.

3. Verfahren zur Herstellung von Lithiumeisenphosphat aus Eisenhydroxyphosphat nach Anspruch 1, wobei der Schritt S3 umfasst:
Schritt S311: Hinzufügen von überschüssigem Wasserstoffperoxid in die Eisensulfatlösung, um die Oxidation für einen bestimmten Zeitraum fortzusetzen;
Schritt S312: Auflösen von Ammoniumdihydrogenphosphatpulver mit Wasser zur Herstellung einer Ammoniumdihydrogenphosphatlösung mit einer Konzentration von 30 % bei einer Auflösungstemperatur von 30-40 °C, und anschließend Hinzufügen von Phosphorsäurelösung und Ammoniakwasser zu der Ammoniumdihydrogenphosphatlösung und gleichmäßiges Mischen unter Rühren, um eine gemischte Ammoniumphosphatlösung zu bilden; und
Schritt S313: Hinzufügen der gemischten Ammoniumphosphatlösung zur oxidierten Eisensulfatlösung, Einstellen eines pH-Wertes der Lösung auf 3,00 ± 0,02, Reagieren für einen Zeitraum, um einen gemischten Schlamm zu bilden, Halten des gemischten Schlamms bei Raumtemperatur für einen Zeitraum und anschließend Waschen mit Wasser und mehrmaliges Druckfiltrieren, um Eisenhydroxylphosphat-Vorläufer mit unterschiedlichen Eisen-Phosphor-Verhältnissen zu bilden.

4. Verfahren zur Herstellung von Lithiumeisenphosphat aus Eisenhydroxyphosphat nach Anspruch 1, wobei in Schritt S4 der Schnell-Trockner bei einer Lufteintrittstemperatur von 220 ± 20°C und einer Luftaustrittstemperatur von 110 ± 5°C gesteuert wird, wobei das Sintern in einer Luftatmosphäre und bei einer Temperatur von 535-560°C für eine Dauer von 4-5 Stunden durchgeführt wird; und wobei in Schritt S5 die Partikelgröße bei DIO > 1,0 pm, D50: 6-15 pm und D90 < 60 pm gesteuert wird, und der Mischer bei einer Mischfrequenz von 35 ± 2 Hz für eine Mischzeit von 1-2 Stunden gesteuert wird.

5. Verfahren zur Herstellung von Lithiumeisenphosphat aus Eisenhydroxyphosphat nach Anspruch 1, wobei in dem Schritt S5 das Eisenhydroxyphosphat mit dem hohen Eisen-Phosphor-Verhältnis eine hohe spezifische Oberfläche, die BET = 15-20 m 2 /g erfüllt, und das Eisen-Phosphor-Molverhältnis, das Fe/P = 1,460-1,480 erfüllt, aufweist; und wobei das Eisenhydroxyphosphat mit dem niedrigen Eisen-Phosphor-Verhältnis eine niedrigere spezifische Oberfläche, die BET = 5-10 m 2 /g erfüllt, und das Eisen-Phosphor-Molverhältnis, das Fe/P = 1,440-1,460 erfüllt, aufweist.

6. Verfahren zur Herstellung von Lithiumeisenphosphat aus Eisenhydroxyphosphat nach Anspruch 1, wobei in dem Schritt S6 die Lithiumquelle eine oder mehrere der folgenden ist: Lithiumphosphat, Lithiumcarbonat, ein Lithiumeisenphosphat-Elektrodenpolstückmaterial und ein kohlenstoffarmes fertiges Lithiumeisenphosphatmaterial, wobei die Eisenquelle eine oder mehrere der folgenden ist: Eisenphosphat und Eisenoxid, die Kohlenstoffquelle eine oder mehrere der folgenden ist: Saccharose, Glukose, Zitronensäure, Stärke und Polyethylenglykol; Wobei im Schritt S7 die Schleifpartikelgröße in der Schleifschlämme auf 0,45-0,75 µm kontrolliert wird, und wobei beim Sprühtrocknen die Lufteintrittstemperatur 200-220°C, die Luftaustrittstemperatur 80-110°C, die Luftstoßfrequenz 80 Hz beträgt, und wobei die Partikelgröße des gesprühten Materials auf D50 = 20-40 µm kontrolliert wird ; und wobei im Schritt S8 das Sintern in einer Stickstoffatmosphäre bei einer Sintertemperatur von 750-780°C und einer Heizrate von 3°C/min für eine Sinterzeit von 8-12 Stunden durchgeführt wird, und wobei anschließend erfolgt eine natürliche Abkühlung, um das gesinterte Material zu erhalten, und wobei während des Zerkleinerungsprozesses kontrolliert wird, dass der Gasdruck zwischen 0,2-0,4 MPa liegt, die Fraktionierungsfrequenz 80-200 Hz beträgt und die Partikelgröße des zerkleinerten Materials erfüllt: D10 > 0.35 pm, D50 = 0.7-2.0 pm, D90 <10 pm, and D100 < 30 pm.

7. Verfahren zur Herstellung von Lithiumeisenphosphat aus Eisenhydroxyphosphat nach Anspruch 1, umfassend:
Schritt1: Hinzufügen von Eisensulfat, einem Nebenprodukt von Titandioxid, zu einer Phosphorquelle und einem Fällungsmittel zur Reinigung, um nach der Reinigung durch Pressfiltration eine Eisensulfatlösung zu erhalten;
Schritt S2: Hinzufügen einer geeigneten Menge Phosphorsäure in die Eisensulfatlösung, um den pH-Wert der Eisensulfatlösung zu reduzieren;
Schritt S3: Sequenzielles Hinzufügen von Wasserstoffperoxid, Phosphorsäure, einer Ammoniumdihydrogenphosphatlösung und Ammoniakwasser zur Eisensulfatlösung, anschließend Reagieren für einen Zeitraum, um einen gemischten Schlamm zu bilden, Erhitzen und Halten des gemischten Schlamms bei einer Temperatur für einen Zeitraum und anschließend Waschen mit Wasser und mehrmaliges Druckfiltrieren, um Eisenhydroxylphosphat-Vorläufer mit unterschiedlichen Eisen-Phosphor-Verhältnissen zu bilden;
Schritt S4: Unterziehen der Eisenhydroxyphosphat-Vorläufer einer Schnell-Trocknung in einem Schnell-Trockner und Sintern bei hoher Temperatur für eine bestimmte Zeitdauer, um Endprodukte von Eisenhydroxyphosphat-Vorläufer mit unterschiedlichen Eisen-Phosphor-Verhältnissen und unterschiedlichen spezifischen Oberflächen zu erhalten;
Schritt S5: Zerkleinern des gesinterten Materials mit einer mechanischen Mühle und Mischen mit einem Bandmischer, um Endprodukte aus Eisenhydroxylphosphat mit unterschiedlichen Eisen-Phosphor-Verhältnissen und unterschiedlichen spezifischen Oberflächen zu erhalten;
Schritt S6: Mischen des Eisenhydroxyphosphats mit dem hohen Eisen-Phosphor-Verhältnis und der hohen spezifischen Oberfläche mit dem Eisenhydroxyphosphat mit dem niedrigen Eisen-Phosphor-Verhältnis und der niedrigen spezifischen Oberfläche gemäß einem bestimmten Verhältnis, anschließend Dosieren mit Eisenphosphat, Lithiumphosphat und Lithiumcarbonat gemäß einem bestimmten Verhältnis, und das Hinzufügen einer bestimmten Menge einer Kohlenstoffquelle und eines Zusatzstoffs zur Bildung eines Mischmaterials;
Schritt S7: Unterziehen des vorgenannten Mischmaterials einer Schleifbearbeitung, um einen nanoskaligen geschliffenen Schlamm zu erhalten; und Sprühtrocknen des nanoskaligen geschliffenen Schlamms, um ein gesprühtes Material zu erhalten;
Schritt S8: Einbringen des oben genannten gesprühten Materials in einen Kastenofen zum Sintern, um ein gesintertes Material zu erhalten, und Pulverisieren des gesinterten Materials durch eine Strahlmühle, um ein pulverisiertes Material zu erhalten; und
Schritt S9: Weiteres Sieben, Mischen, Verpacken und dergleichen des oben genannten pulverisierten Materials, um ein Endprodukte aus Lithium-Eisenphosphat zu erhalten.

8. Verfahren zur Herstellung von Lithiumeisenphosphat aus Eisenhydroxyphosphat nach Anspruch 7, wobei der Schritt S3 umfasst:
Schritt S321: Hinzufügen von überschüssigem Wasserstoffperoxid in die Eisensulfatlösung, um die Oxidation für einen bestimmten Zeitraum fortzusetzen;
Schritt S322: Hinzufügen einer Phosphorsäurelösung zu der oxidierten Eisensulfatlösung, dann Auflösen von Ammoniumdihydrogenphosphatpulver mit Wasser, um eine Ammoniumdihydrogenphosphatlösung mit einer Konzentration von 30 % bei einer Auflösungs-temperatur von 30-40 °C herzustellen, und dann Hinzufügen der Ammoniumdihydrogenphosphatlösung zu der oxidierten Eisensulfatlösung; und
Schritt S323: Hinzufügen von Ammoniakwasser zur Eisensulfatlösung, Einstellen eines pH-Wertes der Lösung auf 3,00 ± 0,02, Reagieren für einen Zeitraum, um einen gemischten Schlamm zu bilden, Heizen und Halten des gemischten Schlamms bei einer Temperatur für einen Zeitraum und anschließend Waschen mit Wasser und mehrmaliges Druckfiltrieren, um Eisenhydroxylphosphat-Vorläufer mit unterschiedlichen Eisen-Phosphor-Verhältnissen zu bilden.

9. Verfahren zur Herstellung von Lithiumeisenphosphat aus Eisenhydroxyphosphat nach Anspruch 1, umfassend:
Schritt1: Hinzufügen von Eisensulfat, einem Nebenprodukt von Titandioxid, zu einer Phosphorquelle und einem Fällungsmittel zur Reinigung, um nach der Reinigung durch Pressfiltration eine Eisensulfatlösung zu erhalten
Schritt S2: Hinzufügen einer geeigneten Menge Phosphorsäure in die Eisensulfatlösung, um den pH-Wert der Eisensulfatlösung zu reduzieren;
Schritt S3: Sequenzielles Hinzufügen von Phosphorsäure, einer Ammoniumdihydrogenphosphatlösung, Wasserstoffperoxid und Ammoniakwasser zur Eisensulfatlösung, anschließend Reagieren für einen Zeitraum, um einen gemischten Schlamm zu bilden, Erhitzen und Halten des gemischten Schlamms bei einer Temperatur für einen Zeitraum und anschließend Waschen mit Wasser und mehrmaliges Druckfiltrieren, um Eisenhydroxylphosphat-Vorläufer mit unterschiedlichen Eisen-Phosphor-Verhältnissen zu bilden.
Schritt S4: Unterziehen der Eisenhydroxyphosphat-Vorläufer einer Schnell-Trocknung in einem Schnell-Trockner und Sintern bei hoher Temperatur für eine bestimmte Zeitdauer, um Endprodukte von Eisenhydroxyphosphat-Vorläufer mit unterschiedlichen Eisen-Phosphor-Verhältnissen und unterschiedlichen spezifischen Oberflächen zu erhalten;
Schritt S5: Zerkleinern des gesinterten Materials mit einer mechanischen Mühle und Mischen mit einem Bandmischer, um Endprodukte aus Eisenhydroxylphosphat mit unterschiedlichen Eisen-Phosphor-Verhältnissen und unterschiedlichen spezifischen Oberflächen zu erhalten;
Schritt S6: Mischen des Eisenhydroxyphosphats mit dem hohen Eisen-Phosphor-Verhältnis und der hohen spezifischen Oberfläche mit dem Eisenhydroxyphosphat mit dem niedrigen Eisen-Phosphor-Verhältnis und der niedrigen spezifischen Oberfläche gemäß einem bestimmten Verhältnis, anschließend Dosieren mit Eisenoxid, Lithiumphosphat, Lithiumcarbonat und Ammoniumdihydrogenphosphat gemäß einem bestimmten Verhältnis, und das Hinzufügen einer bestimmten Menge einer Kohlenstoffquelle und eines Zusatzstoffs zur Bildung eines Mischmaterials;
Schritt S7: Unterziehen des vorgenannten Mischmaterials einer Schleifbearbeitung, um einen nanoskaligen geschliffenen Schlamm zu erhalten; und Sprühtrocknen des nanoskaligen geschliffenen Schlamms, um ein gesprühtes Material zu erhalten;
Schritt S8: Einbringen des oben genannten gesprühten Materials in einen Kastenofen zum Sintern, um ein gesintertes Material zu erhalten, und Pulverisieren des gesinterten Materials durch eine Strahlmühle, um ein pulverisiertes Material zu erhalten; und
Schritt S9: Weiteres Sieben, Mischen, Verpacken und dergleichen des oben genannten pulverisierten Materials, um ein Endprodukte aus Lithium-Eisenphosphat zu erhalten.

10. Verfahren zur Herstellung von Lithiumeisenphosphat aus Eisenhydroxyphosphat nach Anspruch 9, wobei der Schritt S3 umfasst: Eisenoxid, Lithiumphosphat, Lithiumcarbonat und Ammoniumdihydrogenphosphat in einem bestimmten Verhältnis und Hinzufügen einer bestimmten Menge einer Kohlenstoffquelle und eines Additivs, um ein Mischmaterial zu bilden;
Schritt S331: Hinzufügen einer Phosphorsäurelösung zu der Eisensulfatlösung, dann Auflösen von Ammoniumdihydrogenphosphatpulver mit Wasser, um eine Ammoniumdihydrogenphosphatlösung mit einer Konzentration von 30 % bei einer Auflösungs-temperatur von 30-40 °C herzustellen, und dann Hinzufügen der Ammoniumdihydrogenphosphatlösung zu der Eisensulfatlösung; und
Schritt S332: dann Hinzufügen von überschüssigem Wasserstoffperoxid in die Eisensulfatlösung, um die Oxidation für einen bestimmten Zeitraum fortzusetzen; und
Schritt S333: dann Hinzufügen von Ammoniakwasser zur Eisensulfatlösung, Einstellen eines pH-Wertes der Lösung auf 3,00 ± 0,02, Reagieren für einen Zeitraum, um einen gemischten Schlamm zu bilden, Heizen und Halten des gemischten Schlamms bei einer Temperatur für einen Zeitraum und anschließend Waschen mit Wasser und mehrmaliges Druckfiltrieren, um Eisenhydroxylphosphat-Vorläufer mit unterschiedlichen Eisen-Phosphor-Verhältnissen zu bilden.

11. Verfahren zur Herstellung von Lithiumeisenphosphat aus Eisenhydroxyphosphat nach Anspruch 1, umfassend:
Schritt1: Hinzufügen von Eisensulfat, einem Nebenprodukt von Titandioxid, zu einer Phosphorquelle und einem Fällungsmittel zur Reinigung, um nach der Reinigung durch Pressfiltration eine Eisensulfatlösung zu erhalten
Schritt S2: Hinzufügen einer geeigneten Menge Phosphorsäure in die Eisensulfatlösung, um den pH-Wert der Eisensulfatlösung zu reduzieren;
Schritt S3: Hinzufügen von Wasserstoffperoxid, Phosphorsäure, einer Ammoniumdihydrogenphosphatlösung und Ammoniakwasser zur Eisensulfatlösung, anschließend Reagieren für einen Zeitraum, um einen gemischten Schlamm zu bilden, Halten des gemischten Schlamms bei Raumtememperatur für einen Zeitraum und anschließend Waschen mit Wasser und mehrmaliges Druckfiltrieren, um Eisenhydroxylphosphat-Vorläufer mit unterschiedlichen Eisen-Phosphor-Verhältnissen zu bilden.
Schritt S4: Unterziehen der Eisenhydroxyphosphat-Vorläufer einer Schnell-Trocknung in einem Schnell-Trockner und Sintern bei hoher Temperatur für eine bestimmte Zeitdauer, um Endprodukte von Eisenhydroxyphosphat-Vorläufer mit unterschiedlichen Eisen-Phosphor-Verhältnissen und unterschiedlichen spezifischen Oberflächen zu erhalten;
Schritt S5: Zerkleinern des gesinterten Materials mit einer mechanischen Mühle und Mischen mit einem Bandmischer, um Endprodukte aus Eisenhydroxylphosphat mit unterschiedlichen Eisen-Phosphor-Verhältnissen und unterschiedlichen spezifischen Oberflächen zu erhalten;
Schritt S6: Mischen des Eisenhydroxyphosphats mit einem hohen Eisen-Phosphor-Verhältnis mit dem Eisenhydroxyphosphat mit einem niedrigen Eisen-Phosphor-Verhältnis in einem bestimmten Verhältnis, dann Dosieren mit Lithiumphosphat und einem Lithiumeisenphosphat-Elektrodenpolstückmaterial in einem bestimmten Verhältnis und Hinzufügen einer bestimmten Menge einer Kohlenstoffquelle und eines Additivs, um ein Mischmaterial zu bilden;
Schritt S7: Unterziehen des vorgenannten Mischmaterials einer Schleifbearbeitung, um einen nanoskaligen geschliffenen Schlamm zu erhalten; und Sprühtrocknen des nanoskaligen geschliffenen Schlamms, um ein gesprühtes Material zu erhalten;
Schritt S8: Einbringen des oben genannten gesprühten Materials in einen Kastenofen zum Sintern, um ein gesintertes Material zu erhalten, und Pulverisieren des gesinterten Materials durch eine Strahlmühle, um ein pulverisiertes Material zu erhalten; und
Schritt S9: Weiteres Sieben, Mischen, Verpacken und dergleichen des oben genannten pulverisierten Materials, um ein Endprodukte aus Lithium-Eisenphosphat zu erhalten.

12. Verfahren zur Herstellung von Lithiumeisenphosphat aus Eisenhydroxyphosphat nach Anspruch 11, wobei der Schritt S3 umfasst: Eisenoxid, Lithiumphosphat, Lithiumcarbonat und Ammoniumdihydrogenphosphat in einem bestimmten Verhältnis und Hinzufügen einer bestimmten Menge einer Kohlenstoffquelle und eines Additivs, um ein Mischmaterial zu bilden;
Schritt S341: Hinzufügen von überschüssigem Wasserstoffperoxid in die Eisensulfatlösung, um die Oxidation für einen bestimmten Zeitraum fortzusetzen;
Schritt S342: Auflösen von Ammoniumdihydrogenphosphatpulver mit Wasser zur Herstellung einer Ammoniumdihydrogenphosphatlösung mit einer Konzentration von 30 % bei einer Auflösungstemperatur von 30-40 °C, und anschließend Hinzufügen von Phosphorsäurelösung und Ammoniakwasser zu der Ammoniumdihydrogenphosphatlösung und gleichmäßiges Mischen unter Rühren, um eine gemischte Ammoniumphosphatlösung zu bilden; und
Schritt S343: Hinzufügen der gemischten Ammoniumphosphatlösung zur oxidierten Eisensulfatlösung, Einstellen eines pH-Wertes der Lösung auf 3,00 ± 0,02, Reagieren für einen Zeitraum, um einen gemischten Schlamm zu bilden, Halten des gemischten Schlamms bei Raumtemperatur für einen Zeitraum und anschließend Waschen mit Wasser und mehrmaliges Druckfiltrieren, um Eisenhydroxylphosphat-Vorläufer mit unterschiedlichen Eisen-Phosphor-Verhältnissen zu bilden.

13. Verfahren zur Herstellung von Lithiumeisenphosphat aus Eisenhydroxyphosphat nach Anspruch 11, wobei in dem Schritt S6 ein Verfahren zur Herstellung des Lithiumeisenphosphat-Elektrodenpolstückmaterials umfasst: Zerkleinern eines Abfall-Lithiumeisenphosphat-Positiv-Elektrodenpolstücks und Sieben, um ein Folienmaterial und ein Rohmaterial für das Lithiumeisenphosphat-Polstückmaterial zu trennen; Sintern des Rohmaterials des Lithiumeisenphosphat-Polstückmaterials in einer Inertatmosphäre bei einer Sintertemperatur von 400-500°C für eine Sinterzeit von 1-4 Stunden und anschließend Zerkleinern auf eine Partikelgröße von 1-5 µm, um das Lithiumeisenphosphat-Elektrodenpolstückmaterial zu erhalten.

14. Verfahren zur Herstellung von Lithiumeisenphosphat aus Eisenhydroxyphosphat nach Anspruch 1, umfassend:
Schritt1: Hinzufügen von Eisensulfat, einem Nebenprodukt von Titandioxid, zu einer Phosphorquelle und einem Fällungsmittel zur Reinigung, um nach der Reinigung durch Pressfiltration eine Eisensulfatlösung zu erhalten
Schritt S2: Hinzufügen einer geeigneten Menge Phosphorsäure in die Eisensulfatlösung, um den pH-Wert der Eisensulfatlösung zu reduzieren;
Schritt S3: Hinzufügen von Wasserstoffperoxid, Phosphorsäure, einer Ammoniumdihydrogenphosphatlösung und Ammoniakwasser zur Eisensulfatlösung, anschließend Reagieren für einen Zeitraum, um einen gemischten Schlamm zu bilden, Halten des gemischten Schlamms bei Raumtememperatur für einen Zeitraum und anschließend Waschen mit Wasser und mehrmaliges Druckfiltrieren, um Eisenhydroxylphosphat-Vorläufer mit unterschiedlichen Eisen-Phosphor-Verhältnissen zu bilden.
Schritt S4: Unterziehen der Eisenhydroxyphosphat-Vorläufer einer Schnell-Trocknung in einem Schnell-Trockner und Sintern bei hoher Temperatur für eine bestimmte Zeitdauer, um Endprodukte von Eisenhydroxyphosphat-Vorläufer mit unterschiedlichen Eisen-Phosphor-Verhältnissen und unterschiedlichen spezifischen Oberflächen zu erhalten;
Schritt S5: Zerkleinern des gesinterten Materials mit einer mechanischen Mühle und Mischen mit einem Bandmischer, um Endprodukte aus Eisenhydroxylphosphat mit unterschiedlichen Eisen-Phosphor-Verhältnissen und unterschiedlichen spezifischen Oberflächen zu erhalten;
Schritt S6: Mischen des Eisenhydroxyphosphats mit einem hohen Eisen-Phosphor-Verhältnis mit dem Eisenhydroxyphosphat mit einem niedrigen Eisen-Phosphor-Verhältnis gemäß einem bestimmten Verhältnis, dann Dosieren mit Lithiumphosphat und einem kohlenstoffarmen fertigen Lithiumeisenphosphatmaterial gemäß einem bestimmten Verhältnis und Hinzufügen einer bestimmten Menge einer Kohlenstoffquelle und eines Zusatzstoffs, um ein Mischmaterial zu bilden;
Schritt S7: Unterziehen des vorgenannten Mischmaterials einer Schleifbearbeitung, um einen nanoskaligen geschliffenen Schlamm zu erhalten; und Sprühtrocknen des nanoskaligen geschliffenen Schlamms, um ein gesprühtes Material zu erhalten;
Schritt S8: Einbringen des oben genannten gesprühten Materials in einen Kastenofen zum Sintern, um ein gesintertes Material zu erhalten, und Pulverisieren des gesinterten Materials durch eine Strahlmühle, um ein pulverisiertes Material zu erhalten; und
Schritt S9: Weiteres Sieben, Mischen, Verpacken und dergleichen des oben genannten pulverisierten Materials, um ein Endprodukte aus Lithium-Eisenphosphat zu erhalten.

15. Verfahren zur Herstellung von Lithiumeisenphosphat aus Eisenhydroxyphosphat nach Anspruch 14, wobei der Schritt S3 umfasst:
Schritt S351: Hinzufügen von überschüssigem Wasserstoffperoxid in die Eisensulfatlösung, um die Oxidation für einen bestimmten Zeitraum fortzusetzen;
Schritt S352: Auflösen von Ammoniumdihydrogenphosphatpulver mit Wasser zur Herstellung einer Ammoniumdihydrogenphosphatlösung mit einer Konzentration von 30% bei einer Auflösungstemperatur von 30-40 °C, und anschließend Hinzufügen von Phosphorsäurelösung und Ammoniakwasser zu der Ammoniumdihydrogenphosphatlösung und gleichmäßiges Mischen unter Rühren, um eine gemischte Ammoniumphosphatlösung zu bilden; und
Schritt S353: Hinzufügen der gemischten Ammoniumphosphatlösung zur oxidierten Eisensulfatlösung, Einstellen eines pH-Wertes der Lösung auf 3,00 ± 0,02, Reagieren für einen Zeitraum, um einen gemischten Schlamm zu bilden, Halten des gemischten Schlamms bei Raumtemperatur für einen Zeitraum und anschließend Waschen mit Wasser und mehrmaliges Druckfiltrieren, um Eisenhydroxylphosphat-Vorläufer mit unterschiedlichen Eisen-Phosphor-Verhältnissen zu bilden.

16. Verfahren zur Herstellung von Lithiumeisenphosphat aus Eisenhydroxyphosphat nach Anspruch 14, wobei der Schritt S6 umfasst:
Schritt S61: Mischen von Eisenoxid mit einer Phosphorquelle, einer Lithiumquelle, einer primären Kohlenstoffquelle und einem Dotierstoff, anschließendes Hinzufügen von Wasser und Rühren, um einen Schlamm zu erhalten;
Schritt S62: Aufeinanderfolgendes Unterziehen dem Schlamm einer Nassmahlung, Sprühtrocknung, Sintern unter Stickstoffatmosphäre und Strahlpulverisierung, um ein pulverisiertes kohlenstoffarmes fertiges Lithiumeisenphosphatmaterial zu erhalten; und
Schritt S63: Mischen des Eisenhydroxyphosphats mit einem hohen Eisen-Phosphor-Verhältnis mit dem Eisenhydroxyphosphat mit einem niedrigen Eisen-Phosphor-Verhältnis gemäß einem bestimmten Verhältnis, dann Dosieren mit Lithiumphosphat und einem kohlenstoffarmen fertigen Lithiumeisenphosphatmaterial gemäß einem bestimmten Verhältnis und Hinzufügen einer bestimmten Menge einer sekundären Kohlenstoffquelle und eines Zusatzstoffs, um ein Mischmaterial zu bilden.

17. Verfahren zur Herstellung von Lithiumeisenphosphat aus Eisenhydroxyphosphat nach Anspruch 14, wobei in Schritt S61 die Phosphorquelle eine oder mehrere der folgenden ist: Phosphorsäure, Ammoniumdihydrogenphosphat und Diammoniumhydrogenphosphat, wobei die Lithiumquelle Lithiumcarbonat und/oder Lithiumhydroxid ist, wobei die primäre Kohlenstoffquelle eine oder mehrere der folgenden ist: Saccharose, Glukose, Zitronensäure, Stärke und Polyethylenglykol; Wobei das Molverhältnis von Eisen im Eisenoxid zu Phosphor in der Phosphorquelle n(Fe):n(P) = (0,96-1):1 beträgt, wobei das Molverhältnis von Lithium in der Lithiumquelle zu Eisen im Eisenoxid n(Li):n(Fe) = (1,02-1,05): 1 beträgt, wobei das Dotierstoff ein Metalloxid ist und das Metall mindestens eines von Ti, V, Nb und Mg ist; Und wobei in Schritt S63 der Kohlenstoffgehalt in dem kohlenstoffarmen fertigen Lithiumeisenphosphatmaterial zwischen 0,2 % und 0,5 % liegt, wobei in dem Mischmaterial gemäß dem Molverhältnis von Li:Fe:P = [1,03-1,04]:1:[1,03-1,04] die sekundäre Kohlenstoffquelle eine oder mehrere der folgenden ist : Saccharose, Glukose, Zitronensäure, Stärke und Polyethylenglykol, und die Zugabemenge der primären Kohlenstoffquelle und der sekundären Kohlenstoffquelle basiert darauf, dass der Kohlenstoffgehalt im Endprodukt zwischen 1,2 % und 1,6 % liegt, und der Zusatzstoff wird aus einem oder mehreren der folgenden ausgewählt: Titandioxid, Ammoniummetavanadat und Niobpentoxid und wird auf eine Dotierungsmenge zwischen 300 und 3.000 ppm eingestellt.

## Revendications

1. Procédé de préparation de phosphate de lithium-fer à partir d'hydroxyphosphate ferrique, comprenant :
étape S1 : ajouter du sulfate ferreux, un sous-produit du dioxyde de titane, à une source de phosphore et un précipitant pour une purification à raison d'un rapport massique, le sulfate ferreux : la source de phosphore : le précipitant = 1 : [0,001-0,005] : [0,005-0,007], de manière à obtenir une solution de sulfate ferreux après purification par filtration sous pression ; dans laquelle la purification est effectuée à une température de réaction de 40 °C et à une valeur pH de réaction de 2,2 à 2,5 pendant une durée de réaction de 1h, la source de phosphore est une ou plusieurs parmi l'acide phosphorique, le phosphate monoammonique, le phosphate diammonique et le phosphate de sodium, et le précipitant est un ou plusieurs parmi l'hydroxyde de sodium, l'hydroxyde de potassium, l'hydroxyde de lithium et l'ammoniaque ;
étape S2 : ajouter de l'acide phosphorique à la solution de sulfate ferreux pour réduire la valeur pH de la solution de sulfate ferreux ; dans laquelle une quantité ajoutée d'acide phosphorique est calculée en fonction d'un rapport molaire de n(Fe) : n (acide phosphorique) = 1 : 0,15 ;
étape S3 : ajouter du peroxyde d'hydrogène, de l'acide phosphorique, une solution de dihydrogénophosphate d'ammonium et de l'ammoniaque à la solution de sulfate ferreux, puis laisser réagir pour former une pâte mixte, maintenir la pâte mixte à une certaine température, puis laver à l'eau et effectuer une filtration sous pression plusieurs fois pour former des premiers précurseurs d'hydroxyphosphate ferrique à différents rapports fer-phosphore, y compris un précurseur d'hydroxyphosphate ferrique à un rapport fer-phosphore élevé et un précurseur d'hydroxyphosphate à un rapport fer-phosphore faible ; dans laquelle le précurseur d'hydroxyphosphate ferrique au rapport fer-phosphore élevé est obtenu en contrôlant un rapport d'alimentation fer-phosphore dans la pâte mixte pour satisfaire un rapport molaire fer-phosphore de Fe/P = 1,475-1,490, le précurseur d'hydroxyphosphate ferrique au rapport fer-phosphore faible est obtenu en contrôlant le rapport d'alimentation fer-phosphore dans la pâte mixte pour satisfaire le rapport molaire fer-phosphore de Fe/P = 1,460-1,475 ;
étape S4 : soumettre les premiers précurseurs d'hydroxyphosphate ferrique à un séchage éclair dans un séchoir éclair, et fritter pour obtenir des seconds précurseur d'hydroxyphosphate ferrique à différents rapports fer-phosphore et différentes surfaces spécifiques ;
étape S5 : pulvériser le matériau fritté à l'aide d'un broyeur mécanique jusqu'à une taille des particules contrôlée de D10≥1,0 µm, D50 : 6-15 um, et D90≤60 um, et mélanger à l'aide d'un mélangeur à ruban pour obtenir l'hydroxyphosphate ferrique à différents rapports fer-phosphore et différentes surfaces spécifiques ;
étape S6 : mélanger l'hydroxyphosphate ferrique au rapport fer-phosphore élevé avec l'hydroxyphosphate ferrique au rapport fer-phosphore faible à raison d'une proportion comprise entre 2 : 8 et 8 : 2, puis doser avec une source de lithium et une source de fer à raison d'un rapport molaire de Li :Fe :P = [1,03-1,04] : 1 : [l,03-1,04], et ajouter une source de carbone et un additif pour former un matériau mixte ; la quantité ajoutée de la source de carbone étant basée sur le fait que la teneur en carbone d'un produit final est comprise entre 1,2 %-1,6 %, l'additif étant un ou plusieurs choisi parmi le dioxyde de titane, le métavanadate d'ammonium et le pentaoxyde de niobium dont une quantité de dopage est contrôlée à une plage de 300-3 000 ppm ;
étape S7 : soumettre le matériau mixte susmentionné à un ponçage pour obtenir une pâte poncée à taille nanométrique ; et sécher par pulvérisation la pâte poncée à taille nanométrique pour obtenir un matériau pulvérisé ;
étape S8 : mettre le matériau pulvérisé susmentionné dans un four à caissons pour fritter, afin d'obtenir un matériau fritté, et pulvériser le matériau fritté à l'aide d'un broyeur à jet pour obtenir un matériau pulvérisé à tailles des particules de D10 > 0,35 pm, D50 = 0,8-1,8 µm, D90 < 10 µm et D100 < 30 µm ; et
étape S9 : tamiser, mélanger et emballer le matériau pulvérisé susmentionnée pour obtenir un produit fini de phosphate de lithium-fer.

2. Procédé de préparation de phosphate de lithium-fer à partir d'hydroxyphosphate ferrique selon la revendication 1, dans lequel à l'étape S3, le nombre de fois de lavages à l'eau est multiple, le premier lavage à l'eau élimine principalement des impuretés de magnésium, de manganèse et de soufre, de l'ammoniaque diluée à 1 : 1 est ajoutée lors du dernier lavage à l'eau pour ajuster une valeur pH à 6,5-7,0, afin d'éliminer un ion SO₄²⁻, la concentration de peroxyde d'hydrogène est de 30 à 60 % et la durée de maintien de la température pour la pâte mixte à température ambiante est de 3 h.

3. Procédé de préparation de phosphate de lithium-fer à partir d'hydroxyphosphate ferrique selon la revendication 1, dans lequel l'étape S3 comprend :
étape S311 : ajouter du peroxyde d'hydrogène excessif à la solution de sulfate ferreux pour poursuivre l'oxydation pendant une certaine durée ;
étape S312 : dissoudre du dihydrogénophosphate d'ammonium en poudre dans l'eau pour préparer une solution de dihydrogénophosphate d'ammonium à une concentration de 30 % à une température de dissolution de 30-40 °C, et puis ajouter une solution d'acide phosphorique et de l'ammoniaque à la solution de dihydrogénophosphate d'ammonium et mélanger jusqu'à homogène sous agitation pour former une solution mixte de phosphate d'ammonium ; et
étape S313 : ajouter la solution mixte de phosphate d'ammonium à la solution de sulfate ferreux oxydé, ajuster une valeur pH de la solution à 3,00± 0,02, laisser réagir pendant une durée pour former une pâte mixte, maintenir la pâte mixte à température ambiante pendant une durée, et puis laver à l'eau et effectuer une filtration sous pression plusieurs fois pour former des précurseurs d'hydroxyphosphate ferrique à différents rapports fer-phosphore.

4. Procédé de préparation de phosphate de lithium-fer à partir d'hydroxyphosphate ferrique selon la revendication 1, dans lequel, à l'étape S4, le sécheur éclair est contrôlé à une température d'entrée d'air de 220 ± 20°C et à une température de sortie d'air de 110 ± 5°C, le frittage est effectué sous atmosphère d'air et à une température de 535-560°C pendant une durée de 4-5 h ; et à l'étape S5, la taille des particules est contrôlée à D10≥1,0 µm, D50 : 6-15 µm, et D90≤60 um, et le mélangeur est contrôlé à une fréquence de mélange de 35 ± 2 Hz pendant une durée de mélange de 1-2 h.

5. Procédé de préparation de phosphate de lithium-fer à partir d'hydroxyphosphate ferrique selon la revendication 1, dans lequel, à l'étape S5, l'hydroxyphosphate ferrique au rapport fer-phosphore élevé présente une surface spécifique élevée qui satisfait à BET = 15-20 m2/g et le rapport molaire fer-phosphore qui satisfait à Fe/P = 1,460-1,480 ; et l'hydroxyphosphate ferrique au faible rapport fer-phosphore présente une surface spécifique faible qui satisfait à BET = 5-10 m2/g et le rapport molaire fer-phosphore qui satisfait à Fe/P = 1440-1460.

6. Procédé de préparation de phosphate de lithium-fer à partir d'hydroxyphosphate ferrique selon la revendication 1, dans lequel, à l'étape S6, la source de lithium est un ou plusieurs parmi le phosphate de lithium, le carbonate de lithium, un matériau de pièce polaire d'électrode de phosphate de lithium-fer et un matériau au phosphate de lithium-fer fini à faible teneur en carbone, la source de fer est un ou plusieurs parmi le phosphates de fer et l'oxyde de fer, la source de carbone est une ou plusieurs parmi la saccharose, la glucose, l'acide citrique, l'amidon et le polyéthylène glycol ; à l'étape S7, un taille des particules de ponçage dans la pâte de ponçage est contrôlée à 0,45-0,75 µm, et lors du séchage par pulvérisation, la température d'entrée d'air est de 200 à 220 °C, la température de sortie d'air est de 80 à 110 °C, la fréquence de soufflage d'air est de 80 Hz et une taille des particules de pulvérisation dans le matériau pulvérisé est contrôlée à D50 = 20-40 µm ; et à l'étape S8, le frittage est effectué sous atmosphère d'azote à une température de frittage de 750-780°C et une vitesse de chauffage de 3°C/min pendant une durée de frittage de 8-12 h, puis un refroidissement naturel est effectué pour obtenir le matériau fritté, et pendant le processus de pulvérisation, une pression de gaz est contrôlé à 0,2-0,4 Mpa, une fréquence de fractionnement est de 80-200 Hz, et une taille des particules du matériau pulvérisé satisfait à :
D10 > 0,35 µm, D50 = 0,7-2,0 µm, D90 <10 µm, et D100 < 30 µm.

7. Procédé de préparation de phosphate de lithium-fer à partir d'hydroxyphosphate ferrique selon la revendication 1, comprenant :
étape S1 : ajouter du sulfate ferreux, un sous-produit du dioxyde de titane, à une source de phosphore et un précipitant pour une purification, de manière à obtenir une solution de sulfate ferreux après purification par filtration sous pression ;
étape S2 : ajouter une quantité appropriée d'acide phosphorique à la solution de sulfate ferreux pour réduire la valeur pH de la solution de sulfate ferreux ;
étape S3 : ajouter successivement du peroxyde d'hydrogène, de l'acide phosphorique, une solution de dihydrogénophosphate d'ammonium et de l'ammoniaque à la solution de sulfate ferreux, puis laisser réagir pendant une durée pour former une pâte mixte, chauffer et maintenir la pâte mixte à une température pendant une durée, puis laver à l'eau et effectuer une filtration sous pression plusieurs fois pour former des précurseurs d'hydroxyphosphate ferrique à différents rapports fer-phosphore ;
étape S4 : soumettre les précurseurs d'hydroxyphosphate ferrique à un séchage éclair dans un séchoir éclair, et fritter à haute température pendant une certaine durée pour obtenir des produits finis de précurseur d'hydroxyphosphate ferrique à différents rapports fer-phosphore et différentes surfaces spécifiques ;
étape S5 : pulvériser le matériau fritté à l'aide d'un broyeur mécanique, et mélanger à l'aide d'un mélangeur à ruban pour obtenir des produits finis d'hydroxyphosphate ferrique à différents rapports fer-phosphore et différentes surfaces spécifiques ;
étape S6 : mélanger l'hydroxyphosphate ferrique au rapport fer-phosphore élevé et à la surface spécifique élevée avec l'hydroxyphosphate ferrique au rapport fer-phosphore faible et à la surface spécifique faible à raison d'une certaine proportion, puis doser avec le phosphate de fer, le phosphate de lithium et le carbonate de lithium à raison d'une certaine proportion, et ajouter une certaine de quantité d'une source de carbone et d'un additif pour former un matériau mixte ;
étape S7 : soumettre le matériau mixte susmentionné à un ponçage pour obtenir une pâte poncée à taille nanométrique ; et sécher par pulvérisation la pâte poncée à taille nanométrique pour obtenir un matériau pulvérisé ;
étape S8 : mettre le matériau pulvérisé susmentionné dans un four à caissons pour fritter, afin d'obtenir un matériau fritté, et pulvériser le matériau fritté à l'aide d'un broyeur à jet pour obtenir un matériau pulvérisé ; et
étape S9 : soumettre en outre le matériau pulvérisé susmentionné à un tamisage, un mélange et un emballage et d'autres procédures similaires pour obtenir un produit fini de phosphate de lithium-fer.

8. Procédé de préparation de phosphate de lithium-fer à partir d'hydroxyphosphate ferrique selon la revendication 7, dans lequel l'étape S3 comprend :
étape S321 : ajouter du peroxyde d'hydrogène excessif à la solution de sulfate ferreux pour poursuivre l'oxydation pendant une certaine durée ;
étape S322 : ajouter une solution d'acide phosphorique à la solution de sulfate ferreux oxydé, puis dissoudre du dihydrogénophosphate d'ammonium en poudre dans l'eau pour préparer une solution de dihydrogénophosphate d'ammonium à une concentration de 30 % à une température de dissolution de 30-40 °C, et puis ajouter la solution de dihydrogénophosphate d'ammonium à la solution de sulfate ferreux oxydé ; et
étape S323 : ajouter de l'ammoniaque à la solution de sulfate ferreux, ajuster une valeur pH de la solution à 3,00 ± 0,02, laisser réagir pendant une durée pour former une pâte mixte, chauffer et maintenir la pâte mixte à une température pendant une durée, puis laver à l'eau et effectuer une filtration sous pression plusieurs fois pour former des précurseurs d'hydroxyphosphate ferrique à différents rapports fer-phosphore.

9. Procédé de préparation de phosphate de lithium-fer à partir d'hydroxyphosphate ferrique selon la revendication 1, comprenant :
étape S1 : ajouter du sulfate ferreux, un sous-produit du dioxyde de titane, à une source de phosphore et un précipitant pour une purification, de manière à obtenir une solution de sulfate ferreux après purification par filtration sous pression ;
étape S2 : ajouter une quantité appropriée d'acide phosphorique à la solution de sulfate ferreux pour réduire la valeur pH de la solution de sulfate ferreux ;
étape S3 : ajouter successivement de l'acide phosphorique, une solution de dihydrogénophosphate d'ammonium, du peroxyde d'hydrogène et de l'ammoniaque à la solution de sulfate ferreux, puis laisser réagir pendant une durée pour former une pâte mixte, chauffer et maintenir la pâte mixte à une température pendant une durée, puis laver à l'eau et effectuer une filtration sous pression plusieurs fois pour former des précurseurs d'hydroxyphosphate ferrique à différents rapports fer-phosphore ;
étape S4 : soumettre les précurseurs d'hydroxyphosphate ferrique à un séchage éclair dans un séchoir éclair, et fritter à haute température pendant une certaine durée pour obtenir des produits finis de précurseur d'hydroxyphosphate ferrique à différents rapports fer-phosphore et différentes surfaces spécifiques ;
étape S5 : pulvériser le matériau fritté à l'aide d'un broyeur mécanique, et mélanger à l'aide d'un mélangeur à ruban pour obtenir des produits finis d'hydroxyphosphate ferrique à différents rapports fer-phosphore et différentes surfaces spécifiques ;
étape S6 : mélanger l'hydroxyphosphate ferrique au rapport fer-phosphore élevé et à la surface spécifique élevée avec l'hydroxyphosphate ferrique au rapport fer-phosphore faible et à la surface spécifique faible à raison d'une certaine proportion,
puis doser avec l'oxyde de cérium, le phosphate de fer, le carbonate de lithium et le dihydrogénophosphate d'ammonium à raison d'une certaine proportion, et ajouter une certaine de quantité d'une source de carbone et d'un additif pour former un matériau mixte ;
étape S7 : soumettre le matériau mixte susmentionné à un ponçage pour obtenir une pâte poncée à taille nanométrique ; et sécher par pulvérisation la pâte poncée à taille nanométrique pour obtenir un matériau pulvérisé ;
étape S8 : mettre le matériau pulvérisé susmentionné dans un four à caissons pour fritter, afin d'obtenir un matériau fritté, et pulvériser le matériau fritté à l'aide d'un broyeur à jet pour obtenir un matériau pulvérisé ; et
étape S9 : soumettre en outre le matériau pulvérisé susmentionné à un tamisage, un mélange et un emballage et d'autres procédures similaires pour obtenir un produit fini de phosphate de lithium-fer.

10. Procédé de préparation de phosphate de lithium-fer à partir d'hydroxyphosphate ferrique selon la revendication 9, dans lequel l'étape S3 comprend :
étape S331 : ajouter une solution d'acide phosphorique à la solution de sulfate ferreux, puis dissoudre du dihydrogénophosphate d'ammonium en poudre dans l'eau pour préparer une solution de dihydrogénophosphate d'ammonium à une concentration de 30 % à une température de dissolution de 30-40 °C, et puis ajouter la solution de dihydrogénophosphate d'ammonium à la solution de sulfate ferreux ;
étape S332 : puis ajouter du peroxyde d'hydrogène excessif à la solution de sulfate ferreux pour poursuivre l'oxydation pendant une certaine durée ; et
étape S333 : puis ajouter de l'ammoniaque à la solution de sulfate ferreux, ajuster une valeur pH de la solution à 3,00 ± 0,02, laisser réagir pendant une durée pour former une pâte mixte, chauffer et maintenir la pâte mixte à une température pendant une durée, puis laver à l'eau et effectuer une filtration sous pression plusieurs fois pour former des précurseurs d'hydroxyphosphate ferrique à différents rapports fer-phosphore.

11. Procédé de préparation de phosphate de lithium-fer à partir d'hydroxyphosphate ferrique selon la revendication 1, comprenant :
étape S1 : ajouter du sulfate ferreux, un sous-produit du dioxyde de titane, à une source de phosphore et un précipitant pour une purification, de manière à obtenir une solution de sulfate ferreux après purification par filtration sous pression ;
étape S2 : ajouter une quantité appropriée d'acide phosphorique à la solution de sulfate ferreux pour réduire la valeur pH de la solution de sulfate ferreux ;
étape S3 : ajouter du peroxyde d'hydrogène, de l'acide phosphorique, une solution de dihydrogénophosphate d'ammonium et de l'ammoniaque à la solution de sulfate ferreux, puis laisser réagir pendant une durée pour former une pâte mixte, maintenir la pâte mixte à température ambiante pendant une durée, puis laver à l'eau et effectuer une filtration sous pression plusieurs fois pour former des précurseurs d'hydroxyphosphate ferrique à différents rapports fer-phosphore ;
étape S4 : soumettre les précurseurs d'hydroxyphosphate ferrique à un séchage éclair dans un séchoir éclair, et fritter à haute température pendant une certaine durée pour obtenir des produits finis de précurseur d'hydroxyphosphate ferrique à différents rapports fer-phosphore et différentes surfaces spécifiques ;
étape S5 : pulvériser le matériau fritté à l'aide d'un broyeur mécanique, et mélanger à l'aide d'un mélangeur à ruban pour obtenir des produits finis d'hydroxyphosphate ferrique à différents rapports fer-phosphore et différentes surfaces spécifiques ;
étape S6 : mélanger l'hydroxyphosphate ferrique au rapport fer-phosphore élevé avec l'hydroxyphosphate ferrique au rapport fer-phosphore faible à raison d'une certaine proportion, puis doser avec le phosphate de lithium et un matériau de pièce polaire d'électrode de phosphate de lithium-fer à raison d'une certaine proportion, et ajouter une certaine de quantité d'une source de carbone et d'un additif pour former un matériau mixte ;
étape S7 : soumettre le matériau mixte susmentionné à un ponçage pour obtenir une pâte poncée à taille nanométrique ; et sécher par pulvérisation la pâte poncée à taille nanométrique pour obtenir un matériau pulvérisé ;
étape S8 : mettre le matériau pulvérisé susmentionné dans un four à caissons pour fritter, afin d'obtenir un matériau fritté, et pulvériser le matériau fritté à l'aide d'un broyeur à jet pour obtenir un matériau pulvérisé ; et
étape S9 : soumettre en outre le matériau pulvérisé susmentionné à un tamisage, un mélange et un emballage et d'autres procédures similaires pour obtenir un produit fini de phosphate de lithium-fer.

12. Procédé de préparation de phosphate de lithium-fer à partir d'hydroxyphosphate ferrique selon la revendication 11, dans lequel l'étape S3 comprend :
étape S341 : ajouter du peroxyde d'hydrogène excessif à la solution de sulfate ferreux pour poursuivre l'oxydation pendant une certaine durée ;
étape S342 : dissoudre du dihydrogénophosphate d'ammonium en poudre dans l'eau pour préparer une solution de dihydrogénophosphate d'ammonium à une concentration de 30 % à une température de dissolution de 30-40 °C, et puis ajouter une solution d'acide phosphorique et de l'ammoniaque à la solution de dihydrogénophosphate d'ammonium et mélanger jusqu'à homogène sous agitation pour former une solution mixte de phosphate d'ammonium ; et
étape S343 : ajouter la solution mixte de phosphate d'ammonium à la solution de sulfate ferreux oxydé, ajuster une valeur pH de la solution à 3,00± 0,02, laisser réagir pendant une durée pour former une pâte mixte, maintenir la pâte mixte à température ambiante pendant une durée, et puis laver à l'eau et effectuer une filtration sous pression plusieurs fois pour former des précurseurs d'hydroxyphosphate ferrique à différents rapports fer-phosphore.

13. Procédé de préparation de phosphate de lithium-fer à partir d'hydroxyphosphate ferrique selon la revendication 11, dans lequel à l'étape S6, un procédé de préparation du matériau de pièce polaire d'électrode de phosphate de lithium-fer comprend : pulvériser une pièce polaire d'électrode positive de phosphate de lithium-fer usée et tamiser pour séparer un matériau de feuille et une matière première pour le matériau de pièce polaire d'électrode de phosphate de lithium-fer ; fritter la matière première du matériau de pièce polaire d'électrode de phosphate de lithium-fer sous atmosphère inerte à une température de frittage de 400 à 500 °C pendant une durée de frittage de 1-4 h, puis pulvériser à une taille des particules de 1- 5 µm pour obtenir le matériau de pièce polaire d'électrode de phosphate de lithium-fer.

14. Procédé de préparation de phosphate de lithium-fer à partir d'hydroxyphosphate ferrique selon la revendication 1, comprenant :
étape S1 : ajouter du sulfate ferreux, un sous-produit du dioxyde de titane, à une source de phosphore et un précipitant pour une purification, de manière à obtenir une solution de sulfate ferreux après purification par filtration sous pression ;
étape S2 : ajouter une quantité appropriée d'acide phosphorique à la solution de sulfate ferreux pour réduire la valeur pH de la solution de sulfate ferreux ;
étape S3 : ajouter du peroxyde d'hydrogène, de l'acide phosphorique, une solution de dihydrogénophosphate d'ammonium et de l'ammoniaque à la solution de sulfate ferreux, puis laisser réagir pendant une durée pour former une pâte mixte, maintenir la pâte mixte à température ambiante pendant une durée, puis laver à l'eau et effectuer une filtration sous pression plusieurs fois pour former des précurseurs d'hydroxyphosphate ferrique à différents rapports fer-phosphore ;
étape S4 : soumettre les précurseurs d'hydroxyphosphate ferrique à un séchage éclair dans un séchoir éclair, et fritter à haute température pendant une certaine durée pour obtenir des produits finis de précurseur d'hydroxyphosphate ferrique à différents rapports fer-phosphore et différentes surfaces spécifiques ;
étape S5 : pulvériser le matériau fritté à l'aide d'un broyeur mécanique, et mélanger à l'aide d'un mélangeur à ruban pour obtenir des produits finis d'hydroxyphosphate ferrique à différents rapports fer-phosphore et différentes surfaces spécifiques ;
étape S6 : mélanger l'hydroxyphosphate ferrique à un rapport fer-phosphore élevé avec l'hydroxyphosphate ferrique à un rapport fer-phosphore faible à raison d'une certaine proportion, puis doser avec le phosphate de lithium et un matériau au phosphate de lithium-fer fini à faible teneur en carbone à raison d'une certaine proportion, et ajouter une certaine de quantité d'une source de carbone et d'un additif pour former un matériau mixte ;
étape S7 : soumettre le matériau mixte susmentionné à un ponçage pour obtenir une pâte poncée à taille nanométrique ; et sécher par pulvérisation la pâte poncée à taille nanométrique pour obtenir un matériau pulvérisé ;
étape S8 : mettre le matériau pulvérisé susmentionné dans un four à caissons pour fritter, afin d'obtenir un matériau fritté, et pulvériser le matériau fritté à l'aide d'un broyeur à jet pour obtenir un matériau pulvérisé ; et
étape S9 : soumettre en outre le matériau pulvérisé susmentionné à un tamisage, un mélange et un emballage et d'autres procédures similaires pour obtenir un produit fini de phosphate de lithium-fer.

15. Procédé de préparation de phosphate de lithium-fer à partir d'hydroxyphosphate ferrique selon la revendication 14, dans lequel l'étape S3 comprend :
étape S351 : ajouter du peroxyde d'hydrogène excessif à la solution de sulfate ferreux pour poursuivre l'oxydation pendant une certaine durée ;
étape S352 : dissoudre du dihydrogénophosphate d'ammonium en poudre dans l'eau pour préparer une solution de dihydrogénophosphate d'ammonium à une concentration de 30 % à une température de dissolution de 30-40 °C, et puis ajouter une solution d'acide phosphorique et de l'ammoniaque à la solution de dihydrogénophosphate d'ammonium et mélanger jusqu'à homogène sous agitation pour former une solution mixte de phosphate d'ammonium ; et
étape S353 : ajouter la solution mixte de phosphate d'ammonium à la solution de sulfate ferreux oxydé, ajuster une valeur pH de la solution à 3,00± 0,02, laisser réagir pendant une durée pour former une pâte mixte, maintenir la pâte mixte à température ambiante pendant une durée, et puis laver à l'eau et effectuer une filtration sous pression plusieurs fois pour former des précurseurs d'hydroxyphosphate ferrique à différents rapports fer-phosphore.

16. Procédé de préparation de phosphate de lithium-fer à partir d'hydroxyphosphate ferrique selon la revendication 14, dans lequel l'étape S6 comprend :
étape S61 : mélanger de l'oxyde de fer avec une source de phosphore, une source de lithium, une source de carbone primaire et un dopant, puis ajouter de l'eau et agiter pour obtenir une pâte ;
étape S62 : soumettre successivement la pâte à un broyage humide, un séchage par atomisation, un frittage sous atmosphère d'azote et une pulvérisation par jet pour obtenir un matériau pulvérisé au phosphate de lithium-fer fini à faible teneur en carbone ; et
étape S63 : mélanger l'hydroxyphosphate ferrique à un rapport fer-phosphore élevé avec l'hydroxyphosphate ferrique à un rapport fer-phosphore faible à raison d'une certaine proportion, puis doser avec le phosphate de lithium et un matériau au phosphate de lithium-fer fini à faible teneur en carbone à raison d'une certaine proportion, et ajouter une certaine de quantité d'une source de carbone secondaire et d'un additif pour former un matériau mixte.

17. Procédé de préparation de phosphate de lithium-fer à partir d'hydroxyphosphate ferrique selon la revendication 14, dans lequel à l'étape S61, la source de phosphore est une ou plusieurs parmi l'acide phosphorique, le dihydrogénophosphate d'ammonium et l'hydrogénophosphate diammonique, la source de lithium est le carbonate de lithium et/ou l'hydroxyde de lithium, la source de carbone primaire est une ou plusieurs parmi la saccharose, la glucose, l'acide citrique, l'amidon et le polyéthylène glycol, un rapport molaire du fer dans l'oxyde de fer au phosphore dans la source de phosphore est de n(Fe) :n(P) = (0,96-1) :1, un rapport molaire du lithium dans la source de lithium au fer dans l'oxyde de fer est de n(Li) : n(Fe) =(1,02-1,05) :1, le dopant est un oxyde métallique, et le métal est au moins l'un des métaux Ti, V, Nb et Mg ; et à l'étape S63, la teneur en carbone du matériau au phosphate de lithium-fer fini à faible teneur en carbone est comprise entre 0,2 %-0,5 %, dans le matériau mixte à raison du rapport molaire de Li :Fe :P =[l,03-l,04] : 1 : [l,03-1,04], la source secondaire de carbone est une ou plusieurs parmi la saccharose, la glucose, l'acide citrique, l'amidon et le polyéthylène glycol, et la quantité ajoutée de la source de carbone primaire et de la source de carbone secondaire est basé sur le fait que la teneur en carbone dans le produit final est comprise entre 1,2 %-1,6 %, et l'additif est un ou plusieurs choisi parmi le dioxyde de titane, le métavanadate d'ammonium et le pentoxyde de niobium dont une quantité de dopage est contrôlée à une plage de 300-3 000 ppm.
